# EUROPÄISCHE PATENTSCHRIFT

(11) **EP 1 825 913 B1**
(45) Veröffentlichungstag und Bekanntmachung des Hinweises auf die Patenterteilung: **17.08.2016**
(21) Anmeldenummer: 07002964.0
(22) Anmeldetag: 13.02.2007
(51) Int. Cl.: B01J 31/22, C08L 15/00

(54) **Neue Katalysatorsysteme und deren Verwendung für Metathesereaktionen**
New catalyst systems and their application for metathesis reactions
Nouveau système de catalyseur et son utilisation pour des réactions de métathèse

(30) Priorität: 22.02.2006 DE 102006008520
(43) Veröffentlichungstag der Anmeldung: 29.08.2007
(73) Patentinhaber: LANXESS Deutschland GmbH, 50569 Köln (DE)
(72) Erfinder: Obrecht, Werner, Dr. Prof. Dr., 47447 Moers (DE); Müller, Julia Maria, 89134 Blaustein (DE); Nuyken, Oskar, Prof. Dr. -Ing., 81927 München (DE)

(56) Entgegenhaltungen:
- WO-A-02/083742
- ROBERTS, KENNY S. ET AL: "Comparison of fertilin.beta.-peptide-substituted polymers and liposomes as inhibitors of in vitro fertilization" CHEMBIOCHEM , 4(11), 1229-1231 CODEN: CBCHFX; ISSN: 1439-4227, 2003, XP002433024
- ROBERTS, KENNY S. ET AL: "Increased Polymer Length of Oligopeptide-Substituted Polynorbornenes with LiCl" JOURNAL OF ORGANIC CHEMISTRY , 68(5), 2020-2023 CODEN: JOCEAH; ISSN: 0022-3263, 2003, XP002433025
- DIAS, ERIC L. ET AL: "Well-Defined Ruthenium Olefin Metathesis Catalysts: Mechanism and Activity" JOURNAL OF THE AMERICAN CHEMICAL SOCIETY , 119(17), 3887-3897 CODEN: JACSAT; ISSN: 0002-7863, 1997, XP002433026

## Beschreibung

Die vorliegende Erfindung betrifft ein Verfahren für die Metathese von Nitrilkautschuk.

Metathese-Reaktionen werden umfangreich im Rahmen chemischer Synthesen eingesetzt, z.B. in Form von Ringschlussmetathesen (RCM), Kreuzmetathesen (CM), oder Ringöffnungsmetathesen (ROMP). Anwendung finden Metathese-Reaktionen beispielsweise zur Olefin-Synthese, zur Depolymerisation ungesättigter Polymere und zur Synthese von telechelen Polymeren.

Metathesekatalysatoren sind unter anderem aus der WO-A-96/04289 und WO-A-97/06185 bekannt. Sie besitzen die folgende prinzipielle Struktur: 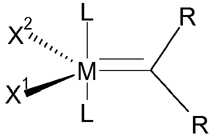 worin M Osmium oder Ruthenium bedeutet, R für gleiche oder verschiedene organische Reste mit großer struktureller Variationsbreite steht, X¹ und X² anionische Liganden bedeuten und L neutrale Elektronen-Donoren darstellt. Unter dem gängigen Begriff "anionische Liganden" werden in der Literatur für derartige Metathese-Katalysatoren immer solche Liganden verstanden, die, wenn man sie als vom Metall-Zentrum entfernt betrachtet, bei geschlossener Elektronenschale negativ geladen sind.

Auch für den Abbau von Nitrilkautschuken gewinnen Metathese-Reaktionen in jüngerer Zeit zunehmende Bedeutung.

Unter Nitrilkautschuk, abgekürzt auch als "NBR" bezeichnet, werden Kautschuke verstanden, bei denen es sich um Co- oder Terpolymere aus mindestens einem α,β-ungesättigten Nitril, mindestens einem konjugierten Dien und gegebenenfalls einem oder mehreren weiteren copolymerisierbaren Monomeren handelt.

Hydrierter Nitrilkautschuk, abgekürzt auch als "HNBR" bezeichnet, wird durch Hydrierung von Nitrilkautschuk hergestellt. Entsprechend sind in HNBR die C=C Doppelbindungen der einpolymerisierten Dieneinheiten ganz oder teilweise hydriert. Der Hydriergrad der einpolymerisierten Dieneinheiten liegt üblicherweise in einem Bereich von 50 bis 100%.

Hydrierter Nitrilkautschuk ist ein Spezialkautschuk, der über eine sehr gute Hitzebeständigkeit, eine hervorragende Beständigkeit gegen Ozon und Chemikalien sowie eine ausgezeichnete Ölbeständigkeit verfügt.

Die vorgenannten physikalischen und chemischen Eigenschaften des HNBR gehen einher mit sehr guten mechanischen Eigenschaften, insbesondere einer hohen Abriebfestigkeit. Aus diesem Grund hat HNBR breite Verwendung in den verschiedensten Anwendungsgebieten gefunden. HNBR wird beispielsweise eingesetzt für Dichtungen, Schläuche, Riemen und Dämpfungselemente im Automobilsektor, ferner für Statoren, Bohrlochdichtungen und Ventildichtungen im Bereich der Ölförderung sowie auch für zahlreiche Teile der Luftfahrtindustrie, der Elektroindustrie, des Maschinen- und des Schiffsbaus.

Am Markt kommerziell erhältliche HNBR Typen weisen üblicherweise eine Mooney-Viskosität (ML 1+4 bei 100°C) im Bereich von 55 bis 105 auf, was einem Gewichtsmittel des Molekulargewichts M_{w} (Bestimmungsmethode: Gelpermeationschromatographie (GPC) gegen Polystyroläquivalente) im Bereich von ca. 200.000 bis 500.000 entspricht. Die dabei zu messenden Polydispersitätsindizes PDI (PDI = M_{w} /Mₙ, wobei M_{w} das Gewichtsmittel und Mₙ das Zahlenmittel des Molekulargewichts darstellt), die eine Aussage über die Breite der Molekulargewichtsverteilung liefern, besitzen häufig einen Wert von 3 oder darüber. Der Restdoppelbindungsgehalt liegt üblicherweise in einem Bereich von 1 bis 18 % (bestimmt durch IR-Spektroskopie).

Der Verarbeitbarkeit von HNBR sind durch die relativ hohe Mooney-Viskosität starke Beschränkungen auferlegt. Für viele Anwendungen wäre ein HNBR Typ wünschenswert, der ein niedrigeres Molekulargewicht und damit eine niedrigere Mooney-Viskosität besitzt. Dies würde die Verarbeitbarkeit entscheidend verbessern.

In der Vergangenheit wurden zahlreiche Versuche unternommen, die Kettenlänge von HNBR durch Abbau zu verkürzen. Beispielsweise ist ein Molekulargewichtsabbau durch thermomechanische Behandlung (Mastikation) z. B. auf einem Walzwerk oder auch in einem Schneckenaggregat (EP-A-0 419 952) möglich. Dieser thermomechanische Abbau hat jedoch den Nachteil, dass durch partielle Oxidation funktionelle Gruppen wie Hydroxyl-, Keto-, Carbonsäure- und Ester-Gruppen in das Molekül eingebaut werden und zusätzlich die Mikrostrukur des Polymers substanziell geändert wird.

Die Herstellung von HNBR mit niedrigen Molmassen, entsprechend einer Mooney-Viskosität (ML 1+4 bei 100°C) in einem Bereich kleiner 55 bzw. einem Zahlenmittel des Molekulargewichts von ca. Mₙ < 200.000 g /mol, war mittels etablierter Herstellungsverfahren lange Zeit nicht möglich, da einerseits bei der Hydrierung von NBR ein sprunghafter Anstieg der Mooney-Viskosität erfolgt und andererseits die Molmasse des für die Hydrierung einzusetzenden NBR-Feedstocks nicht beliebig reduziert werden kann, da sonst die Aufarbeitung in den zur Verfügung stehenden großtechnischen Anlagen wegen zu hoher Klebrigkeit nicht mehr möglich ist. Die niedrigste Mooney-Viskosität eines NBR-Feedstocks, die ohne Schwierigkeiten in einer etablierten großtechnischen Anlage aufarbeitbar ist, liegt bei ca. 30 Mooney-Einheiten (ML 1+4 bei 100°C). Die Mooney-Viskosität des hydrierten Nitrilkautschuks, der mit einem solchen NBR-Feedstock erhalten wird, liegt in der Größenordnung von 55 Mooney-Einheiten (ML 1+4 bei 100°C). Die Bestimmung der Mooney-Viskosität erfolgt dabei gemäß ASTM Norm D 1646.

Im neueren Stand der Technik wird dieses Problem gelöst, indem man das Molekulargewicht des Nitrilkautschuks vor der Hydrierung durch Abbau auf eine Mooney-Viskosität (ML 1+4 bei 100°C) von weniger als 30 Mooney-Einheiten bzw. ein Zahlenmittel des Molekulargewichts von Mₙ < 70.000 g / mol reduziert. Den Abbau des Molekulargewichts erreicht man durch Metathese, bei der man üblicherweise niedermolekulare 1-Olefine zusetzt. Beschrieben ist die Metathese von Nitrilkautschuk beispielsweise in WO-A-02/100905, WO-A-02/100941 und WO-A-03/002613. Die Metathesereaktion wird zweckmäßigerweise im gleichen Lösungsmittel wie die Hydrierreaktion (in situ) durchgeführt, damit man den abgebauten Nitrilkautschuk nach Beendigung der Abbaureaktion nicht aus dem Lösungsmittel isolieren muss, bevor man ihn der nachfolgenden Hydrierung unterwirft. Für die Katalyse der Metathese-Abbaureaktion verwendet man Metathesekatalysatoren, die gegenüber polaren Gruppen, insbesondere gegenüber Nitrilgruppen, tolerant sind.

In der WO-A-02/100905 und der WO-A-02/100941 wird ein Verfahren beschrieben, welches den Abbau von Nitrilkautschuk-Ausgangspolymeren durch Olefinmetathese und eine anschließende Hydrierung zu HNBR mit niedriger Mooney-Viskosität umfasst. Hierbei wird ein Nitrilkautschuk in einem ersten Schritt in Gegenwart eines Co-Olefins und spezieller Komplexkatalysatoren auf Osmium-, Ruthenium-, Molybdän- oder Wolfram-Basis umgesetzt und in einem zweiten Schritt hydriert. Erhältlich sind auf diesem Weg hydrierte Nitrilkautschuke mit einem Gewichtsmittel des Molekulargewichts (M_{w}) im Bereich von 30.000 bis 250.000, einer Mooney-Viskosität (ML 1+4 bei 100 °C) im Bereich von 3 bis 50 und einem Polydispersitätsindex PDI von kleiner 2.5.

Zur Metathese von Nitrilkautschuk kann z.B. der nachfolgend dargestellte Katalysator Bis(tricyclohexylphosphin) benzyliden-rutheniumdichlorid eingesetzt werden.

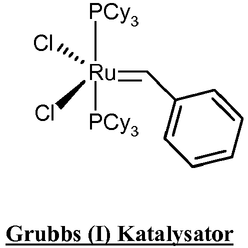

Nach Metathese und Hydrierung weisen die Nitrilkautschuke ein niedrigeres Molekulargewicht sowie eine engere Molekulargewichtsverteilung auf als die nach dem Stand der Technik bisher herstellbaren hydrierten Nitrilkautschuke.

Die für die Durchführung der Metathese angewandten Mengen an Grubbs-(I)-Katalysator sind jedoch groß. Sie betragen in den Versuchen der WO-A-03/002613 beispielsweise 307 ppm und 61 ppm Ru bezogen auf den eingesetzten Nitrilkautschuk. Die notwendigen Reaktionszeiten sind darüber hinaus lang und die Molekulargewichte nach dem Abbau immer noch relativ hoch (siehe Beispiel 3 der WO-A-03/002613 mit M_{w} = 180.000 g/mol und Mₙ = 71.000g/mol).

US 2004/0127647 A1 beschreibt Blends auf der Basis niedermolekularer HNBR-Kautschuke mit bi- bzw. multimodaler Molekulargewichtsverteilung sowie Vulkanisate dieser Kautschuke. Für die Durchführung der Metathese werden nach den Beispielen 0,5 phr an Grubbs-I-Katalysator verwendet. Dies entspricht der hohen Menge von 614 ppm Ruthenium bezogen auf den eingesetzten Nitrilkautschuk.

Aus WO-A-00/71554 ist ferner eine Gruppe von Katalysatoren bekannt, die in der Fachwelt als "Grubbs (II) Katalysatoren" bezeichnet werden.

Verwendet man einen solchen "Grubbs(II) Katalysator" wie z.B. den nachfolgend dargestellten Katalysator 1,3-Bis (2,4,6-trimethylphenyl)-2-imidazolidenyliden) (tricyclohexylphosphin)-ruthenium(phenyl-methylen)dichlorid für die NBR-Metathese (US-A-2004/0132891), so gelingt diese auch ohne Verwendung eines Co-Olefins.

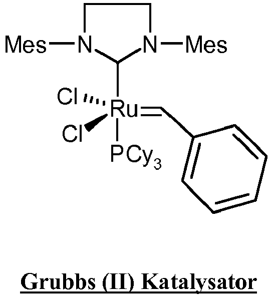

Nach der anschließenden Hydrierung, die bevorzugt in-situ durchgeführt wird, weist der hydrierte Nitrilkautschuk niedrigere Molekulargewichte und eine engere Molekulargewichtsverteilung (PDI) auf als bei Verwendung von Katalysatoren des Grubbs-(I)-Typs. Bezüglich des Molekulargewichts und der Molekulargewichtsverteilung verläuft somit der Metatheseabbau mit Katalysatoren des Typs Grubbs-II effizienter als mit Katalysatoren des Typs Grubbs-I. Allerdings sind die für diesen effizienten Metatheseabbau notwendigen Ruthenium-Mengen immer noch relativ hoch. Auch werden für die Durchführung der Metathese mit dem Grubbs-II-Katalysator immer noch lange Reaktionszeiten benötigt.

Allen zuvor genannten Verfahren zum Metatheseabbau von Nitrilkautschuk ist gemeinsam, dass relativ große Katalysatormengen eingesetzt werden müssen und lange Reaktionszeiten benötigt werden, um die gewünschten niedermolekularen Nitrilkautschuke mittels Metathese herzustellen.

Auch bei den anderen Typen der Metathese-Reaktionen kommt der Aktivität der eingesetzten Katalysatoren entscheidende Bedeutung zu.

In J.Am.Chem. Soc. 1997, 119, 3887-3897 wird beschrieben, dass bei der nachfolgend dargestellten Ringschlussmetathese von Diethyldiallylmalonat 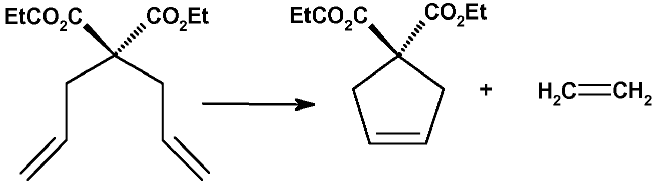 die Aktivität der Katalysatoren des Grubbs I Typs durch Zusätze von CuCl und CuCl₂ gesteigert werden kann. Erklärt wird diese Aktivitätssteigerung durch eine Verschiebung des Dissoziationsgleichgewichts, indem ein abdissoziierender Phosphanligand durch Kupferionen unter Bildung von Kupfer-Phosphankomplexen abgefangen wird.

Diese Aktivitätssteigerung durch Kupfer-Salze in der genannten Ringschlussmetathese lässt sich jedoch nicht beliebig auf andere Arten von Metathese-Reaktionen übertragen. Eigene Untersuchungen ergaben, dass unerwarteterweise der Zusatz von Kupfer-Salzen für den Metathese-Abbau von Nitrilkautschuken zwar zu einer anfänglichen Beschleunigung der Metathese-Reaktion führt, dann aber eine signifikante Verschlechterung der Metathese-Effizienz zu beobachten ist: Die letzendlich erreichbaren Molekulargewichte der abgebauten Nitrilkautschuke sind substanziell höher, als wenn die Metathese-Reaktion in Gegenwart des gleichen Katalysators aber in Abwesenheit der Kupfer-Salze durchgeführt wird.

Es bestand daher die Aufgabe, universell einsetzbare Katalysator-Systeme zu finden, die bei Anwendung in den verschiedenen Typen von Metathese-Reaktionen jeweils eine erhöhte Aktivität aufweisen, um dadurch die notwendigen Katalysatormengen, insbesondere die enthaltenen Edelmetallmengen, zu reduzieren. Vor allem für den Metatheseabbau von Nitrilkautschuk sollten Möglichkeiten gefunden werden, die eine Aktivitätssteigerung des eingesetzten Katalysators ohne Vergelung des Nitrilkautschuks ermöglichen.

Überraschenderweise wurde gefunden, dass die Aktivität von Metathese-Katalysatoren gesteigert werden kann, wenn man diese in Kombination mit Salzen ausgenommen Kupfer-Salzen einsetzt.

**Gegenstand der Erfindung** ist somit ein Verfahren zur Metathese von Nitrilkautschuk unter Verwendung eines Katalysator-Systems umfassend einen Metathese-Katalysator und ein oder mehrere Salze der allgemeinen Formel (I)

**K**ⁿ⁺ **A**^{z-} (I)

worin
- K: Lithium, Natrium, Kalium, Rubidium, Cäsium, Francium, Beryllium, Magnesium, Calcium, Strontium, Barium, Aluminium, Gallium, Indium, Thallium, Germanium, Zinn, Blei, Arsen, Antimon, Bismut, Scandium, Yttrium, Titan, Zirkonium, Hafnium, Vanadin, Niob, Tantal, Chrom, Molybdän, Wolfram, Mangan, Technetium, Rhenium, Eisen, Ruthenium, Osmium, Cobalt, Rhodium, Iridium, Nickel, Palladium, Platin, Silber, Gold, Zink, Cadmium, Quecksilber, sowie alle Elemente aus den Gruppen der Seltenen Erden insbesondere Cer, Praseodym und Neodym sowie die Elemente der Actiniden oder Tetralkyl-Ammonium-, Tetraaryl-Ammonium-, Hydroxyl-ammonium-, Tetraalkyl-Phosphonium-, Tetraaryl-Phosphonium-, Sulfonium-, Anilinium-, Pyridinium-, Imidazolonium-, Guanidinium- und Hydrazinium-Kation sowie kationisches Ethylendiamin-Derivat und
- A: ein Anion, aus der Gruppe der Halogenide, der Pseudohalogenide, der komplexen Anionen, der Anionen organischer Säuren, der aliphatischen oder aromatischen Sulfonate, der aliphatischen oder aromatischen Sulfate, der Phosphonate, der Phosphate, der Thiophosphate und der Xanthogenate darstellt,
wobei
- n: 1,2 oder 3 ist und
- z: 1, 2 oder 3 ist
wobei
der Metathese-Katalysator ausgewählt ist aus der Gruppe bestehend aus
(i) Verbindungen der allgemeinen Formel **(A)** 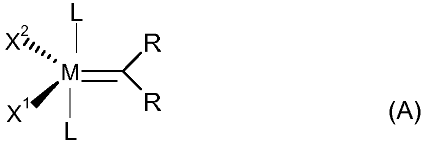 worin
   - M: Osmium oder Ruthenium bedeutet,
   - R: gleich oder verschieden sind und einen Alkyl-, bevorzugt C₁-C₃₀-Alkyl-, Cycloalkyl-, bevorzugt C₃-C₂₀-Cycloalkyl-, Alkenyl-, bevorzugt C₂C₂₀-Alkenyl-, Alkinyl-, bevorzugt C₂C₂₀-Alkinyl-, Aryl-, bevorzugt C₆-C₂₄-Aryl-, Carboxylat-, bevorzugt C₁-C₂₀-Carboxylat-, Alkoxy-, bevorzugt C₁C₂₀-Alkoxy-, Alkenyloxy-, bevorzugt C₂-C2₀-Alkenyloxy-, Alkinyloxy-, bevorzugt C₂C₂₀-Alkinyloxy-, Aryloxy-, bevorzugt C₆-C₂₄-Aryloxy, Alkoxycarbonyl-, bevorzugt C₂-C₂₀-Alkoxycarbonyl-, Alkylamino-, bevorzugt C₁-C₃₀-Alkylamino, Alkylthio-, bevorzugt C₁-C₀-Alkylthio, Arylthio-, bevorzugt C₆-C₂₄-Arylthio, Alkylsulfonyl-, bevorzugt C₁C₂₀-Alkylsulfonyl, oder Alkylsulfinyl, bevorzugt C₁-C₂₀-Alkylsulfinyl-Rest darstellen, die alle jeweils optional durch ein oder mehrere Alkyl-, Halogen-, Alkoxy-, Aryl- oder Heteroaryl-Reste substituiert sein können,
   - X¹ und X²: gleich oder verschieden sind und zwei Liganden, bevorzugt anionische Liganden, darstellen, und

   - L: gleiche oder verschiedene Liganden, bevorzugt neutrale Elektronen-Donoren darstellen,
(ii) Verbindungen der allgemeinen Formel **(B)** 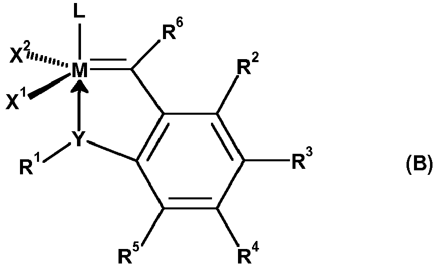 worin
   - M: Ruthenium oder Osmium bedeutet,
   - Y: Sauerstoff (O), Schwefel (S), einen Rest N-R¹ oder einen Rest P-R¹ bedeutet, wobei R¹ die nachfolgend genannten Bedeutungen besitzt,
   - X¹ und X²: gleiche oder verschiedene Liganden sind,
   - R¹: einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest darstellt, die alle jeweils optional durch ein oder mehrere Alkyl-, Halogen-, Alkoxy-, Aryl- oder Heteroaryl-Reste substituiert sein können,
   - R², R³, R⁴ und R⁵: gleich oder verschieden sind und Wasserstoff, organische oder anorganische Reste darstellen,
   - R⁶: Wasserstoff, einen Alkyl-, Alkenyl-, Alkinyl- oder einen Aryl-Rest bedeutet und
   - L: ein Ligand ist, der die gleichen Bedeutungen besitzt wie der Ligand L in Formel (A),
(iii) Verbindungen der allgemeinen Formel **(B1)** 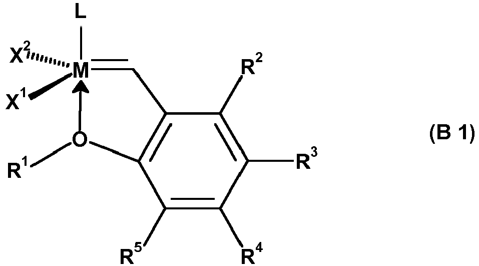 worin
   M, L, X¹, X², R¹, R², R³, R⁴ und R⁵ die für die allgemeine Formel (B) genannten Bedeutungen besitzen,
(iv) Verbindungen der allgemeinen Formel **(B2)** 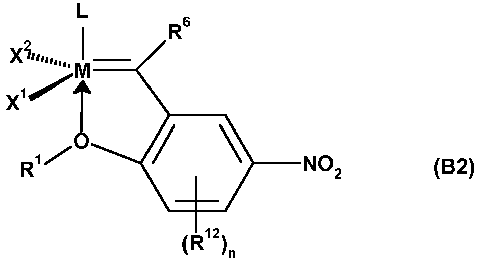 worin
   - M, L, X¹, X², R¹ und R⁶: die für die Formel (B) genannten Bedeutungen haben,
   - R¹²: gleich oder verschieden sind und die für die Reste R², R³, R⁴ und R⁵ in der Formel (B) genannten Bedeutungen, ausgenommen Wasserstoff, besitzen und
   - n: gleich 0, 1, 2 oder 3 ist,
(v) **Katalysatoren der allgemeinen Formel (B3)** einsetzbar, 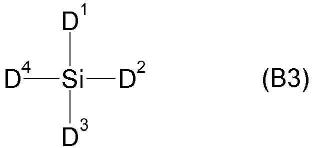 worin D¹, D², D³ und D⁴ jeweils eine Struktur der nachfolgend dargestellten allgemeinen Formel (XVI) aufweisen, die über die Methylengruppe an das Silicium der Formel (B3) angebunden ist und 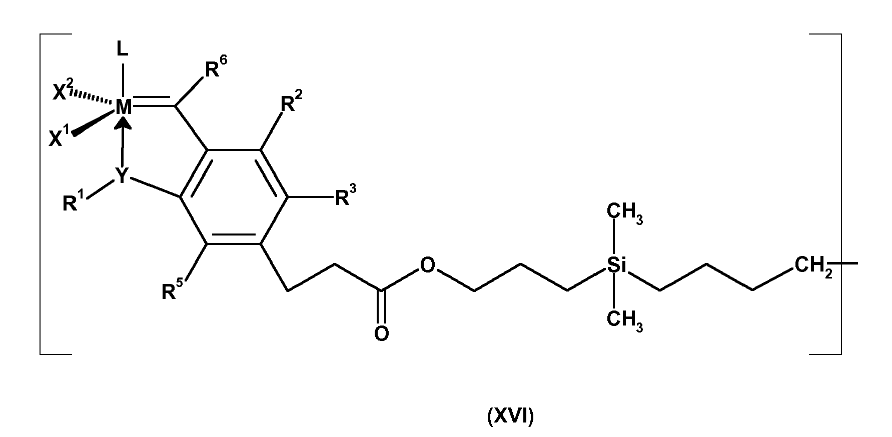 worin M, L, X¹, X², R¹, R², R³, R⁵ und R⁶ die für die allgemeine Formel (B) genannten Bedeutungen besitzen,
(vi) Verbindungen der allgemeinen Formel **(C)** eingesetzt werden. 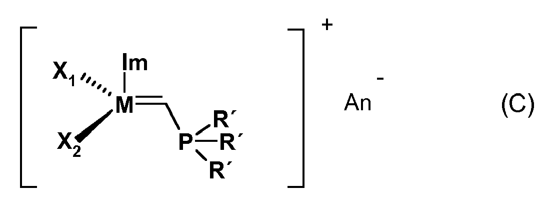 wobei
   - M: Ruthenium oder Osmium bedeutet,
   - X¹ und X²: gleich oder verschieden sein können und anionische Liganden darstellen,
   - R*'*: gleich oder verschieden sind und organische Reste darstellen,
   - Im: einen gegebenenfalls substituierten Imidazolidinrest darstellt und
   - An: ein Anion darstellt,
(vii) Verbindungen der allgemeinen Formel **(D)** geeignet. 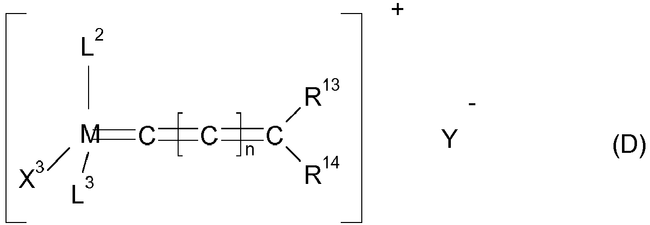 worin
   - M: Ruthenium oder Osmium bedeutet,
   - R¹³ und R¹⁴: unabhängig voneinander Wasserstoff, C₁-C₂₀-Alkyl, C₂-C₂₀-Alkenyl, C₂-C₂₀ Alkinyl, C₆-C₂₄-Aryl, C₁-C₂₀-Carboxylat, C₁-C₂₀-Alkoxy, C₂-C₂₀Alkenyloxy, C₂-C₂₀-Alkinyloxy, C₆-C₂₄-Aryloxy, C₂-C₂₀-Alkoxycarbonyl, C₁-C₂₀-Alkylthio, C₁-C₂₀-Alkylsulfonyl oder C₁-C₂₀ Alkylsulfinyl bedeuten,
   - X³: ein anionischer Ligand ist,
   - L²: ein neutraler Π-gebundenerLigand ist, unabhängig davon, ob mono- oder polycyclisch,
   - L³: ist ein Ligand aus der Gruppe der Phosphine, sulfonierten Phosphine, fluorierten Phosphine, funktionalisierten Phosphine mit bis zu drei Aminoalkyl-, Ammoniumalkyl-, Alkoxyalkyl-, Alkoxycarbonylalkyl-, Hydrocarbonylalkyl-, Hydroxyalkyl- oder Ketoalkyl-Gruppen, Phosphite, Phosphinite, Phosphonite, Phosphinamine, Arsine, Stibine, Ether, Amine, Amide, Imine, Sulfoxide, Thioether und Pyridine,
   - Y⁻: ein nicht-koordinierendes Anion ist und
   - n: 0, 1, 2, 3, 4 oder 5 ist,
(viii) Verbindungen der allgemeinen Formel **(E)** 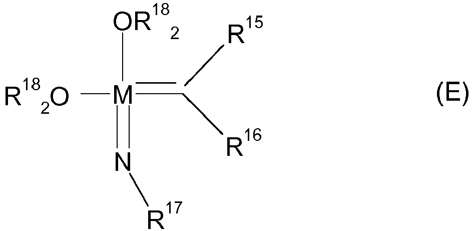 worin
   - M²: Molybdän oder Wolfram bedeutet,
   - R¹⁵ und R¹⁶: gleich oder verschieden sind und Wasserstoff, C₁-C₂₀-Alkyl, C₂-C₂₀-Alkenyl, C₂-C₂₀-Alkinyl, C₆-C₂₄₋Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylthio, C₁-C₂₀ - Alkylsulfonyl oder C₁-C₂₀ Alkylsulfinyl bedeuten,
   - R¹⁷ and R¹⁸: gleich oder verschieden sind und einen substituierten oder einen halogensubstituierten C₁-C₂₀-Alkyl, C₆-C₂₄-Aryl, C₆-C₃₀-Aralkyl-Rest oder Silikonenthaltende Analoga davon darstellen,
(ix) Verbindungen der Formel **(F).** 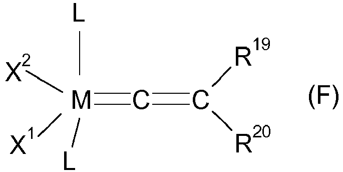 worin
   - M: Ruthenium oder Osmium bedeutet,
   - X¹ und X²: gleich oder verschieden sind und anionische Liganden darstellen, die alle Bedeutungen von X¹ und X² in der allgemeinen Formeln (A) und (B) annehmen können,
   - L: gleiche oder verschiedene Liganden darstellt, die alle allgemeinen und bevorzugten Bedeutungen von L in den allgemeinen Formeln (A) und (B) annehmen können,
   - R¹⁹ and R²⁰: gleich oder verschieden sind und Wasserstoff oder substituiertes oder unsubstituiertes Alkyl bedeuten.

Im Rahmen dieser Anmeldung und Erfindung können alle zuvor genannten und im Folgenden genannten, allgemeinen oder in Vorzugsbereichen genannten Definitionen von Resten, Parametern oder Erläuterungen untereinander, also auch zwischen den jeweiligen Bereichen und Vorzugsbereichen in beliebiger Weise kombiniert werden.

Der im Rahmen dieser Anmeldung im Zusammenhang mit dem Metathese-Katalysator oder dem Salz der allgemeinen Formel (I) verwendete Begriff "substituiert" bedeutet, dass ein Wasserstoff-Atom an einem angegebenen Rest oder Atom durch eine der jeweils angegebenen Gruppen ersetzt ist, mit der Maßgabe, dass die Wertigkeit des angegebenen Atoms nicht überschritten wird und die Substitution zu einer stabilen Verbindung führt.

Die Alkyl-Reste in allen vorgenannten komplexen Kationen können gleich oder verschieden sein und stehen üblicherweise jeweils für einen geradkettigen oder verzweigten C₁-C₃₀-Alkylrest, bevorzugt C₁-C₂₀-Alkylrcst, besonders bevorzugt C₁-C₁₈-Alkylrest. Diese Alkyl-Reste können dabei auch durch Aryl-Reste substituiert sein. C₁-C₁₈-Alkyl umfasst beispielsweise Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, n-Heptyl, n-Octyl, n-Nonyl, n-Decyl, n-Undexyl, n-Dodecyl, n-Tridecyl, n-Tetradecyl, n-Hexadecyl, n-Octadecyl sowie Benzyl.

Die Aryl-Reste in allen vorgenannten komplexen Kationen können ebenfalls gleich oder verschieden sein und stehen üblicherweise für einen C₆-C₂₄-Arylrest, bevorzugt C₆-C₁₄-Arylrest, besonders bevorzugt C₆-C₁₀-Arylrest. Beispiele für C₆-C₂₄-Aryl sind Phenyl, o-, p-, m-Tolyl, Naphthyl, Phenanthrenyl, Anthracenyl oder Fluorenyl.

Die Sulfonium-Kationen des Typs [R₃S]⁺ weisen drei gleiche oder verschiedene Reste auf, die aliphatischen oder aromatischen Charakter haben können. Bei diesen Resten kann es sich um Alkyl-oder Aryl-Reste mit den genannten allgemeinen, bevorzugten und besonders bevorzugten Bedeutungen handeln.

Besonders bevorzugte komplexe Kationen sind Benzyldodecyldimethylammonium-, Didecyldimethylammonium-, Dimethylanilinium-, N-Alkyl-N,N-bis-(2-hydroxyalkyl)-N-benzylammonium-, N,N.N-Triethylbenzolmethanaminium, O-Methyluronium-, S-Methylthiuronium-, Pyridinium-, Tetrabutylammonium-, Tetramethyluronium-, Tetracetylammonium-, Tetrabutylphosphonium-, Tetraphenylphosphonium-, Diphenylguanidinium-, Di-o-tolylguanidinium-, Butyldiphenylsulfonium-, Tributylsulfonium.

Bevorzugte **Halogenide** sind Fluorid, Chlorid, Bromid, Jodid.

Bevorzugte **Pseudohalogenide** sind beispielsweise Trijodid, Azid, Cyanid, Thiocyanid, Thiocyanat sowie Interhalogenide.

Geeignete **komplexe Anionen** sind beispielsweise Sulfit, Sulfat, Dithionit, Thiosulfat, Carbonat, Hydrogencarbonat, Perthiocarbonat, Nitrit, Nitrat, Perchlorat, Tetrafluoroborat, Tetrafluoroaluminat, Hexafluorophosphat, Hexafluoroarsenat, Hexafluoroantimonat und Hexachloroantimonat.

Bevorzugte ein-, zwei- oder dreifach geladene **Anionen organischer Säuren** sind ein-, zwei- oder dreifach geladene Anionen organischer Carbonsäuren mit 1 bis 20 C-Atomen. Die organischen Carbonsäuren können dabei gesättigt oder auch ein- oder mehrfach ungesättigt sein. Ausgewählte Beispiele sind Formiat, Acetat, Propionat, Butyrat, Oleat, Palmitat, Stearat, Versatat, Acrylat, Methacrylat, Crotonat, Benzoat, Naphthalincarbonat, Oxalat, Salicylat, Terephthalat, Fumarat, Maleinat, Itaconat und Abietat.

Geeignete **aliphatische oder aromatischer Sulfonate** sind Anthrachinon-2-sulfonat, Benzolsulfonat, Benzol-1,3-disulfonat, Decan-1-sulfonat, Hexadecan-1-sulfonat, Hydrochinonmonosulfonat, Methyl-4-toluolsulfonat, Naphthalin-1-sulfonat, Naphthalin-1,5-disulfonat, Tosylat und Mesylat.

Geeignete **aliphatische oder aromatische Sulfate** sind beispielsweise Dodecylsulfat und Alkylbenzolsulfate.

Geeignete **Phosphonate, Phosphate und Thiophosphate** sind Vinylphosphonat, Ethylphosphonat, Butylphosphonat, Cetylphosphonat, Dibutylphosphat, Dioctylphosphat, Dibutyldithiophosphat, und Dioctylthiophosphat.

Geeignete **aliphatische oder aromatische Xanthogenate** sind Ethylxanthogenat, Butylxanthogenat, Phenylxanthogenat, Benzylxanthogenat etc.

Geeignete **aliphatische oder aromatische Dithiocarbamate** sind Dimethyldithiocarbamat, Diethyldithiocarbamat, Diutyldithiocarbamat und Dibenzyldithiocarbamat.

**Nichtkoordinierende Anione** sind beispielsweise Tetrakis[pentafluorphenyl]borat, Pentakis-[pentafluorphenyl]phosphat, Tetrakis[3,5-trifluormethylphenyl]borat, Pentakis[3,5-trifluormethylphenyl]phosphat und Pentakis[pentafluorphenyl]cyclohexadienylanion.

Im Rahmen der folgenden Definitionen können alle jeweils zu einem Katalysator-Typ genannten allgemeinen oder als bevorzugt oder besonders bevorzugt genannte Definitionen von Resten, Parametern oder Erläuterungen untereinander, also auch zwischen den jeweiligen Bereichen und Vorzugsbereichen der Katalysator-Typen in beliebiger Weise kombiniert werden.

In den Katalysatoren der allgemeinen Formel (A) sind **X¹ und X²** gleich oder verschieden und stellen zwei Liganden, bevorzugt anionische Liganden, dar.

X¹ und X² können beispielsweise Wasserstoff, Halogen, Pseudohalogen, geradkettige oder verzweigte C₁-C₃₀-Alkyl, C₆-C₂₄-Aryl, C₁-C₂₀-Alkoxy, C₆-C₂₄-Aryloxy, C₃C₂₀-Alkyldiketonat, C₆-C₂₄-Aryldiketonat, C₁-C₂₀-Carboxylat, C₁-C₂₀-Alkylsulfonat, C₆-C₂₄-Arylsulfonat, C₁-C₂₀-Alkylthiol, C₆-C₂₄-Arylthiol, C₁-C₂₀-Alkylsulfonyl oder C₁-C₂₀-Alkylsulfinyl-Reste bedeuten.

Die vorgenannten Reste X¹ und X² können ferner durch ein oder mehrere weitere Reste substituiert sein, beispielsweise durch Halogen, bevorzugt Fluor, C₁-C₁₀-Alkyl, C₁-C₁₀-Alkoxy oder C₆-C₄-Aryl, wobei auch diese Reste gegebenenfalls wiederum durch ein oder mehrere Substituenten substituiert sein können, die aus der Gruppe umfassend Halogen, bevorzugt Fluor, C₁-C₅-Alkyl, C₁-C₅-Alkoxy und Phenyl ausgewählt sind.

In einer bevorzugten Ausführungsform sind X und X¹ gleich oder verschieden und bedeuten Halogen, insbesondere Fluor, Chlor, Brom oder Jod, Benzoat, C₁-C₅-Carboxylat, C₁-C₅-Alkyl, Phenoxy, C₁-C₅-Alkoxy, C₁-C₅-Alkylthiol, C₆-C₂₄-Arylthiol, C₆-C₂₄-Aryl oder C₁-C₅-Alkylsulfonat.

In einer besonders bevorzugten Ausführungsform sind X und X¹ identisch und bedeuten Halogen, insbesondere Chlor, CF₃COO, CH₃COO, CFH₂COO, (CH₃)₃CO, (CF₃)₂(CH₃)CO, (CF₃)(CH₃)₂CO, PhO (Phenoxy), MeO (Methoxy), EtO (Ethoxy), Tosylat (p-CH₃-C₆H₄-SO₃), Mesylat (2,4,6-Trimethylphenyl) oder CF₃SO₃ (Trifluormethansulfonat).

In der allgemeinen Formel (A) steht L für gleiche oder verschiedene Liganden, bevorzugt neutrale Elektronen-Donoren.

Die beiden Liganden L können beispielsweise unabhängig voneinander einen Phosphin-, sulfonierten Phosphin-, Phosphat-, Phosphinit-, Phosphonit-, Arsin-, Stibin-, Ether-, Amin-, Amid-, Sulfoxid-, Carboxyl-, Nitrosyl-, Pyridin-, Thioether- oder einen Imidazolidin ("Im")-Liganden bedeuten.

Bevorzugt bedeuten die beiden Liganden L unabhängig voneinander einen C₆-C₂₄-Aryl-, C₁-C₅-Alkyl- oder C₃-C₂₀-Cycloalkyl-Phosphin-Liganden, einen C₆-C₂₄-Aryl- oder C₁-C₁₀-Alkyl-sulfonierten Phosphin-Liganden, einen C₆-C₂₄-Aryl- oder C₁-C₁₀-Alkyl-Phosphinit-Liganden, einen C₆-C₂₄-Aryl- oder C₁-C₁₀-Alkylphosphonit-Liganden, einen C₆-C₂₄-Aryl- oder C₁-C₁₀-Alkylphosphit-Liganden, einen C₆-C₂₄-Aryl- oder C₁-C₁₀-Alkylarsin-Liganden, einen C₆-C₂₄-Aryl- oder C₁-C₁₀-Alkylamin-Liganden, einen Pyridin-Liganden, einen C₆-C₂₄-Aryl- oder C₁-C₁₀-Alkyl-Sulfoxid-Liganden, einen C₆-C₂₄-Aryl- oder C₁-C₁₀-Alkyl-Ether-Liganden oder einen C₆-C₂₄-Aryl- oder C₁-C₁₀-Alkylamid-Liganden, die alle jeweils durch eine Phenylgrupppe substituiert sein können, die wiederum gegebenenfalls durch einen Halogen-, C₁-C₅ Alkyl- oder C₁-C₅ Alkoxy-Rest substituiert ist.

Die Bedeutung Phosphin schließt beispielsweise PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(iso-Pr)₃, P(CHCH₃(CH₂CH₃))₃, P(cyclpentyl)₃, P(Cyclohexyl)₃, P(neopentyl)₃ und (P(neophenyl)₃ ein.

Phosphinit schließt beispielsweise Triphenylphosphinit, Tricyclohexylphosphinit, Triisopropylphosphinit und Methyldiphenylphosphinit ein.

Phosphit schließt beispielsweise Triphenylphosphit, Tricyclohexylphosphit, Tri-tert.-Butylphosphit, Triisopropylphosphit und Methyldiphenylphosphit ein.

Stibin schließt beispielsweise Triphenylstibin, Tricyclohexylstibin und Trimethylstiben ein.

Sulfonat schließt beispielsweise Trifluoromethansulfonat, Tosylat und Mesylat ein.

Sulfoxid schließt beispielsweise CH₃S(=O)CH₃ und (C₆H₅)₂SO ein.

Thioether schließt beispielsweise CH₃SCH₃, C₆H₅SCH₃, CH₃OCH₂CH₂SCH₃ und Tetrahydrothiophen ein.

Der Imidazolidinrest (Im) weist üblicherweise eine Struktur der allgemeinen Formeln (IIa) oder (IIb) auf, 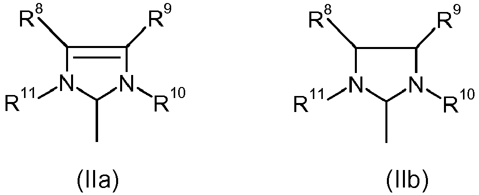 worin
- R⁸,R⁹,R ¹⁰,R¹¹: gleich oder verschieden sind und Wasserstoff, geradkettiges oder verzweigtes C₁-C₃₀-Alkyl, C₃-C₂₀-Cycloalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₀-Aryloxy, C₂-C₂₀-Alkoxycarbonyl, C₁-C₂₀-Alkylthio, C₆-C₂₀₋Arylthio, C₁-C₂₀-Alkylsulfonyl, C₁-C₂₀-Alkylsulfonat, C₆-C₂₀-Arylsulfonat oder C₁-C₂₀-Alkylsulfinyl bedeuten.

Gegebenenfalls kann einer oder mehrere der Reste R⁸, R⁹, R¹⁰, R¹¹ unabhängig voneinander durch einen oder mehrere Substituenten, vorzugsweise geradkettiges oder verzweigtes C₁-C₁₀-Alkyl, C₃-C₈-Cycloalkyl, C₁-C₁₀-Alkoxy oder C₆-C₂₄-Aryl substituiert sein, wobei diese vorgenannten Substituenten wiederum durch ein oder mehrere Reste, vorzugsweise ausgewählt aus der Gruppe Halogen, insbesondere Chlor oder Brom, C₁-C₅-Alkyl, C₁-C₅-Alkoxy und Phenyl substituiert sein können.

In einer bevorzugten Ausführungsform der erfindungsgemäßen Katalysatoren der allgemeinen Formel (A) bedeuten R⁸ und R⁹ unabhängig voneinander Wasserstoff, C₆-C₂₄-Aryl, besonders bevorzugt Phenyl, geradkettiges oder verzweigtes C₁-C₁₀-Alkyl, besonders bevorzugt Propyl oder Butyl, oder bilden zusammen unter Einschluss der Kohlenstoffatome, an die sie gebunden sind, einen Cycloalkyl- oder Aryl-Rest, wobei alle vorgenannten Reste gegebenenfalls wiederum durch ein oder mehrere weitere Reste substituiert sein können, ausgewählt aus der Gruppe umfassend geradkettiges oder verzweigtes C₁-C₁₀-Alkyl, C₁-C₁₀-Alkoxy, C₆-C₂₄-Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

In einer bevorzugten Ausführungsform der erfindungsgemäßen Katalysatoren der allgemeinen Formel (B) sind die Reste R¹⁰ und R¹¹ gleich und verschieden und bedeuten geradkettiges oder verzweigtes C₁-C₁₀-Alkyl, besonders bevorzugt i-Propyl oder Neopentyl, C₃-C₁₀-Cycloalkyl, bevorzugt Adamantyl, C₆-C₂₄-Aryl, besonders bevorzugt Phenyl, C₁-C₁₀-Alkylsulfonat, besonders bevorzugt Methansulfonat, C₆-C₁₀-Arylsulfonat, besonders bevorzugt p-Toluolsulfonat.

Gegebenenfalls sind die vorgenannten Reste als Bedeutungen von R¹⁰ und R¹¹ substituiert durch einen oder mehrere weitere Reste ausgewählt aus der Gruppe umfassend geradkettiges oder verzweigtes C₁-C₅-Alkyl, insbesondere Methyl, C₁-C₅-Alkoxy, Aryl und eine funktionelle Grupppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

Insbesondere können die Reste R¹⁰ und R¹¹ gleich und verschieden sein und bedeuten i-Propyl, Neopentyl, Adamantyl oder Mesityl.

Verschiedenste Vertreter der Katalysatoren der Formel (A) sind prinzipiell bekannt, so z.B aus der WO-A-96/04289 und der WO-A-97/06185.

Besonders bevorzugt stehen beide Liganden L in der allgemeinen Formel (A) für gleiche oder verschiedene Trialkylphosphin-Liganden, worin mindestens eine der Alkylgruppen eine sekundäre Alkylgruppe oder ein Cycloalkylgruppe darstellt, bevorzugt iso-Propyl, iso-Butyl, sec-Butyl, Neopentyl, Cyclopentyl oder Cyclohexyl.

Besonders bevorzugt steht in der allgemeinen Formel (A) ein Ligand L für einen Trialkylphosphin-Liganden, worin mindestens eine der Alkylgruppen eine sekundäre Alkylgruppe oder ein Cycloalkylgruppe darstellt, bevorzugt iso-Propyl, iso-Butyl, sec-Butyl, Neopentyl, Cyclopentyl oder Cyclohexyl.

Zwei für das erfindungsgemäße Katalysator-System bevorzugte Katalysatoren, die unter die allgemeine Formel (A) fallen, besitzen die folgenden Strukturen (III) (Grubbs (I)-Katalysator) und (IV) (Grubbs (II)-Katalysator), wobei Cy für Cyclohexyl steht.

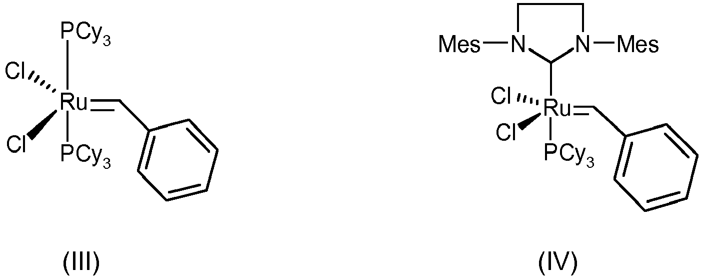

Die Katalysatoren der allgemeinen Formel (B) sind prinzipiell bekannt. Vertreter dieser Verbindungsklasse sind die Katalysatoren, die von Hoveyda et al. in US 2002/0107138 A1 und Angew Chem. Int. Ed. 2003, 42, 4592 beschrieben sind, und die Katalysatoren, die von Grela in WO-A-2004/035596, Eur. J. Org. Chem 2003, 963-966 und Angew. Chem. Int. Ed. 2002, 41, 4038 sowie in J. Org. Chem. 2004, 69, 6894-96 und Chem. Eur. J 2004, 10, 777-784 beschrieben werden. Die Katalysatoren sind käuflich erhältlich bzw. gemäß den angegebenen Literaturstellen herstellbar.

In den Katalysatoren der allgemeinen Formel (B) steht L für einen Liganden, der üblicherweise eine Elektronen-Donor-Funktion besitzt und die gleichen allgemeinen, bevorzugten und besonders bevorzugten Bedeutungen annehmen kann wie L in der allgemeinen Formel (A).

Darüber hinaus gilt, dass L in der allgemeinen Formel (B) bevorzugt einen P(R⁷)₃ Rest, wobei R⁷ unabhängig voneinander C₁-C₆ Alkyl, C₃-C₈-Cycloalkyl oder Aryl bedeuten, oder aber einen gegebenenfalls substituierten Imidazolidinrest ("Im") darstellt.

**C₁-C₆-Alkyl** steht beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl und n-Hexyl.

**C₃-C₈-Cycloalkyl** umfasst Cyclopropyl, Cyclobutyl, Cylopentyl, Cyclohexyl, Cycloheptyl und Cyclooctyl.

Aryl umfasst einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphtyl, Phenanthrenyl oder Anthracenyl genannt.

Der Imidazolidinrest (Im) weist üblicherweise eine Struktur der allgemeinen Formeln (IIa) oder (IIb) auf, 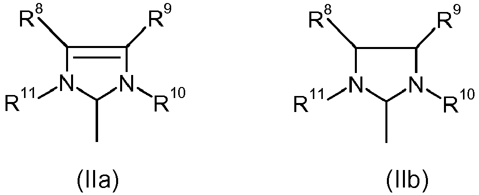 worin
- R⁸,R⁹, R¹⁰,R¹¹: gleich oder verschieden sind und Wasserstoff, geradkettiges oder verzweigtes C₁-C₃₀-Alkyl, C₃-C₂₀-Cycloalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₀-Aryloxy, C₂-C₂₀-Alkoxycarbonyl, C₁-C₂₀-Alkylthio, C₆-C₂₀-Arylthio, C₁-C₂₀-Alkylsulfonyl, C₁-C₂₀-Alkylsulfonat, C₆-C₂₀-Arylsulfonat oder C₁-C₂₀-Alkylsulfinyl bedeuten.

Gegebenenfalls kann einer oder mehrere der Reste R⁸, R⁹, R¹⁰, R¹¹ unabhängig voneinander durch einen oder mehrere Substituenten, vorzugsweise geradkettiges oder verzweigtes C₁-C₁₀-Alkyl, C₃-C₈-Cycloalkyl, C₁-C₁₀-Alkoxy oder C₆-C₂₄-Aryl substituiert sein, wobei diese vorgenannten Substituenten wiederum durch ein oder mehrere Reste, vorzugsweise ausgewählt aus der Gruppe Halogen, insbesondere Chlor oder Brom, C₁-C₅-Alkyl, C₁-C₅-Alkoxy und Phenyl substituiert sein können.

In einer bevorzugten Ausführungsform der erfindungsgemäßen Katalysatoren der allgemeinen Formel (B) bedeuten R⁸ und R⁹ unabhängig voneinander Wasserstoff, C₆-C₂₄-Aryl, besonders bevorzugt Phenyl, geradkettiges oder verzweigtes C₁-C₁₀-Alkyl, besonders bevorzugt Propyl oder Butyl, oder bilden zusammen unter Einschluss der Kohlenstoffatome, an die sie gebunden sind, einen Cycloalkyl- oder Aryl-Rest, wobei alle vorgenannten Reste gegebenenfalls wiederum durch ein oder mehrere weitere Reste substituiert sein können, ausgewählt aus der Gruppe umfassend geradkettiges oder verzweigtes C₁-C₁₀-Alkyl, C₁-C₁₀-Alkoxy, C₆-C₂₄-Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

In einer bevorzugten Ausführungsform der erfindungsgemäßen Katalysatoren der allgemeinen Formel (B) sind die Reste R¹⁰ und R¹¹ gleich und verschieden und bedeuten geradkettiges oder verzweigtes C₁-C₁₀-Alkyl, besonders bevorzugt i-Propyl oder Neopentyl, C₃-C₁₀-Cycloalkyl, bevorzugt Adamantyl, C₆-C₂₄-Aryl, besonders bevorzugt Phenyl, C₁-C₁₀-Alkylsulfonat, besonders bevorzugt Methansulfonat, C₆-C₁₀-Arylsulfonat, besonders bevorzugt p-Toluolsulfonat.

Gegebenenfalls sind die vorgenannten Reste als Bedeutungen von R¹⁰ und R¹¹ substituiert durch einen oder mehrere weitere Reste ausgewählt aus der Gruppe umfassend geradkettiges oder verzweigtes C₁-C₅-Alkyl, insbesondere Methyl, C₁-C₅-Alkoxy, Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

Insbesondere können die Reste R¹⁰ und R¹¹ gleich und verschieden sein und bedeuten i-Propyl, Neopentyl, Adamantyl oder Mesityl.

Besonders bevorzugte Imidazolidinreste (Im) haben die nachfolgenden Strukturen (Va-f), wobei Mes jeweils für einen 2,4,6-Trimethylphenyl-Rest steht,

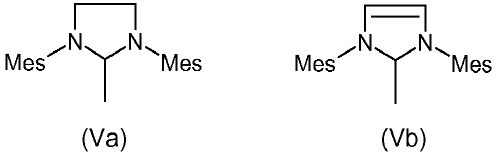

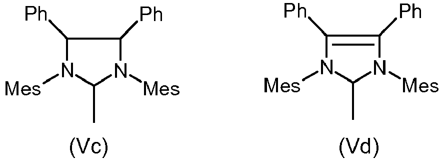

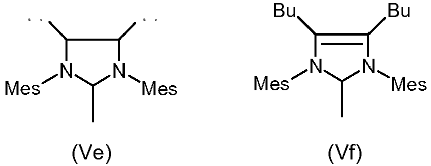

In den Katalysatoren der allgemeinen Formel (B) sind **X¹ und X²** gleich oder verschieden und können beispielsweise Wasserstoff, Halogen, Pseudohalogen, geradkettige oder verzweigte C₁-C₃₀-Alkyl, C₆-C₂₄-Aryl, C₁-C₂₀-Alkoxy, C₆-C₂₄-Aryloxy, C₃-C₂₀-Alkyldiketonat, C₆-C₂₄-Aryldiketonat, C₁-C₂₀-Carboxylat, C₁-C₂₀-Alkylsulfonat, C₆-C₂₄-Arylsulfonat, C₁-C₂₀-Alkylthiol, C₆-C₂₄-Arylthiol, C₁-C₂₀-Alkylsulfonyl oder C₁-C₂₀-Alkylsulfinyl bedeuten.

Die vorgenannten Reste X¹ und X² können ferner durch ein oder mehrere weitere Reste substituiert sein, beispielsweise durch Halogen, bevorzugt Fluor, C₁-C₁₀-Alkyl, C₁-C₁₀-Alkoxy oder C₆-C₂₄-Aryl-Reste, wobei auch die letzteren Reste gegebenenfalls wiederum durch ein oder mehrere Substituenten substituiert sein können, die aus der Gruppe umfassend Halogen, bevorzugt Fluor, C₁-C₅-Alkyl, C₁-C₅-Alkoxy und Phenyl ausgewählt sind.

In einer bevorzugten Ausführungsform sind X und X¹ gleich oder verschieden und bedeuten Halogen, insbesondere Fluor, Chlor, Brom oder Jod, Benzoat, C₁-C₅-Carboxylat, C₁-C₅-Alkyl, Phenoxy, C₁-C₅-Alkoxy, C₁-C₅-Alkylthiol, C₆-C₂₄-Arylthiol, C₆-C₂₄-Aryl oder C₁-C₅-Alkylsulfonat.

In einer besonders bevorzugten Ausführungsform sind X und X¹ identisch und bedeuten Halogen, insbesondere Chlor, CF₃COO, CH₃COO, CFH₂COO, (CH₃)₃CO, (CF₃)₂(CH₃)CO, (CF₃)(CH₃)₂CO, PhO (Phenoxy), MeO (Methoxy), EtO (Ethoxy), Tosylat (p-CH₃-C₆H₄-SO₃), Mesylat (2,4,6-Trimethylphenyl) oder CF₃SO₃ (Trifluormethansulfonat).

In der allgemeinen Formel (B) bedeutet der Rest R¹ einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest, die alle jeweils optional durch ein oder mehrere Alkyl-, Halogen-, Alkoxy-, Aryl- oder Heteroaryl-Reste substituiert sein können.

Üblicherweise bedeutet der Rest R¹ einen C₁-C₃₀-Alkyl, C₃-C₂₀-Cylcoalkyl, C₂-C₂₀-Alkenyl, C₂-C₂₀-Alkinyl, C₆-C₂₄-Aryl, C₁-C₂₀-Alkoxy, C₂-C₂₀-Alkenyloxy, C₂-C₂₀-Alkinyloxy, C₆-C₂₄-Aryloxy, C₂-C₂₀- Alkoxycarbonyl, C₁-C₂₀-Alkylamino-, C₁-C₂₀-Alkylthio, C₆-C₂₄-Arylthio, C₁-C₂₀-Alkylsulfonyl oder C₁-C₂₀-Alkylsulfinyl Rest, die alle jeweils optional durch ein oder mehrere Alkyl-, Halogen-, Alkoxy-, Aryl- oder Heteroaryl-Reste substituiert sein können.

Bevorzugt steht R¹ für einen C₃-C₂₀-Cylcoalkyl-Rest, einen C₆-C₂₄-Aryl-Rest oder einen geradkettigen oder verzweigten C₁-C₃₀-Alkyl-Rest, wobei letztere gegebenenfalls durch ein oder mehrere Doppel- oder Dreifachbindungen oder auch ein oder mehrere Heteroatome, bevorzugt Sauerstoff oder Stickstoff, unterbrochen sein kann. Besonders bevorzugt steht R¹ für einen geradkettigen oder verzweigten C₁-C₁₂-Alkyl-Rest.

Der C₃-C₂₀-Cycloalkyl-Rest umfasst beispielsweise Cyclopropyl, Cyclobutyl, Cylopentyl, Cyclohexyl, Cycloheptyl und Cyclooctyl.

Bei dem C₁-C₁₂-Alkyl-Rest kann es sich beispielsweise um Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, n-Hexyl, n-Heptyl, n-Octyl, n-Decyl oder n-Dodecyl handeln. Insbesondere steht R¹ für Methyl oder Isopropyl.

Der C₆-C₂₄-Aryl-Rest steht für einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphtyl, Phenanthrenyl oder Anthracenyl genannt.

In der allgemeinen Formel (B) sind die Reste R², R³, R⁴ und R⁵ gleich oder verschieden und können Wasserstoff, organische oder anorganische Reste darstellen.

In einer geeigneten Ausführungsform sind R², R³, R⁴, R⁵ gleich oder verschieden und bedeuten Wasserstoff, Halogen, Nitro, CF₃, Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio, Alkylsulfonyl- oder Alkylsulfinyl-Reste darstellen, die alle jeweils optional durch ein oder mehrere Alkyl-, Alkoxy-, Halogen-, Aryl- oder Heteroaryl-Reste substituiert sein können.

Üblicherweise sind R², R³, R⁴, R⁵ gleich oder verschieden und bedeuten Wasserstoff, Halogen, bevorzugt Chlor oder Brom, Nitro, CF₃, C₁-C₃₀-Alkyl, C₃-C₂₀-Cylcoalkyl, C₂-C₂₀-Alkenyl, C₂-C₂₀-Alkinyl, C₆-C₂₄-Aryl, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylamino-, C₁-C₂₀-Alkylthio, C₆-C₂₄-Arylthio, C₁-C₂₀-Alkylsulfonyl oder C₁-C₂₀-Alkylsulfinyl Reste, die alle jeweils optional durch ein oder mehrere C₁-C₃₀-Alkyl-, C₁-C₂₀-Alkoxy-, Halogen-, C₆-C₂₄-Aryl- oder Heteroaryl-Reste substituiert sein können.

In einer besonders bewährten Ausführungsform sind R², R³, R⁴, R⁵ sind gleich oder verschieden und stehen für Nitro, geradkettige oder verzweigte C₁-C₃₀-Alkyl-, C₅-C₂₀-Cylcoalkyl-, geradkettige oder verzweigte C₁-C₂₀-Alkoxy-Reste oder C₆-C₂₄-Aryl-Reste, bevorzugt Phenyl oder Naphthyl. Die C₁-C₃₀-Alkyl-Reste sowie C₁-C₂₀-Alkoxy-Reste können optional durch ein oder mehrere Doppel- oder Dreifachbindungen oder auch ein oder mehrere Heteroatome, bevorzugt Sauerstoff oder Stickstoff, unterbrochen sein.

Ferner können auch zwei oder mehr der Reste R², R³, R⁴ oder R⁵ über aliphatische oder aromatische Strukturen verbrückt sein. R³ und R⁴ können beispielsweise unter Einbeziehung der Kohlenstoff-Atome, an die sie im Phenylring der Formel (B) gebunden sind, einen ankondensierten Phenylring bilden, so dass insgesamt eine Naphthylstruktur resultiert.

In der allgemeinen Formel (B) bedeutet R⁶ Wasserstoff, einen Alkyl-, Alkenyl-, Alkinyl- oder einen Aryl-Rest. Bevorzugt bedeutet R⁶ Wasserstoff, einen C₁-C₃₀-Alkyl, einen C₂-C₂₀-Alkenyl-, einen C₂-C₂₀-Alkinyl oder einen C₆-C₂₄-Aryl-Rest. Besonders bevorzugt ist R⁶ Wasserstoff.

**Katalysatoren gemäß der allgemeinen Formel (B1)**sind beispielsweise aus US 2002/0107138 A1 (Hoveyda et al.) prinzipiell bekannt und können nach dort angegebenen Herstellverfahren erhalten werden.

Besonders bevorzugt sind Katalysatoren der allgemeinen Formel (B1), wobei 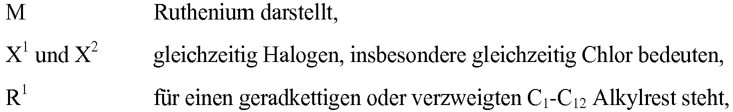
- R², R³, R⁴, R⁵: die für die allgemeine Formel (B) genannten allgemeinen und bevorzugten Bedeutungen besitzen und
- L: die für die allgemeine Formel (B) genannten allgemeinen und bevorzugten Bedeutungen besitzt.

Inbesondere bevorzugt sind Katalysatoren der allgemeinen Formel (B1), wobei
- M: Ruthenium darstellt,
- X¹ und X²: gleichzeitig Chlor bedeuten,
- R¹: für einen Isopropyl-Rest steht,
- R², R³, R⁴,: R⁵ alle Wasserstoff bedeuten und
- L: einen gegebenenfalls substituierten Imidazolidin-Rest der Formeln (IIa) oder (IIb) darstellt, 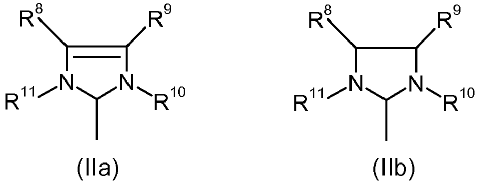
worin
- R⁸, R ⁹, R ¹⁰, R¹¹: gleich oder verschieden sind und Wasserstoff, geradkettiges oder verzweigtes C₁-C₃₀-Alkyl, C₃-C₂₀-Cylcoalkyl, C₂-C₂₀-Alkenyl, C₂-C₂₀-Alkinyl, C₆-C₂₄-Aryl, C₁-Q₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylthio, C₆-C₂₄-Arylthio, C₁-C₂₀-Alkylsulfonyl, C₁-C₂₀-Alkylsulfonat, C₆-C₂₄-Arylsulfonat oder C₁-C₂₀-Alkylsulfinyl bedeuten.

Ganz besonders bevorzugt ist für die erfindungsgemäßen Katalysator-Systeme als Katalysator, der unter die allgemeine Strukturformel (B1) fällt, derjenige der Formel (VI), wobei Mes jeweils für einen 2,4,6-Trimethylphenyl-Rest steht,

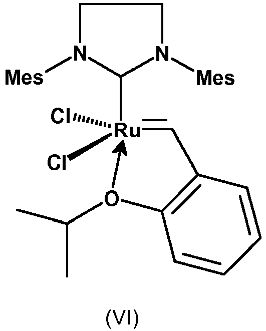

Dieser Katalysator wird in der Literatur auch als "Hoveyda-Katalysator" bezeichnet.

Weiterhin geeignete Katalysatoren, die unter die allgemeine Strukturformel (B1) fallen, sind solche der folgenden Formeln (VII), (VIII), (IX), (X), (XI), (XII), (XIII) und (XVII), wobei Mes jeweils einen 2,4,6-Trimethylphenyl-Rest bedeutet.

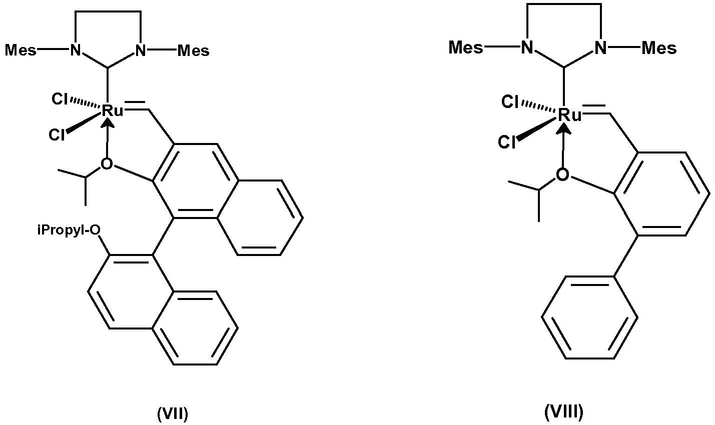

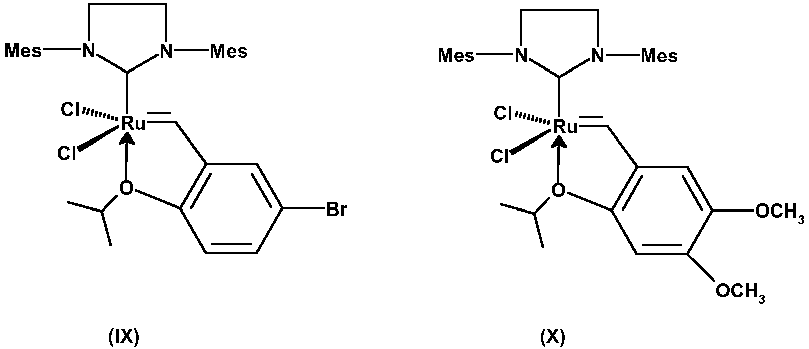

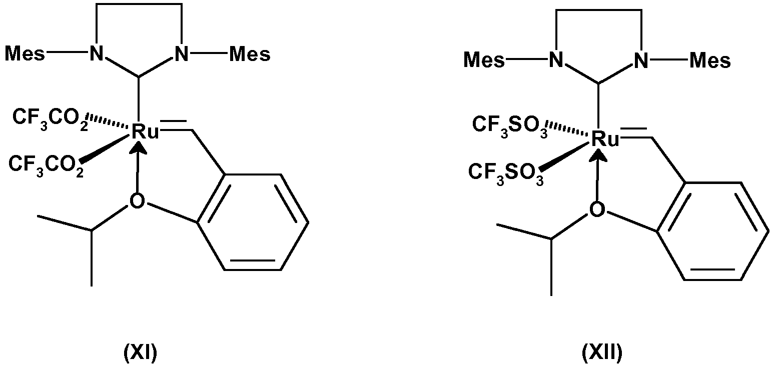

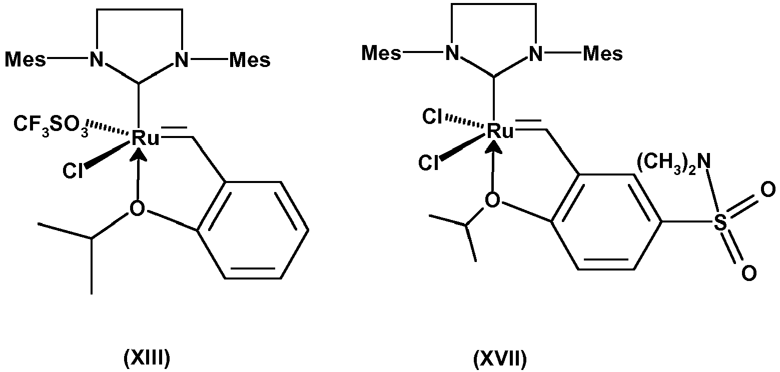

**Katalysatoren gemäß der allgemeinen Formel (B2)** sind beispielsweise aus WO-A-2004/035596 **(Grela)** prinzipiell bekannt und können nach dort angegebenen Herstellverfahren erhalten werden.

Besonders bevorzugt sind Katalysatoren der allgemeinen Formel (B2), wobei
- M: Ruthenium darstellt,
- X¹ und X²: gleichzeitig Halogen, insbesondere gleichzeitig Chlor bedeuten,
- R¹: für einen geradkettigen oder verzweigten C₁-C₁₂ Alkylrest steht,
- R¹²: die für die allgemeine Formel (B) genannten Bedeutungen besitzt,
- n: gleich 0, 1, 2 oder 3 ist,
- R⁶: Wasserstoff bedeutet und
- L: die für die allgemeine Formel (B) genannten Bedeutungen besitzt,

Inbesondere bevorzugt sind Katalysatoren der allgemeinen Formel (B2), wobei
- M: Ruthenium darstellt,
- X¹ und X²: gleichzeitig Chlor bedeuten,
- R¹: für einen Isopropyl-Rest steht,
- n: gleich 0 ist und
- L: einen gegebenenfalls substituierten Imidazolidin-Rest der Formeln (IIa) oder (IIb) darstellt, 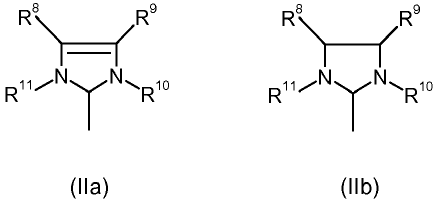
worin
- R⁸, R⁹, R¹⁰, R¹¹: gleich oder verschieden sind und Wasserstoff, geradkettiges oder verzweigtes, cyclisches oder acyclisches C₁-C₃₀-Alkyl, C₂C₂₀-Alkenyl, C₂C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylthio, C₆-C₂₄-Arylthio, C₁-C₂₀-Alkylsulfonyl, C₁-C₂₀-AIkylsulfonat, C₆-C₂₄-Arylsulfonat oder C₁-C₂₀-Alkylsulfinyl bedeuten.

Ein besonders geeigneter Katalysator, der unter die allgemeine Formel (B2) fällt, besitzt die Struktur (XIV) 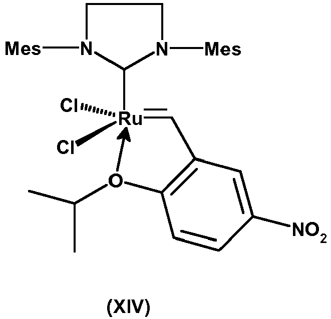 und wird in der Literatur auch als "Grela-Katalysator" bezeichnet. Ein weiterer geeigneter Katalysator, der unter die allgemeine Formel (B2) fällt, besitzt folgende Struktur (XV), wobei Mes jeweils für einen 2,4,6-Trimethylphenyl-Rest steht,

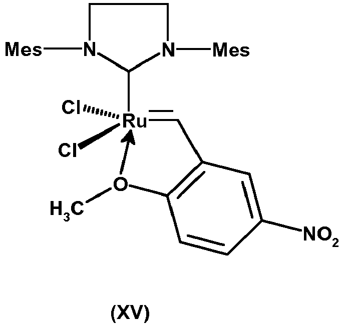

**Katalysatoren der allgemeinen Formel (B3)**sind aus US 2002/0107138 A1 bekannt und gemäß den dort gemachten Angaben herstellbar.

In einer weiteren alternativen Ausführungsform ist ein Katalysator der Formel (B4) einsetzbar, 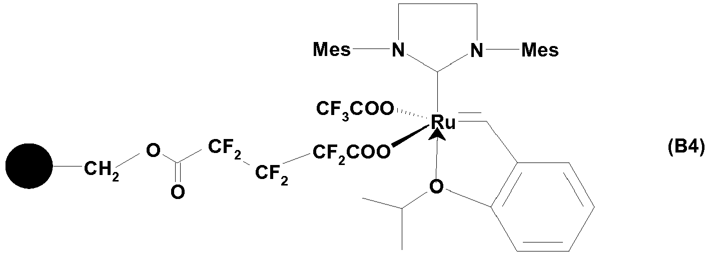 worin das Symbol
•
für einen Träger steht.

Bevorzugt handelt es sich bei dem Träger um ein Poly(styroldivinylbenzol)-Copolymer (PS-DVB).

Dieser Katalysatoren gemäß Formel (B4) sind aus Chem. Eur. J. 2004 10, 777-784 prinzipiell bekannt und nach dort beschriebenen Herstellmethoden erhältlich.

Alle vorgenannten Katalysatoren des Typs (B) können entweder als solche im Reaktionsgemisch der NBR-Metathese eingesetzt werden oder aber auch auf einem festen Träger aufgebracht und immobilisiert werden. Als feste Phasen bzw. Träger sind solche Materialien geeignet, die einerseits inert gegenüber dem Reaktionsgemisch der Metathese sind und zum anderen die Aktivität des Katalysators nicht beeinträchtigen. Einsetzbar sind zur Immobilisierung des Katalysators beispielsweise Metalle, Glas, Polymere, Keramik, organische Polymerkügelchen oder auch anorganische Sol-Gele.

**Katalysatoren der allgemeinen Formel (C)** sind prinzipiell bekannt (siehe z.B. Angew. Chem. Int. Ed. 2004,43, 6161-6165**).**

X¹ und X² können in der allgemeinen Formel (C) die gleichen allgemeinen, bevorzugten und besonders bevorzugten Bedeutungen besitzen wie in Formel (B).

Der Imidazolidinrest (Im) weist üblicherweise eine Struktur der allgemeinen Formeln (IIa) oder (IIb) auf, die bereits für den Katalysator-Typ der Formeln (A) und (B) genannt wurden und kann auch alle dort als bevorzugt genannten Strukturen, insbesondere die der Formeln (Va)-(Vf) aufweisen.

Die Reste R*'* sind in der allgemeinen Formel (C) gleich oder verschieden und bedeuten einen geradkettigen oder verzweigten C₁-C₃₀-Alkyl-, C₅-C₃ₒ-Cylcoalkyl- oder Aryl-Rest, wobei die C₁-C₃₀-Alkylreste gegebenenfalls durch ein oder mehrere Doppel- oder Dreifachbindungen oder auch ein oder mehrere Heteroatome, bevorzugt Sauerstoff oder Stickstoff, unterbrochen sein können.

**Aryl** umfasst einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

Bevorzugt sind die Reste R*'* in der allgemeinen Formel (C) gleich und bedeuten Phenyl, Cyclohexyl, Cyclopentyl, Isopropyl, o-Tolyl o-Xylyl oder Mesityl.

Die erfindungsgemäßen Katalysator-Systeme umfassen somit den Metathese-Katalysator sowie ein oder mehrere Salze der allgemeinen Formel (I).

**Gegenstand der Erfindung** ist ferner die Verwendung der erfindungsgemäßen Katalysator-Systeme in Metathese-Reaktionen.

Bei den Metathese-Reaktionen kann es sich um Ringschlussmetathesen (RCM), Kreuzmetathesen (CM) oder auch Ringöffnungsmetathesen (ROMP) handeln.

Bevorzugt werden die erfindungsgemäßen Katalysator-Systeme für die Metathese von Nitrilkautschuk verwenden. Hierbei handelt es sich um eine Kreuzmetathese.

Im erfindungsgemäßen Katalysator-System wird der Metathese-Katalysator und das oder die Salze der allgemeinen Formel (I) in einem Gewichtsverhältnis Salz(e) : Metathesekatalysator von 0,01:1 bis 10000:1, bevorzugt 0,1:1 bis 1000:1, besonders bevorzugt 0,5:1 bis 500:1 eingesetzt.

Das bzw. die Salze der allgemeinen Formel (I) können in einem Lösungsmittel oder auch ohne Lösungsmittel zum Metathese-Katalysator oder dessen Lösung gegeben werden, um dadurch das erfindungsgemäße Katalysator-System zu erhalten.

Als Lösungsmittel bzw. Dispergiermittel, mit dem das Salz bzw. die Salze der allgemeinen Formel (I) dem Katalysator bzw. dessen Lösung zugesetzt wird, können alle bekannten Lösungsmittel verwendet werden. Für die Wirksamkeit des Salzzusatzes ist es nicht unbedingt erforderlich, dass das Salz in dem Lösungsmittel eine hohe Löslichkeit aufweist. Bevorzugte Lösungsmittel umfassen, sind aber nicht beschränkt auf, Aceton, Benzol, Chlorbenzol, Chloroform, Cyclohexan, Dichlormethan, Dioxan, Dimethylformamid, Dimethylacetamid, Dimethylsulfon, Dimethylsufoxid, Methylethylketon, Tetrahydrofuran, Tetrahydropyran und Toluol. Vorzugsweise ist das Lösungsmittel gegenüber dem Metathesekatalysator inert.

Sofern die erfindungsgemäßen Katalysator-Systeme für die Metathese von Nitrilkautschuk eingesetzt werden, liegt die Menge, in der das Salz oder die Salze der allgemeinen Formel (I) bezogen auf den abzubauenden Kautschuk verwendet werden, in einem Bereich von 0,0001 phr bis 50 phr, bevorzugt 0,001 phr bis 35 phr (phr = Gew.Teile auf 100 Gew.-Teile Kautschuk).

Auch für den Einsatz zur NBR Metathese kann das Salze bzw. die Salze der allgemeinen Formel (I) in einem Lösungsmittel oder auch ohne Lösungsmittel zu einer Lösung der Metathese-Katalysators gegeben werden. Alternativ dazu kann das Salz oder die Salze der allgemeinen Formel (I) auch direkt einer Lösung des abzubauenden Nitrilkautschuks zugegeben werden, der darüber hinaus der Metathese-Katalysator zugegeben wird, so dass das gesamte erfindungsgemäße Katalysator-System im Reaktionsgemisch vorliegt.

Die Menge des Metathese-Katalysators bezogen auf den eingesetzten Nitrilkautschuk hängt von der Natur sowie katalytischen Aktivität des speziellen Katalysators ab. Die Menge an eingesetztem Katalysator beträgt üblicherweise 1 bis 1.000 ppm Edelmetall, bevorzugt 2 bis 500 ppm, insbesondere 5 bis 250 ppm, bezogen auf den eingesetzten Nitrilkautschuk.

Die NBR-Metathese kann in Abwesenheit oder aber in Gegenwart eines Co-Olefins durchgeführt werden. Bei diesem handelt es sich bevorzugt um ein geradkettiges oder verzweigtes C₂-C₁₆-Olefin. Geeignet sind beispielsweise Ethylen, Propylen, Isobuten, Styrol, 1-Hexen oder 1-Octen. Bevorzugt wird 1-Hexen oder 1-Octen verwendet. Sofern das Co-Olefin flüssig ist (wie beispielsweise 1-Hexen), liegt die Menge des Co-Olefins bevorzugt in einem Bereich von 0,2-20 Gew.% bezogen auf den eingesetzten NBR. Sofern das Co-Olefin ein Gas ist, wie beispielsweise Ethylen, wird die Menge des Co-Olefins so gewählt, dass sich im Reaktionsgefäß bei Raumtemperatur ein Druck im Bereich von 1 x 10⁵ Pa - 1 x 10⁷ Pa einstellt, bevorzugt ein Druck im Bereich von 5,2 x 10⁵ Pa bis 4 x 10⁶ Pa.

Die Metathese-Reaktion kann in einem geeigneten Lösungsmittel durchgeführt werden, welches den eingesetzten Katalyator nicht deaktiviert und die Reaktion auch nicht in irgendeiner anderen Weise negativ beeinflusst. Bevorzugte Lösungsmittel umfassen, sind aber nicht begrenzt auf, Dichlormethan, Benzol, Toluol, Methylethylketon, Aceton, Tetrahydrofuran, Tetrahydropyran, Dioxan und Cyclohexan. Das besonders bevorzugte Lösungsmittel ist Chlorbenzol. In manchen Fällen, wenn das Co-Olefin selbst als Lösungsmittel fungieren kann, so z.B. bei 1-Hexen, kann auch auf den Zusatz eines weiteren zusätzlichen Lösungsmittels verzichtet werden.

Die Konzentration des eingesetzten Nitrilkautschuks in der Reaktionsmischung der Metathese ist nicht kritisch, aber es ist natürlich zu beachten, dass die Reaktion nicht durch eine viel zu hohe Viskosität der Reaktionsmischung und die damit verbundenen Mischungsprobleme negativ beeinflusst werden sollte. Bevorzugt liegt die Konzentration des NBR in der Reaktionsmischung im Bereich von 1 bis 20 Gew.%, besonders bevorzugt im Bereich von 5 bis 15 Gew.%, bezogen auf die gesamte Reaktionsmischung.

Der Metathese Abbau wird üblicherweise bei einer Temperatur im Bereich von 10°C bis 150°C durchgeführt, bevorzugt bei einer Temperatur im Bereich von 20 bis 100 °C.

Die Reaktionszeit hängt von einer Reihe von Faktoren ab, beispielsweise vom Typ des NBR, der Art des Katalysators, der verwendeten Katalysator-Konzentration und der Reaktionstemperatur. Typischerweise ist die Reaktion innerhalb von drei Stunden unter normalen Bedingungen beendet. Der Fortschritt der Metathese kann durch Standard-Analytik überwacht werden, z.B. durch GPCmessungen oder durch Bestimmung der Viskosität.

Als Nitrilkautschuke ("NBR") können in die Metathese-Reaktion Co- oder Terpolymere eingesetzt werden, welche Wiederholungseinheiten mindestens eines konjugierten Diens, mindestens eines α,β-ungesättigten Nitrils und gegebenenfalls einer oder mehrerer weiterer copolymerisierbarer Monomere enthalten.

Das konjugierte Dien kann von jeder Natur sein. Bevorzugt werden (C₄-C₆) konjugierte Diene eingesetzt. Besonders bevorzugt sind 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als α,β-ungesättigtes Nitril kann jedes bekannte α,β-ungesättigte Nitril eingesetzt werden, bevorzugt sind (C₃-C₅)-α,β-ungesättigte Nitrile wie Acrylnitril, Methacrylnitril, Ethacrylnitril oder Mischungen davon. Besonders bevorzugt ist Acrylnitril.

Einen besonders bevorzugten Nitrilkautschuk stellt somit ein Copolymer aus Acrylnitril und 1,3-Butadien dar.

Neben dem konjugierten Dien und dem α,β-ungesättigten Nitril können noch ein oder mehrere weitere dem Fachmann bekannte, copolymerisierbare Monomere eingesetzt werden, z.B. α,β-ungesättigte Mono- oder Dicarbonsäuren, deren Ester oder Amide. Als α,β-ungesättigte Mono- oder Dicarbonsäuren sind dabei Fumarsäure, Maleinsäure, Acrylsäure und Methacrylsäure bevorzugt. Als Ester der α,β-ungesättigten Carbonsäuren werden vorzugsweise deren Alkylester und Alkoxyalkylester eingesetzt. Besonders bevorzugte Alkylester der α,β-ungesättigten Carbonsäuren sind Methylacrylat, Ethylacrylat, Butylacrylat, Butylmethacrylat, 2-Ethylhexylacrylat, 2-Ethylhexylmethacrylat und Octylacrylat. Besonders bevorzugte Alkoxyalkylester der α,β-ungesättigten Carbonsäuren sind Methoxyethyl(meth)acrylat, Ethoxyethyl(meth)acrylat und Methoxyethyl-(meth)acrylat. Einsetzbar sind auch Mischungen von Alkylestern, wie z.B. den vorgenannten, mit Alkoxyalkylestern, z.B. in Form der vorgenannten.

Die Anteile an konjugiertem Dien und α,β-ungesättigtem Nitril in den einzusetzenden NBR-Polymeren können in weiten Bereichen schwanken. Der Anteil des oder der Summe der konjugierten

Diene liegt üblicherweise im Bereich von 40 bis 90 Gew.-%, bevorzugt im Bereich von 60 bis 85 Gew. %, bezogen auf das Gesamtpolymer. Der Anteil des oder der Summe der α,β-ungesättigten Nitrile liegt üblicherweise bei 10 bis 60 Gew.-%, bevorzugt bei 15 bis 40 Gew.-%, bezogen auf das Gesamtpolymer. Die Anteile der Monomere summieren sich jeweils zu 100 Gew.-% auf. Die zusätzlichen Monomere können in Mengen von 0 bis 40 Gew.%, bevorzugt 0,1 bis 40 Gew.-%, besonders bevorzugt 1 bis 30 Gew.-%, bezogen auf das Gesamtpolymer, vorliegen. In diesem Fall werden entsprechende Anteile des oder der konjugierten Diene und/oder des oder der α,β-ungesättigten Nitrile durch die Anteile der zusätzlichen Monomere ersetzt, wobei sich die Anteile aller Monomere jeweils zu 100 Gew.-% aufsummieren.

Die Herstellung der Nitrilkautschuke durch Polymerisation der vorgenannten Monomere ist dem Fachmann hinlänglich bekannt und in der Polymerliteratur umfangreich beschrieben.

Nitrilkautschuke, die im erfindungsgemäßen Sinn verwendet werden können, sind ferner käuflich erhältlich, z.B. als Produkte aus der Produktreihe der Marken Perbunan® und Krynac^{®} von der Lanxess Deutschland GmbH.

Die zur Metathese eingesetzten Nitrilkautschuke besitzen eine Mooney-Viskosität (ML 1+4 bei 100°C) im Bereich von 30 bis 70, bevorzugt von 30 bis 50. Dies entspricht einem Gewichtsmittel des Molekulargewicht M_{w} im Bereich von 200.000 - 500.000, bevorzugt im Bereich von 200.000-400.000. Die eingesetzten Nitrilkautschuke besitzen ferner eine Polydispersität PDI = M_{w}/Mₙ, wobei M_{w} das Gewichtsmittel und Mₙ das Zahlenmittel des Molekulargewichts darstellt, im Bereich von 2,0 - 6,0 und bevorzugt im Bereich von 2,0 - 4,0.

Die Bestimmung der Mooney-Viskosität erfolgt dabei gemäß ASTM Norm D 1646.

Die durch das erfindungsgemäße Metathese-Verfahren erhaltenen Nitrilkautschuke besitzen eine Mooney-Viskosität (ML 1+4 bei 100°C) im Bereich von 5 - 30, bevorzugt von 5 - 20 Dies entspricht einem Gewichtsmittel des Molekulargewicht M_{w} im Bereich von 10.000- 200.000, bevorzugt im Bereich von 10.000-150.000. Die erhaltenen Nitrilkautschuke besitzen ferner eine Polydispersität PDI = M_{w}/Mₙ, wobei Mₙ das Zahlenmittel des Molekulargewichts darstellt, im Bereich 1,5 - 4,0 bevorzugt im Bereich von 1,7 - 3.

An den Metathese Abbau in Gegenwart des erfindungsgemäßen Katalysator-Systems kann sich eine Hydrierung der erhaltenen abgebauten Nitrilkautschuke anschließen. Diese kann in der dem Fachmann bekannten Art und Weise erfolgen.

Es ist möglich, die Hydrierung unter Einsatz homogener oder heterogener Hydrierkatalysatoren durchzuführen. Es ist ferner möglich, die Hydrierung in-situ durchzuführen, d.h. in dem gleichen Reaktionsgefäß, in dem zuvor auch der Metathese-Abbau erfolgte und ohne Notwendigkeit den abgebauten Nitrilkautschuk zu isolieren. Der Hydrierkatalysator wird einfach dem Reaktionsgefäß zugesetzt.

Die eingesetzten Katalysatoren basieren üblicherweise auf Rhodium, Ruthenium oder Titan, es können aber auch Platin, Iridium, Palladium, Rhenium, Ruthenium, Osmium, Kobalt oder Kupfer entweder als Metall, oder aber bevorzugt in Form von Metallverbindungen eingesetzt werden (siehe z.B.US-A-3,700,637**,** DE-A-25 39 132**,** EP-A- 0 134 023**,** DE-OS- 35 41 689**,** DE-OS- 35 40 918**,** EP-A-0 298 386**,** DE-OS- 35 29 252**,** DE-OS- 34 33 392**,** US-A-4,464,515 **und** US-A-4,503,196**).**

Geeignete Katalysatoren und Lösungsmittel für eine Hydrierung in homogener Phase werden im folgenden beschrieben und sind auch aus DE-A-25 39 132 und der EP-A-0 471 250 bekannt

Die selektive Hydrierung kann beispielsweise in Gegenwart eines Rhodium- oder Ruthenium-haltigen Katalysators erreicht werden. Einsetzbar ist beispielsweise ein Katalysator der allgemeinen Formel

(R¹ₘB)₁ M Xₙ.

worin M Ruthenium oder Rhodium ist, R¹ gleich oder verschieden sind und eine C₁-C₈ Alkylgruppe, eine C₄-C₈ Cycloalkylgruppe, eine C₆-C₁₅ Aryl-Gruppe oder eine C₇-C₁₅ Aralkylgruppe darstellen. B ist Phosphor, Arsen, Schwefel oder eine Sulfoxid-Gruppe S=O, X ist Wasserstoff oder ein Anion, vorzugsweise Halogen und besonders bevorzugt Chlor oder Brom, 1 ist 2,3 oder 4, m ist 2 oder 3 und n ist 1,2 oder 3, bevorzugt 1 oder 3. Bevorzugte Katalysatoren sind Tris(triphenylphosphin)-rhodium(I)-chlorid, Tris(triphenylphosphin)-rhodium(III)-chlorid und Tris(dimethylsulfoxid)-rhodium(III)-chlorid sowie Tetrakis(triphenylphosphin)-rhodium-hydrid der Formel (C₆H₅)₃P)₄RhH und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01-1 Gew.%, bevorzugt im Bereich von 0,03-0,5 Gew.% und besonders bevorzugt im Bereich von 0,1-0,3 Gew.% bezogen auf das Gewicht des Polymers sind geeignet.

Üblicherweise ist es sinnvoll, den Katalysator zusammen mit einem Co-Katalysator zu verwenden, der ein Ligand der Formel R¹ₘB ist, wobei R¹, m und B die zuvor für den Katalysator genannten Bedeutungen besitzen. Bevorzugt ist m gleich 3, B gleich Phosphor und die Reste R¹ können gleich oder verschieden sein. Bevorzugt handelt es sich um Co-Katalysatoren mit Trialkyl, Tricycloalkyl,

Triaryl, Triaralkyl, Diaryl-monoalkyl, Diaryl-monocycloalkyl, Dialkyl-monoaryl, Dialkylmonocycloalkyl, Dicycloalkyl-monoaryl oder Dicyclalkyl-monoaryl-Resten.

Beispiele von Co-Katalysatoren finden sich beispielsweise in US-A-4,631,315**.** Bevorzugter Co-Katalysator ist Triphenylphosphin. Der Co-Katalysator wird bevorzugt in Mengen in einem Bereich von 0,3-5 Gew.%, bevorzugt im Bereich von 0,5-4 Gew.% eingesetzt, bezogen auf das Gewicht des zu hydrierenden Nitrilkautschuks. Bevorzugt liegt ferner das Gewichtsverhältnis des Rhodiumhaltigen Katalysators zum Co-Katalysator im Bereich von 1:3 bis 1:55, besonders bevorzugt im Bereich von 1:5 bis 1:45. Bezogen auf 100 Gewichtsteile des zu hydrierenden Nitrilkautschuks werden geeigneterweise 0,1 bis 33 Gewichtsteile des Co-Katalyators, bevorzugt 0,5 bis 20 und ganz besonders bevorzugt 1 bis 5 Gewichtsteile, insbesondere mehr als 2 aber weniger als 5 Gewichtsteile Co-Katalysator bezogen auf 100 Gewichtsteile des zu hydrierenden Nitrilkautschuks eingesetzt.

Die praktische Durchführung dieser Hydrierung ist dem Fachmann aus US-A-6,683,136 hinlänglich bekannt. Sie erfolgt üblicherweise, indem man den zu hydrierenden Nitrilkautschuk in einem Lösungsmittel wie Toluol oder Monochlorbenzol bei einer Temperatur im Bereich von 100 bis 150 °C und einem Druck im Bereich von 50 bis 150 bar für 2 bis 10 h mit Wasserstoff beaufschlagt.

Unter Hydrierung wird im Rahmen dieser Erfindung eine Umsetzung der im Ausgangs-Nitrilkautschuk vorhandenen Doppelbindungen zu mindestens 50 %, bevorzugt 70-100%, besonders bevorzugt 80-100%, verstanden.

Bei Einsatz heterogener Katalysatoren handelt es sich üblicherweise um geträgerte Katalysatoren auf der Basis von Palladium, die z. B. auf Kohle, Kieselsäure, Calciumcarbonat oder Bariumsulfat geträgert sind.

Nach Abschluss der Hydrierung erhält man einen hydrierten Nitrilkautschuk mit einer Mooney-Viskosität (ML 1+4 bei 100°C), gemessen gemäß ASTM Norm D 1646, im Bereich von 10 - 50, bevorzugt von 10 bis 30. Dies entspricht einem Gewichtsmittel des Molekulargewicht M_{w} im Bereich von 2.000 - 400.000 g/mol, bevorzugt im Bereich von 20.000 - 200.000. Die erhaltenen hydrierten Nitrilkautschuke besitzen ferner eine Polydispersität PDI= M_{w}/Mₙ, wobei M_{w} das Gewichtsmittel und Mₙ das Zahlenmittel des Molekulargewichts darstellt, im Bereich von 1- 5 und bevorzugt im Bereich von 1,5 - 3.

Überraschenderweise tritt bei Einsatz der Salze der allgemeinen Formel (I) der negative Effekt, der unter Verwendung von Kupfer-Salzen bei der Nitrilkautschuk-Metathese beobachtet wurde, nicht ein.

Das erfindungsgemäße Katalysator-System lässt sich jedoch nicht nur erfolgreich für den Metathese-Abbau von Nitrilkautschuken einsetzen, sondern auch universeller für andere Metathese-Reaktionen, so z.B. für Ringschlussmetathesen wie den Ringschluss von Diethyldiallylmalonat.

Durch den Einsatz der erfindungsgemäßen Katalysator-Systeme aus Katalysator und einem oder mehreren Salzen der allgemeinen Formel (I) lässt sich bei vergleichbaren Reaktionszeiten die Menge des Metathese Katalysators und damit die Edelmetall-Menge deutlich gegenüber analogen Metathese-Reaktionen reduzieren, bei denen nur der Katalysator; d.h. ohne Salze eingesetzt wird. Bei Einsatz vergleichbarer Edelmetallgehalte werden durch die Salzzusätze die Reaktionszeiten substanziell verkürzt. Beim Einsatz für den Abbau von Nitrilkautschuken können abgebaute Nitrilkautschuke mit deutlich niedrigeren Molekulargewichten M_{w} und Mₙ erreicht werden.

### BEISPIELE

In nachfolgenden Versuchen wird gezeigt, dass die Aktivität des Katalysators erhöht werden kann, wenn er in Kombination mit Salzzusätzen verwendet wird.

Hierfür wurden folgende Katalysatoren eingesetzt:

### "Grubbs-II Katalysator"

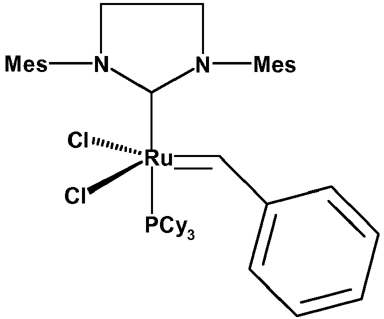

Der Grubbs-II-Katalysator wurde von der Firma Materia (Pasadena/Kalifornien) bezogen.

### "Hoveyda-Katalysator"

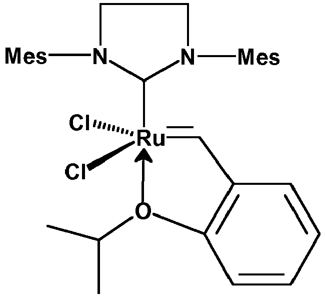

Der Hoveyda-Katalysator wurde von Aldrich unter der Produktnummer 569755 bezogen.

### "Grela-Katalysator"

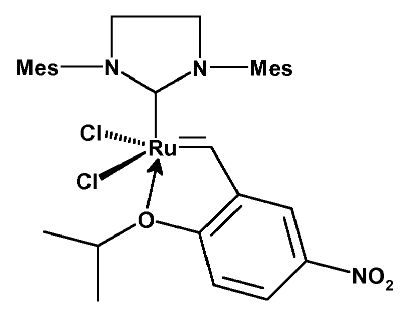

Der Grela-Katalysator wurde nach der in J. Org. Chem. 2004, 69, 6894-6896 publizierten Vorschrift hergestellt.

### "Buchmeiser Nuyken Katalysator"

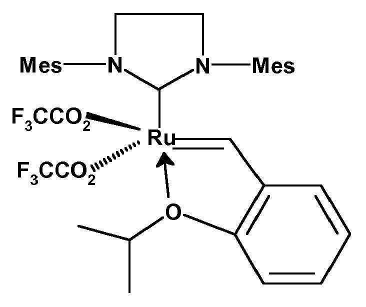

Der Buchmeiser Nuyken Katalysator wurde gemäß Chemistry European Journal 2004, 10(3), 777-785 hergestellt.

### Allgemeine Vorschrift zum Metathese-Abbau von Nitrilkautschuk ("NBR")

Die nachfolgend beschriebenen Abbaureaktionen in den Versuchserien 1 bis 6 wurden unter Einsatz des Nitrilkautschuks Perbunan^{®} NT 3435 der Lanxess Deutschland GmbH durchgeführt. Dieser Nitrilkautschuk wies folgende charakteristischen Kenngrößen auf:

| | |
|---|---|
| Acrylnitrilgehalt: | 35 Gew.% |

Mooney-Viskosität (ML 1+4 @100°C): 34 Mooney-Einheiten

| | |
|---|---|
| Restfeuchte: | 1,8 Gew.% |
| M_{w}: | 240.000 g/mol |
| Mₙ: | 100.000 g/mol |
| PDI (M_{w} / Mₙ): | 2,4 |

Für den Metatheseabbau wurden jeweils 293,3 g Chlorbenzol (nachfolgend "MCB" genannt/ Firma Aldrich) verwendet, das vor Einsatz destilliert und bei Raumtemperatur durch Durchleiten von Argon inertisiert wurde. Hierin wurden 40 g NBR während eines Zeitraums von 10 h bei Raumtemperatur gelöst. Zu der NBR-haltigen Lösung wurde jeweils 0,8 g (2 phr) 1-Hexen gegeben und zur Homogenisierung 30 min gerührt.

Die Durchführung der Metathese-Reaktion erfolgte mit den nachfolgend in Tabelle 1 genannten Mengen an Einsatzstoffen bei Raumtemperatur. Die Ru-Katalysatoren wurden jeweils in 20 g MCB bei Raumtemperatur unter Argon gelöst. Die Zugabe der Katalysatorlösungen zu den NBR-Lösungen in MCB erfolgte sofort nach der Herstellung der Katalysatorlösungen. Nach den in der nachfolgenden Tabelle 2 angegebenen Reaktionszeiten wurden von den Reaktionslösungen jeweils ca. 5 ml entnommen und zur Abstoppung unmittelbar mit ca. 0,2 ml Ethylvinylether versetzt und anschließend mit 5 ml DMAc *(N,N-*Dimethylacetamid) der Firma Aldrich verdünnt. Von diesen Lösungen wurden jeweils 2 ml in ein GPC-Gläschen gegeben und mit DMAc auf 3 ml verdünnt. Vor Durchführung der GPC-Analyse wurden die Lösungen jeweils mittels eines 0,2µm-Spritzenfilters aus Teflon (Chromafil PTFE 0,2 µm; Firma Machery-Nagel) filtriert. Im Anschluss daran erfolgte die GPC-Analyse mit einem Gerät der Firma Fa. Waters (Mod. 510). Für die Analytik wurde eine Kombination von 4 Säulen der Polymer Laboratories verwendet: 1) PLgel 5µm Mixed-C, 300 x 7,5mm, 2) PLgel 5µm Mixed-C, 300 x 7,5mm, 3) PLgel 3 µm Mixed-E, 300 x 7,5mm, und 4) PLgel 3µm Mixed-E, 300 x 7,5mm.

Die Kalibrierung der GPC-Säulen erfolgte mit linearem Poly(methylmethacrylat) der Firma Polymer Standards Services. Als Detektor wurde ein RI-Detektor der Firma Waters (Waters 410) verwendet. Die Analytik wurde mit einer Flussrate von 0,5 mL/min durchgeführt, wobei als Eluent DMAc verwendet wurde. Die Auswertung der GPC-Kurven erfolgte mit Software der Firma Millenium.

Mittels GPC-Analyse wurden folgende charakteristischen Kenngrößen sowohl für den NBR-Originalkautschuk (vor dem Abbau) als auch für die abgebauten Nitrilkautschuke bestimmt:

| | |
|---|---|
| M_{w} [kg/mol]: | Gewichtsmittel der Molmasse |
| Mₙ [kg/mol]: | Zahlenmittel der Molmasse |
| PDI: | Breite der Molmassenverteilung (M_{w}/Mₙ) |

**Tabelle 1:**

| **VersuchsSerie** | **Katalysator** | **Salz** | | **Lösungsmittel** |
|---|---|---|---|---|
| | | **Art** | **Menge [phr]** | |
| 1.01 | Grubbs-(11) | - | - | - |
| 1.02 | Grubbs-(II) | LiBr | 0,023 | DMAC |
| 1.03 | Grubbs-(II) | LiBr | 0,00475 | DMAC |
| 1.04 | Grubbs-(II) | LiBr | 0,5 | - |
| 1.05 | Grubbs-(II) | LiBr | 5,08 | - |
| 1.06 | Grubbs-(II) | CsBr | 12,45 | - |
| 1.07 | Grubbs-(II) | LiCl | 2,55 | - |
| 1.08 | Grubbs-(II) | [Bu₄N]⁺Cl⁻ | 16,25 | - |
| 1.09 | Grubbs-(II) | [Bu₄N]⁺Br⁻ | 18,85 | - |
| 1.10 | Grubbs-(II) | [Bu₄N]⁺J⁻ | 21,60 | - |
| 1.11. | Grubbs-(II) | [Bu4P]⁺Cl⁻ | 17,23 | - |
| 1.12. | Grubbs-(II) | [Bu₄P]⁺Br⁻ | 19,85 | - |
| 1.13 | Grubbs-(II) | [Ph₄P]⁺Br⁻ | 24,53 | - |
| 1.14 | Grubbs-(II) | [Oc₄P]⁺Br⁻ | 32,98 | - |
| 1.15 | Grubbs-(II) | [Bu₄N]⁺SCN⁻ | 17,58 | - |
| 1.16 | Grubbs-(II) | [Oc₄N]⁺Cl⁻ | 2,93 | - |
| 1.17 | Grubbs-(II) | Na₂SO₄ | 8,30 | |
| 1.18 | Grubbs-(II) | LiNO₃ | 4,03 | - |
| 1.19 | Grubbs-(II) | NaNO₂ | 4,03 | |
| 2.01 | Hoveyda | - | - | - |
| 2.02 | Hoveyda | LiBr | 5,08 | - |
| 3.01 | Buchmeiser-Nuyken | - | - | - |
| 3.02 | Buchmeiser-Nuyken | LiBr | 5,08 | - |
| 4.01 | Grela | - | - | - |
| 4.02 | Grela | LiBr | 5,08 | - |
| 5.01 | Hoveyda | - | | |
| 5.02 | Hoveyda | CuCl | 2,32 | |
| 6.01 | Grela | - | - | - |
| 6.02 | Grela | CuCl | 2.32 | - |

### 1.00. Salzzusätze bei Verwendung des Grubbs-II-Katalysators

### 1.01. Vergleichsversuch: Grubbs-II-Katalysator ohne Salzzusatz

| **Grubbs-II-Katalysator (MG: 848,33 g/mol)** | | | **Salzzusatz** | | | | **Temperatur** |
|---|---|---|---|---|---|---|---|
| | | | **Salz** | | **Lösungsmittel** | | |
| Menge [mg] | Menge [phr] | Ru [ppm] | Art | Menge [phr] | Art | Menge [phr] | [°C] |
| 20 | 0,05 | 60 | - | - | - | - | 23 |

| **Analytische Daten** | **Reaktionszeit [min.]** | | | | | |
|---|---|---|---|---|---|---|
| | **0** | **30** | **60** | **185** | **425** | **1300** |
| **M_{w} [kg/mol]** | 240 | 185 | 165 | 77 | 60 | 53 |
| **Mₙ [kg/mol]** | 100 | 84 | 78 | 38 | 35 | 29 |
| **PDI** | 2,4 | 2,13 | 2,11 | 2,03 | 1,71 | 1,82 |

### 1.02. Grubbs-II-Katalysator mit 0,023 phr Lithiumbromid, gelöst in Dimethylacetamid

| **Grubbs-II-Katalysator** | | | **Salzzusatz** | | | | **Temperatur** |
|---|---|---|---|---|---|---|---|
| | | | | **Salz** | | **Lösungsmttel** | |
| Menge [mg] | Menge [phr] | Ru [ppm] | Art | Menge [phr] | Art | Menge [phr] | [°C] |
| 20 | 0,05 | 60 | LiBr | 0,023 | DMAc | 5,0 | 23 |

| **Analytische Daten** | **Reaktionszeit [min.]** | | | | | |
|---|---|---|---|---|---|---|
| | **0** | **30** | **60** | **185** | **425** | **1300** |
| **M_{w} [kg/mol]** | 240 | 140 | 78 | 42 | 23 | 22 |
| **Mₙ [kg/mol]** | 100 | 66 | 40 | 24 | 13 | 14 |
| **PDI** | 2,4 | 2,12 | 1,95 | 1,75 | 1,76 | 1,58 |

### 1.03. Grubbs-II-Katalysator mit 0,00475 phr Lithiumbromid, gelöst in Dimethylacetamid

| **Grubbs-II-Katalysator** | | | **Salzzusatz** | | | | **Temperatur** |
|---|---|---|---|---|---|---|---|
| | | | **Salz** | | **Lösungsmittel** | | |
| Menge [mg] | Menge [phr] | Ru [ppm] | Art | Menge [phr] | Art | Menge [phr] | [°C] |
| 20 | 0,05 | 60 | LiBr | 0,00475 | DMAc | 0,58 | 23 |

| **Analytische Daten** | **Reaktionszeit [min.]** | | | | | |
|---|---|---|---|---|---|---|
| | **0** | **30** | **60** | **185** | **425** | **1300** |
| **M_{w} [kg/mol]** | 240 | 138 | 105 | - | 52 | 47 |
| **Mₙ [kg/mol]** | 100 | 69 | 56 | - | 31 | 28 |
| **PDI** | 2,4 | 2,0 | 1,88 | - | 1,68 | 1,7 |

### 1.04. Grubbs-II-Katalysator mit 0,5 phr Lithiumbromid

| **Grubbs-II-Katalysator** | | | **Salzzusatz** | | | | **Temperatur** |
|---|---|---|---|---|---|---|---|
| | | | **Salz** | | **Lösungsmittel** | | |
| Menge [mg] | Menge [phr] | Ru [ppm] | Art | Menge [phr] | Art | Menge [phr] | [°C] |
| 20 | 0,05 | 60 | LiBr | 0,5 | - | - | 23 |

| **Analytische Daten** | **Reaktionszeit [min.]** | | | | | |
|---|---|---|---|---|---|---|
| | **0** | **30** | **60** | **185** | **425** | **1300** |
| **M_{w} [kg/mol]** | 240 | - | 61 | 40 | 27 | - |
| **Mₙ [kg/mol]** | **100** | **-** | **34** | **25** | **16** | **-** |
| **PDI** | 2,4 | - | 1,7 | 1,6 | 1,7 | - |

### 1.05. Grubbs-II-Katalysator mit 5,08 phr Lithiumbromid

| **Grubbs-II-Katalysator** | | | **Salzzusatz** | | | | **Temperatur** |
|---|---|---|---|---|---|---|---|
| | | | **Salz** | | **Lösungsmittel** | | |
| Menge [mg] | Menge [phr] | Ru [ppm] | Art | Menge [phr] | Art | Menge [phr] | [°C] |
| 20 | 0,05 | 60 | LiBr | 5,08 | - | - | 23 |

| **Analytische Daten** | **Reaktionszeit [min.]** | | | | | |
|---|---|---|---|---|---|---|
| | **0** | **30** | **60** | **185** | **425** | **1300** |
| **M_{W} [kg/mol]** | 240 | 140 | 66 | 41 | 23 | - |
| **Mₙ [kg/mol]** | 100 | 78 | 40 | 24 | 13 | - |
| **PDI** | 2,4 | 2,12 | 1,95 | 1,71 | 1,76 | **-** |

### 1.06. Grubbs-II-Katalysator mit 12,45 phr Cäsiumbromid

| **Grubbs-II-Katalysator** | | | **Salzzusatz** | | | | **Temperatur** |
|---|---|---|---|---|---|---|---|
| | | | **Salz** | | **Lösungsmittel** | | |
| Menge [mg] | Menge [phr] | Ru [ppm] | Art | Menge [phr] | Art | Menge [phr] | [°C] |
| 20 | 0,05 | 60 | CsBr | 12,45 | - | - | 23 |

| **Analytische Daten** | **Reaktionszeit [min.]** | | | | | |
|---|---|---|---|---|---|---|
| | **0** | **30** | **60** | **185** | **425** | **1300** |
| **M_{w} [kg/mol]** | 240 | 144 | 109 | 61 | 52 | - |

| | | | | | | |
|---|---|---|---|---|---|---|
| **Mₙ [kg/mol]** | 100 | 64 | 55 | 35 | 25 | - |
| **PDI** | 2,4 | 2,25 | 1,99 | 1,77 | 2,06 | **-** |

### 1.07. Grubbs-II-Katalysator mit 2,55 phr Lithiumchlorid

| **Grubbs-II-Katalysator** | | | **Salzzusatz** | | | | **Temperatur** |
|---|---|---|---|---|---|---|---|
| | | | **Salz** | | **Lösungsmittel** | | |
| Menge [mg] | Menge [phr] | Ru [ppm] | Art | Menge [phr] | Art | Menge [phr] | [°C] |
| 20 | 0,05 | 60 | LiCl | 2,55 | - | - | 23 |

| **Analytische Daten** | **Reaktionszeit [min.]** | | | | | |
|---|---|---|---|---|---|---|
| | **0** | **30** | **60** | **185** | **425** | **1300** |
| **M_{W} [kg/mol]** | 240 | 170 | 111 | - | 50 | - |
| **Mₙ [kg/mol]** | 100 | 75 | 54 | - | 29 | - |
| **PDI** | 2,4 | 2,3 | 2,1 | - | 1,7 | **-** |

### 1.08. Grubbs-II-Katalysator mit 16,25 phr Tetrabutylammoniumchlorid

| **Grubbs-II-Katalysator** | | | **Salzzusatz** | | | | **Temperatur** |
|---|---|---|---|---|---|---|---|
| | | | **Salz** | | **Lösungsmittel** | | |
| Menge [mg] | Menge [phr] | Ru [ppm] | Art | Menge [phr] | Art | Menge [phr] | [°C] |
| 20 | 0,05 | 60 | Bu₄NCl | 16,25 | - | - | 23 |

| **Analytische Daten** | **Reaktionszeit [min.]** | | | | | |
|---|---|---|---|---|---|---|
| | **0** | **30** | **60** | **185** | **425** | **1300** |
| **M_{W} [kg/mol]** | 240 | - | 91 | 51 | 38 | - |
| **Mₙ [kg/mol]** | 100 | - | 51 | 30 | 23 | - |
| **PDI** | 2,4 | - | 1,8 | 1,7 | 1,7 | - |

### 1.09 Grubbs-II-Katalysator mit 18,85 phr Tetrabutylammoniumbromid

| **Grubbs-II-Katalysator** | | | **Salzzusatz** | | | | **Temperatur** |
|---|---|---|---|---|---|---|---|
| | | | **Salz** | | **Lösungsmittel** | | |
| Menge [mg] | Menge [phr] | Ru [ppm] | Art | Menge [phr] | Art | Menge [phr] | [°C] |
| 20 | 0,05 | 60 | Bu₄NBr | 18,85 | - | - | 23 |

| **Analytische Daten** | **Reaktionszeit [min.]** | | | | | |
|---|---|---|---|---|---|---|
| | **0** | **30** | **60** | **185** | **425** | **1300** |
| **M_{w} [kg/mol]** | 240 | 134 | 78 | 37 | 22 | - |
| **Mₙ [kg/mol]** | 100 | 70 | 45 | 21 | 13 | - |
| **PDI** | 2,4 | 1,91 | 1,73 | 1,75 | 1,75 | **-** |

### 1.10 Grubbs-II-Katalysator mit 21,6 phr Tetrabutylammoniumjodid

| **Grubbs-II-Katalysator** | | | **Salzzusatz** | | | | **Temperatur** |
|---|---|---|---|---|---|---|---|
| | | | **Salz** | | **Lösungsmittel** | | |
| Menge [mg] | Menge [phr] | Ru [ppm] | Art | Menge [phr] | Art | Menge [phr] | [°C] |
| 20 | 0,05 | 60 | Bu₄NI | 21,60 | - | - | 23 |

| **Analytische Daten** | **Reaktionszeit [min.]** | | | | | |
|---|---|---|---|---|---|---|
| | **0** | **30** | **60** | **185** | **425** | **1300** |
| **M_{w} [kg/mol]** | 240 | - | 136 | - | - | - |

| | | | | | | |
|---|---|---|---|---|---|---|
| **Mₙ [kg/mol]** | 100 | - | 64 | - | - | - |
| **PDI** | 2,4 | - | 2,14 | - | - | - |

### 1.11 Grubbs-II-Katalysator mit 17,23 phr Tetrabutylphosphoniumchlorid

| **Grubbs-II-Katalysator** | | | **Salzzusatz** | | | | **Temperatur** |
|---|---|---|---|---|---|---|---|
| | | | **Salz** | | **Lösungsmittel** | | |
| Menge [mg] | Menge [phr] | Ru [ppm] | Art | Menge [phr] | Art | Kenge [phr] | [°C] |
| 20 | 0,05 | 60 | Bu₄PCl | 17,23 | - | - | 23 |

| **Analytische Daten** | **Reaktionszeit [min.]** | | | | | |
|---|---|---|---|---|---|---|
| | **0** | **30** | **60** | **185** | **425** | **1300** |
| **M_{W} [kg/mol]** | 240 | 175 | - | - | - | - |
| **Mₙ [kg/mol]** | 100 | 83 | - | - | - | - |
| **PDI** | 2,4 | 2,11 | - | - | - | - |

### 1.12. Grubbs-II-Katalysator mit 19,85 phr Tetrabutylphosphoniumbromid

| **Grubbs-II-Katalysator** | | | **Salzzusatz** | | | | **Temperatur** |
|---|---|---|---|---|---|---|---|
| | | | **Salz** | | **Lösungsmittel** | | |
| Menge [mg] | Menge [phr] | Ru [ppm] | Art | Menge [phr] | Art | Menge [phr] | [°C] |
| 20 | 0,05 | 60 | Bu₄PBr | 19,85 | - | - | 23 |

| **Analytische Daten** | **Reaktionszeit [min.]** | | | | | |
|---|---|---|---|---|---|---|
| | **0** | **30** | **60** | **185** | **425** | **1300** |
| **M_{w} [kg/mol]** | 240 | 102 | 58 | 34 | 25 | - |
| **Mₙ [kg/mol]** | 100 | 48 | 32 | 20 | 14 | - |
| **PDI** | 2,4 | 2,14 | 1,84 | 1,69 | 1,73 | - |

### 1.13. Grubbs-II-Katalysator mit 24,53 phr Tetraphenylphosphoniumbromid

| **Grubbs-II-Katalysator** | | | **Salzzusatz** | | | | **Temperatur** |
|---|---|---|---|---|---|---|---|
| | | | **Salz** | | **Lösungsmittel** | | |
| Menge [mg] | Menge [phr] | Ru [ppm] | Art | Menge [phr] | Art | Menge [phr] | [°C] |
| 20 | 0,05 | 60 | Ph₄PBr | 24,53 | - | - | 23 |

| **Analytische Daten** | **Reaktionszeit [min.]** | | | | | |
|---|---|---|---|---|---|---|
| | **0** | **30** | **60** | **185** | **425** | **1300** |
| **M_{w} [kg/mol]** | 240 | 183 | 130 | - | - | - |
| **Mₙ [kg/mol]** | 100 | 84 | 66 | - | - | - |
| **PDI** | 2,4 | 2,1 | 2,0 | - | - | - |

### 1.14. Grubbs-II-Katalysator mit 32,98 phr Tetraoctylphosphoniumbromid

| **Grubbs-II-Katalysator** | | | **Salzzusatz** | | | | **Temperatur** |
|---|---|---|---|---|---|---|---|
| | | | **Salz** | | **Lösungsmittel** | | |
| Menge [mg] | Menge [phr] | Ru [ppm] | Art | Menge [phr] | Art | Menge [phr] | [°C] |
| 20 | 0,05 | 60 | Oc₄PBr | 32,98 | - | - | 23 |

| **Analytische Daten** | **Reaktionszeit [min.]** | | | | | |
|---|---|---|---|---|---|---|
| | **0** | **30** | **60** | **185** | **425** | **1300** |
| **M_{w} [kg/mol]** | 240 | 170 | 85 | 44 | 30 | - |

| | | | | | | |
|---|---|---|---|---|---|---|
| **Mₙ [kg/mol]** | 100 | 72 | 49 | 25 | 18 | - |
| **PDI** | 2,4 | 2,37 | 1,73 | 1,78 | 1,65 | **-** |

### 1.15. Grubbs-II-Katalysator mit 17,58 phr Tetrabutylammoniumrhodanid

| **Grubbs-II-Katalysator** | | | **Salzzusatz** | | | | **Temperatur** |
|---|---|---|---|---|---|---|---|
| | | | **Salz** | | **Lösungsmittel** | | |
| Menge [mg] | Menge [phr] | Ru [ppm] | Art | Menge [phr] | Art | Menge [phr] | [°C] |
| 20 | 0,05 | 60 | Bu₄NSCN | 17,58 | - | - | 23 |

| **Analytische Daten** | **Reaktionszeit [min.]** | | | | | |
|---|---|---|---|---|---|---|
| | **0** | **30** | **60** | **185** | **425** | **1300** |
| **M_{w} [kg/mol]** | 240 | - | 159 | - | - | - |
| **Mₙ [kg/mol]** | 100 | - | 71 | - | - | - |
| **PDI** | 2,4 | - | 2,25 | - | - | - |

### 1.16. Grubbs-II-Katalysator mit 2,93 phr Tetraoctylammoniumchlorid

| **Grubbs-II-Katalysator** | | | **Salzzusatz** | | | | **Temperatur** |
|---|---|---|---|---|---|---|---|
| | | | **Salz** | | **Lösungsmittel** | | |
| Menge [mg] | Menge [phr] | Ru [ppm] | Art | Menge [phr] | Art | Menge [phr] | [°C] |
| 20 | 0,05 | 60 | Oc₄NCl | 2,93 | - | - | 23 |

| **Analytische Daten** | **Reaktionszeit [min.]** | | | | | |
|---|---|---|---|---|---|---|
| | **0** | **30** | **60** | **185** | **425** | **1300** |
| **M_{w} [kg/mol]** | 240 | 149 | 112 | 57 | 40 | - |
| **Mₙ [kg/mol]** | 100 | 69 | 56 | 35 | 22 | - |
| **PDI** | 2,4 | 2,2 | 2,0 | 1,7 | 1,8 | - |

### 1.17. Grubbs-II-Katalysator mit 8,3 phr Natriumsulfat

| **Grubbs-II-Katalysator** | | | **Salzzusatz** | | | | **Temperatur** |
|---|---|---|---|---|---|---|---|
| | | | **Salz** | | **Lösungsmittel** | | |
| Menge [mg] | Menge [phr] | Ru [ppm] | Art | Menge [phr] | Art | Menge [phr] | [°C] |
| 20 | 0,05 | 60 | Na₂SO₄ | 8,30 | - | - | 23 |

| **Analytische Daten** | **Reaktionszeit [min.]** | | | | | |
|---|---|---|---|---|---|---|
| | **0** | **30** | **60** | **185** | **425** | **1300** |
| **M_{W} [kg/mol]** | 240 | 110 | 78 | 55 | 47 | - |
| **Mₙ [kg/mol]** | 100 | 55 | 44 | 30 | 26 | - |
| **PDI** | 2,4 | 2,0 | 1,8 | 1,8 | 1,8 | - |

### 1.18. Grubbs-II-Katalysator mit 4,03 phr Lithiumnitrat

| **Grubbs-II-Katalysator** | | | **Salzzusatz** | | | | **Temperatur** |
|---|---|---|---|---|---|---|---|
| | | | | **Salz** | | **Lösungsmittel** | |
| Menge [mg] | Menge [ohr] | Ru [ppm] | Art | Menge [phr] | Art | Menge [phr] | [°C] |
| 20 | 0,05 | 60 | LiNO₃ | 4,03 | - | - | 23 |

| **Analytische Daten** | **Reaktionszeit [min.]** | | | | | | |
|---|---|---|---|---|---|---|---|
| | **0** | **30** | **60** | **185** | **425** | **1300** | |
| **M_{w} [kg/mol]** | 240 | 182 | 106 | 66 | 57 | - | |
| **Mₙ [kg/mol]** | 100 | 75 | 53 | 37 | 32 | - | |
| **PDI** | 2,4 | 2,43 | 2,00 | 1,78 | 1,78 | - | |

### 1.19. Grubbs-II-Katalysator mit 4,03 phr Natriumnitrit

| **Grubbs-II-Katalysator** | | | **Salzzusatz** | | | | **Temperatur** |
|---|---|---|---|---|---|---|---|
| | | | **Salz** | | **Lösungsmittel** | | |
| Menge [mg] | Menge [phr] | Ru [ppm] | Art | Menge [phr] | Art | Menge [phr] | [°C] |
| 20 | 0,05 | 60 | NaNO₂ | 4,03 | - | - | 23 |

| **Analytische Daten** | **Reaktionszeit [min.]** | | | | | |
|---|---|---|---|---|---|---|
| | **0** | **30** | **60** | **185** | **425** | **1300** |
| **M_{w} [kg/mol]** | 240 | 184 | 133 | - | 56 | - |
| **Mₙ [kg/mol]** | 100 | 77 | 63 | - | 32 | - |
| **PDI** | 2,4 | 2,38 | 2,11 | - | 1,75 | - |

Durch die Salzzusätze in den Versuchsserien 1.02. bis 1.19. wurden die Molekulargewichte M_{w} und Mₙ gegenüber dem Vergleichsversuch ohne Salzzusatz (Versuchsserie 1.01.) deutlich reduziert. Somit wird durch die Salzzusätze die Effizienz des Grubbs-II-Katalysators verbessert. Außerdem waren die in den Versuchsserien 1.02. bis 1.19. erhaltenen abgebauten Nitrilkautschuke gelfrei.

### Salzzusätze bei Verwendung des Hoveyda-Katalysators

### 2.01. Vergleichsversuch: Hoveyda-Katalysator ohne Salzzusatz

| **Hoveyda-Katalysator (MG: 626,14 g/mol)** | | | **Salzzusatz** | | | | **Temperatur** |
|---|---|---|---|---|---|---|---|
| | | | **Salz** | | **Lösungsmittel** | | |
| Menge [mg] | Menge [phr] | Ru [ppm] | Art | Menge [phr] | Art | Menge [phr] | [°C] |
| 8 | 0,02 | 32,3 | - | - | - | - | 23 |

| **Analytische Daten** | **Reaktionszeit [min.]** | | | | | |
|---|---|---|---|---|---|---|
| | **0** | **30** | **60** | **185** | **425** | **1300** |
| **M_{w} [kg/mol]** | 240 | 85 | 60 | 58 | 55 | - |
| **Mₙ [kg/mol]** | 100 | 50 | 32 | 31 | 31 | - |
| **PDI** | 2,4 | 1,7 | 1,9 | 1,8 | 1,7 | - |

### 2.02. Hoveyda-Katalysator mit 5,08 ppm Lithiumbromid

| **Hoveyda-Katalysator (MG: 626,14 g/mol)** | | | **Salzzusatz** | | | | **Temperatur** |
|---|---|---|---|---|---|---|---|
| | | | **Salz** | | **Lösungsmittel** | | |
| Menge [mg] | Menge [phr] | Ru [ppm] | Art | Menge [phr] | Art | Menge [phr] | [°C] |
| 8 | 0,02 | 32,3 | LiBr | 5,08 | - | - | 23 |

| **Analytische Daten** | **Reaktionszeit [min.]** | | | | | |
|---|---|---|---|---|---|---|
| | **0** | **30** | **60** | **185** | **425** | **1300** |
| **M_{w} [kg/mol]** | 240 | 60 | 36 | 28 | 25 | - |
| **Mₙ [Kg/mol]** | 100 | 26 | 20 | 15 | 15 | - |
| **PDI** | 2,4 | 2,3 | 1,8 | 1,9 | 1,7 | **-** |

Durch den Salzzusatz in Versuchsserie 2.02. wurden die Molgewichte M_{w} und Mₙ gegenüber den Vergleichsversuchen ohne Salzzusatz (Versuchsserie 2.01.) deutlich reduziert. Somit wurde durch den Salzzusatz die Effizienz des Hoveyda-Katalysators verbessert. Außerdem waren die in der Versuchsserie 2.02. erhaltenen abgebauten Nitrilkautschuke gelfrei.

### 3.00. Salzzusätze bei Verwendung des Buchmeiser-Nuyken-Katalysators

### 3.01. Vergleichsversuch: Buchmeiser-Nuyken-Katalysator ohne Salzzusatz

| **Buchmeiser-Nuyken-Katalysator (MG: 781,14 g/mol)** | | | **Salzzusatz** | | | | **Temperatur** |
|---|---|---|---|---|---|---|---|
| | | | **Salz** | | **Lösungsmittel** | | |
| Menge | Menge | Ru | Art | Menge | Art | Menge | |
| [mg] | [phr] | [ppm] | | [phr] | | [phr] | [°C] |
| 36,8 | 0,0092 | 119 | - | - | - | - | 23 |

| **Analytische Daten** | **Reaktionszeit [min.]** | | | | | |
|---|---|---|---|---|---|---|
| | **0** | **30** | **60** | **185** | **425** | **1300** |
| **M_{w} [kg/mol]** | 240 | 221 | 219 | 185 | 170 | - |
| **Mₙ [kg/mol]** | 100 | 79 | 78 | 62 | 58 | - |
| **PDI** | 2,4 | 2,8 | 2,8 | 2,9 | 2,9 | - |

### 3.02. Buchmeiser-Nuyken-Katalysator mit 5,08 phr Lithiumbromid

| **Buchmeiser-Nuyken-Katalysator** | | | **Salzzusatz** | | | | **Temperatur** |
|---|---|---|---|---|---|---|---|
| | | | **Salz** | | **Lösungsmittel** | | |
| Menge [mg] | Menge [phr] | Ru [ppm] | Art | Menge [phr] | Art | Menge [phr] | [°C] |
| 36,8 | 0,0092 | 119 | LiBr | 5,08 | - | - | 23 |

| **Analytische Daten** | **Reaktionszeit [min.]** | | | | | |
|---|---|---|---|---|---|---|
| | **0** | **30** | **60** | **185** | **425** | **1300** |
| **M_{w} [kg/mol]** | 240 | 117 | 43 | 23 | 17 | - |
| **Mₙ** [**kg**/**mol**] | 100 | 50 | 24 | 14 | 10 | - |
| **PDI** | 2,4 | 2,3 | 1,8 | 1,6 | 1,6 | - |

Durch den Salzzusatz in Versuchsserie 3.02. wurden die Molekulargewichte M_{w} und Mₙ gegenüber den Vergleichsversuchen ohne Salzzusatz (Versuchsserie 3.01.) deutlich reduziert. Somit wurde durch den Salzzusatz die Effizienz des Buchmeiser-Nuyken-Katalysators verbessert. Außerdem waren die in der Versuchsserie 3.02. erhaltenen abgebauten Nitrilkautschuke gelfrei.

### 4.00. Salzzusätze bei Verwendung des Grela-Katalysators

### 4.01. Vergleichsversuch: Grela-Katalysator ohne Salzzusatz

| **Grela-Katalysator (MG: 671,13 g/mol)** | | | **Salzzusatz** | | | | **Temperatur** |
|---|---|---|---|---|---|---|---|
| | | | **Salz** | | **Lösungsmittel** | | |
| Menge [mg] | Menge [phr] | Ru [ppm] | Art | Menge [phr] | Art | Menge [phr] | [°C] |
| 15,8 | 0,0395 | 23,8 | - | - | - | - | 23 |

| **Analytische Daten** | **Reaktionszeit [min.]** | | | | | |
|---|---|---|---|---|---|---|
| | **0** | **30** | **60** | **185** | **425** | **1300** |
| **M_{w} [kg/mol]** | 240 | 37 | 35 | 33 | 31 | - |
| **Mₙ** [**kg**/**mol**] | 100 | 23 | 22 | 22 | 20 | - |
| **PDI** | 2,4 | 1,61 | 1,59 | 1,50 | 1,55 | - |

### 4.02. Grela-Katalysator mit Zusatz von 5,08 phr Lithiumbromid

| **Grela-Katalysator (MG: 671,13 g/mol)** | | | **Salzzusatz** | | | | **Temperatur** |
|---|---|---|---|---|---|---|---|
| | | | **Salz** | | **Lösungsmittel** | | |
| Menge [mg] | Menge [phr] | Ru [ppm] | Art | Menge [phr] | Art | Menge [phr] | [°C] |
| 15,8 | 0,0395 | 23,8 | LiBr | 5,08 | - | - | 23 |

| **Analytische Daten** | **Reaktionszeit [min.]** | | | | | |
|---|---|---|---|---|---|---|
| | **0** | **30** | **60** | **185** | **425** | **1300** |
| **M_{w} [kg/mol]** | 240 | 33 | 31 | 29 | 24 | - |
| **Mₙ** [**kg**/**mol**] | 100 | 21 | 20 | 19 | 16 | - |
| **PDI** | 2,4 | 1,57 | 1,55 | 1,53 | 1,50 | - |

Durch den Salzzusatz in Versuchsserie 4.02. wurden die Molgewichte M_{w} und Mₙ gegenüber den Vergleichsversuchen ohne Salzzusatz (Versuchsserie 4.01.) reduziert. Somit wurde durch den Salzzusatz die Effizienz des Grela-Katalysators verbessert. Außerdem waren die in der Versuchsserie 4.02. erhaltenen abgebauten Nitrilkautschuke gelfrei.

### 5.0 Vergleichsversuche: Hoveyda-Katalysator ohne bzw. mit Zusatz von 2,32 phr CuCl

### 5.01 Hoveyda-Katalysator ohne Zusatz von CuCl

| **Hoveyda-Katalysator (MG: 626,14 g/mol)** | | | **Salzzusatz** | | | | **Temperatur** |
|---|---|---|---|---|---|---|---|
| Menge [mg] | Menge [phr] | Ru [ppm] | Art | Menge [phr] | Art | Menge [phr] | [°C] |
| 14,7 | 0,0368 | 2,37 | - | - | - | - | 23 |

| **Analytische Daten** | **Reaktionszeit [min.]** | | | | | |
|---|---|---|---|---|---|---|
| | **0** | **30** | **60** | **185** | **425** | **1300** |
| **M_{w}** [**kg**/**mol**] | 240 | 42 | 42 | 41 | 39 | - |
| **Mₙ** [**kg**/**mol**] | 100 | 28 | 24 | 23 | 23 | - |
| **PDI** | 2,4 | 1,5 | 1,75 | 1,78 | 1,69 | - |

### 5.02 Hoveyda-Katalysator mit Zusatz von 2,32 phr Kupfer-I-Chlorid

| **Hoveyda-Katalysator (MG: 626,14 g/mol)** | | | **Salzzusatz** | | | | **Temperatur** |
|---|---|---|---|---|---|---|---|
| | | | **Salz** | | **Lösungsmittel** | | |
| Menge [mg] | Menge [phr] | Ru [ppm] | Art | Menge [phr] | Art | Menge [phr] | [°C] |
| 14,7 | 0,0368 | 2,37 | CuCl | 2,32 | - | - | 23 |

| **Analytische Daten** | **Reaktionszeit [min.]** | | | | | |
|---|---|---|---|---|---|---|
| | **0** | **30** | **60** | **185** | **425** | **1300** |
| **M_{w} [kg/mol]** | 240 | 104 | 92 | 90 | 93 | - |
| **Mₙ [kg/mol]** | 100 | 58 | 54 | 53 | 54 | - |
| **PDI** | 2,4 | 1,79 | 1,70 | 1,69 | 1,72 | - |

Der Vergleich der Versuchsserien 5.01 und 5.02 zeigt, dass der Metathese-Abbau unter Einsatz des Hoveyda-Katalysators durch den Zusatz von CuCl sogar noch schlechter läuft, als wenn ganz auf einen Zusatz verzichtet wird. Sowohl das mittlere Molekulargewicht M_{w} als auch Mₙ liegen bei Zusatz des CuCl nach gleichen Reaktionszeiten mehr als doppelt so hoch verglichen mit den Werten von M_{w} und Mₙ, die ohne Salzzusatz erreicht werden.

### 6.0 Vergleichsversuche: Grela-Katalysator ohne bzw. mit Zusatz von 2,32 phr CuCl

### 6.01 Grela Katalysator ohne Salzzusatz

| **Grela-Katalysator (MG: 671,13 g/mol)** | | | **Salzzusatz** | | | | **Temperatur** |
|---|---|---|---|---|---|---|---|
| | | | **Salz** | | **Lösungsmittel** | | |
| Menge [mg] | Menge [phr] | Ru [ppm] | Art | Menge [phr] | Art | Menge [phr] | [°C] |
| 15,8 | 0,0395 | 2,38 | - | - | - | - | 23 |

| **Analytische Daten** | **Reaktionszeit [min.]** | | | | | |
|---|---|---|---|---|---|---|
| | **0** | **30** | **60** | **185** | **425** | **1300** |
| **M_{w} [kg/mol]** | 240 | 37 | 35 | 33 | 31 | - |
| **Mₙ [kg/mol]** | 100 | 23 | 22 | 22 | 20 | - |
| **PDI** | 2,4 | 1,61 | 1,59 | 1,50 | 1,55 | - |

### 6.02 Grela-Katalysator mit Zusatz von 2,32 phr CuCl

| **Grela-Katalysator (MG: 671,13 g/mol)** | | | **Salzzusatz** | | | | **Temperatur** |
|---|---|---|---|---|---|---|---|
| | | | **Salz** | | **Lösungsmittel** | | |
| Menge [mg] | Menge [phr] | Ru [ppm] | Art | Menge [phr] | Art | Menge [phr] | [°C] |
| 15,8 | 0,0395 | 2,38 | CuCl | 2,32 | - | - | 23 |

| **Analytische Daten** | **Reaktionszeit [min.]** | | | | | |
|---|---|---|---|---|---|---|
| | **0** | **30** | **60** | **185** | **425** | **1300** |
| **M_{w}** [**kg**/**mol**] | 240 | 101 | 96 | 94 | 100 | - |
| **Mₙ [kg/mol]** | 100 | 58 | 53 | 55 | 58 | - |
| **PDI** | 2,4 | 1,74 | 1,81 | 1,71 | 1,72 | - |

Der Vergleich der Versuchsserien 7.01 und 7.02 zeigt, dass der Metathese-Abbau unter Einsatz des Grela-Katalysators durch den Zusatz von CuCl sogar noch schlechter läuft, als wenn ganz auf einen Zusatz verzichtet wird. Sowohl das mittlere Molekulargewicht M_{w} als auch Mₙ liegen bei Zusatz des CuCl nach gleichen Reaktionszeiten mehr als doppelt so hoch verglichen mit den Werten von M_{w} und Mₙ, die ohne Salzzusatz erreicht werden.

### Beispiel 7: Einsatz von LiBr zur Ringschlussmetathese von Diethyldiallylmalonat

Die Ringschlussmetathese von Diethyldiallylmalonat wurde einmal ohne und einmal mit 1 mg LiBr (Beispiele 7.01 und 7.02) sowie einmal ohne und einmal mit 1 mg CsBr (Beispiele 8.01 und 8.02) durchgeführt.

Für die Durchführung der Versuche wurden jeweils 10 mg Grubbs II-Katalysator in einem NMR-Röhrchen vorgelegt. Bei den erfindungsgemäßen Beispielen, die mit Zusätzen von LiBr (Beispiel 7.02) bzw. CsBr (Beispiel 8.02) durchgeführt wurden, wurden zusätzlich zum Grubbs-II-Katalysator (10 mg) 1 mg LiBr bzw. 1 mg CsBr in das NMR-Röhrchen eingewogen. Danach wurden bei Raumtemperatur mit einer Spritze zuerst 0,3 ml Chlorbenzol und dann 0,2 ml CDCl₃ zugegeben. Der Inhalt des NMR-Röhrchens wurde durch Schütteln durchmischt. Nach jeweils 2 min. wurden mit einer Spritze 0,15 ml Diethyldiallylmalonat zugegeben. Die Reaktionsumsätze wurden mittels ¹HNMR-Spektroskopie bei Raumtemperatur bestimmt.

Die nachfolgende Tabelle zeigt deutlich die beschleunigende Wirkung des Zusatzes von LiBr auf die Ringschlussmetathese des Diethyldiallylmalonats.

**Beispiel 8: Einsatz von CsBr zur Ringschlussmetathese von Diethyldiallylmalonat**

| | **Ohne Salzzusatz (7.01)** | **Mit Salzzusatz (7.02) 1 mg LiBr** |
|---|---|---|
| **Zeit** | **Umsatz** | **Umsatz** |
| [min.] | [%] | [%] |
| 0 | 0 | 0 |
| 30 | 21,3 | 55,4 |
| 60 | 57,7 | 100 |

Die Durchführung erfolgte analog zu Beispiel 7. Anstelle von 1 mg LiBr wurde jedoch 1 mg CsBr eingesetzt.

| | **Ohne Salzzusatz (8.01)** | **Mit Salzzusatz (8.02) 1 mg CsBr** |
|---|---|---|
| **Zeit** [min.] | **Umsatz** [%] | **Umsatz** [%] |
| 0 | 0 | 0 |
| 15 | 13,4 | 16,5 |
| 30 | 25,3 | 40,3 |
| 60 | 46,5 | 68,9 |
| 90 | 71,9 | 84,7 |
| 150 | 96,2 | 100 |

## Patentansprüche

1. Verfahren zur Metathese von Nitrilkautschuk unter Verwendung eines Katalysator-Systems umfassend einen Metathese-Katalysator und ein oder mehrere Salze der allgemeinen Formel (I)
**Kⁿ⁺ A^{z-}** (I)
worin
K Lithium, Natrium, Kalium, Rubidium, Cäsium, Francium, Beryllium, Magnesium, Calcium, Strontium, Barium, Aluminium, Gallium, Indium, Thallium, Germanium, Zinn, Blei, Arsen, Antimon, Bismut, Scandium, Yttrium, Titan, Zirkonium, Hafnium, Vanadin, Niob, Tantal, Chrom, Molybdän, Wolfram, Mangan, Technetium, Rhenium, Eisen, Ruthenium, Osmium, Cobalt, Rhodium, Iridium, Nickel, Palladium, Platin, Silber, Gold, Zink, Cadmium, Quecksilber, sowie alle Elemente aus den Gruppen der Seltenen Erden insbesondere Cer, Praseodym und Neodym oder die Elemente der Actiniden oder Tetralkyl-Ammonium-, Tetraaryl-Ammonium-, Hydroxylammonium-, Tetraalkyl-Phosphonium-, Tetraaryl-Phosphonium-, Sulfonium-, Anilinium-, Pyridinium-, Imidazolonium-, Guanidinium- und Hydrazinium-Kation sowie kationische Ethylendiamin-Derivate und
A ein Anion aus der Gruppe der Halogenide, der Pseudohalogenide, der komplexen Anionen, der Anionen organischer Säuren, der aliphatischen oder aromatischen Sulfonate, der aliphatischen oder aromatischen Sulfate, der Phosphonate, der Phosphate, der Thiophosphate und der Xanthogenate darstellt,
wobei
n 1, 2 oder 3 ist und
z 1, 2 oder 3 ist
wobei der Metathese-Katalysator ausgewählt ist aus der Gruppe bestehend aus
(i) Verbindungen der allgemeinen Formel (A), 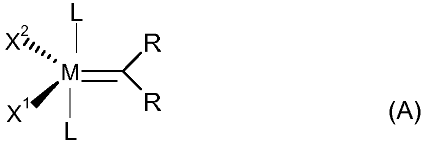 worin
M Osmium oder Ruthenium bedeutet,
R gleich oder verschieden sind und einen Alkyl-, bevorzugt C₁-C₃₀-Alkyl-, Cycloalkyl-, bevorzugt C₃-C₂₀-Cycloalkyl-, Alkenyl-, bevorzugt C₂-C₂₀-Alkenyl-, Alkinyl-, bevorzugt C₂-C₂₀-Alkinyl-, Aryl-, bevorzugt C₆-C₂₄-Aryl-, Carboxylat-, bevorzugt C₁-C₂₀-Carboxylat-, Alkoxy-, bevorzugt C₁-C₂₀-Alkoxy-, Alkenyloxy-, bevorzugt C₂-C₂₀-Alkenyloxy-, Alkinyloxy-, bevorzugt C₂-C₂₀-Alkinyloxy-, Aryloxy-, bevorzugt C₆-C₂₄-Aryloxy, Alkoxycarbonyl-, bevorzugt C₂-C₂₀-Alkoxycarbonyl-, Alkylamino-, bevorzugt C₁-C₃₀-Alkylamino, Alkylthio-, bevorzugt C₁-C₃₀-Alkylthio, Arylthio-, bevorzugt C₆-C₂₄-Arylthio, Alkylsulfonyl-, bevorzugt C₁-C₂₀-Alkylsulfonyl, oder Alkylsulfinyl, bevorzugt C₁-C₂₀-Alkylsulfinyl-Rest darstellen, die alle jeweils optional durch ein oder mehrere Alkyl-, Halogen-, Alkoxy-, Aryl- oder Heteroaryl-Reste substituiert sein können,
X¹ und X² gleich oder verschieden sind und zwei Liganden, bevorzugt anionische Liganden, darstellen, und
L gleiche oder verschiedene Liganden, bevorzugt neutrale Elektronen-Donoren darstellen,
(ii) Verbindungen der allgemeinen Formel (B) 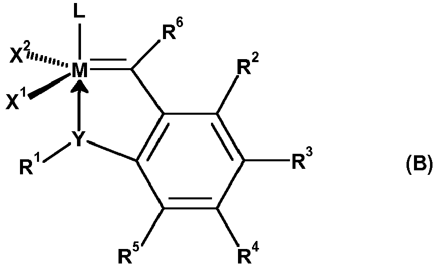 worin
M Ruthenium oder Osmium bedeutet,
Y Sauerstoff (O), Schwefel (S), einen Rest N-R¹ oder einen Rest P-R¹ bedeutet,
X¹ und X² gleiche oder verschiedene Liganden sind,
R¹ einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest darstellt, die alle jeweils optional durch ein oder mehrere Alkyl-, Halogen-, Alkoxy-, Aryl- oder Heteroaryl-Reste substituiert sein können,
R², R³, R⁴ und R⁵ gleich oder verschieden sind und Wasserstoff, organische oder anorganische Reste darstellen,
R⁶ Wasserstoff, einen Alkyl-, Alkenyl-, Alkinyl- oder einen Aryl-Rest bedeutet und
L ein Ligand ist, der die gleichen Bedeutungen besitzt, wie der Ligand L in Formel (A),
(iii) Verbindungen der allgemeinen Formel (B1) 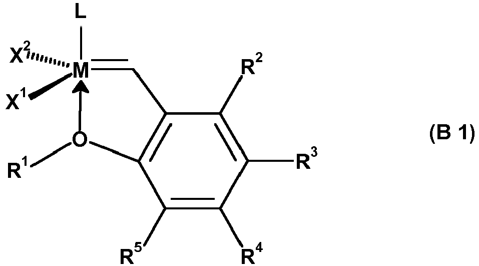 worin
M, L, K¹, X², R¹, R², R³, R⁴ und R⁵ die für die allgemeine Formel (B) genannten Bedeutungen besitzen,
(iv) Verbindungen der allgemeinen Formel (B2) 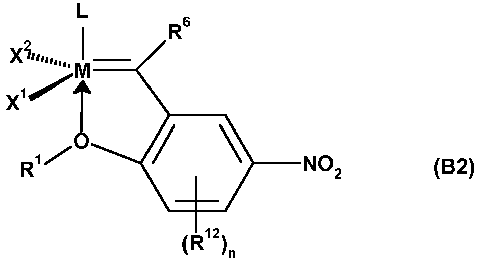 worin
M, L, X¹, X², R¹ und R⁶ die für die allgemeine Formel (B) genannten Bedeutungen haben,
R¹² gleich oder verschieden sind und die für die Reste R², R³, R⁴ und R⁵ in der allgemeinen Formel (B) genannten Bedeutungen, ausgenommen Wasserstoff, besitzen und
n gleich 0, 1, 2 oder 3 ist,
(v) Verbindungen der allgemeinen Formel (B3) 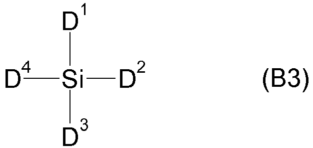 worin D¹, D², D³ und D⁴ jeweils eine Struktur der nachfolgend dargestellten allgemeinen Formel (XVI) aufweisen, die über die Methylengruppe an das Silicium der Formel (B3) angebunden ist und 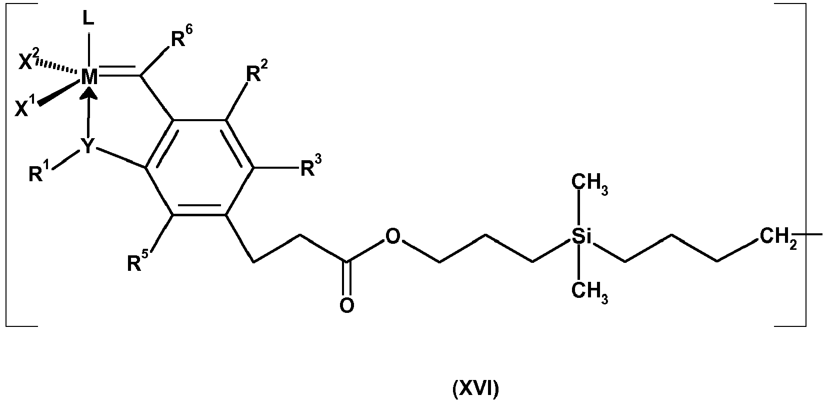 worin
M, L, X¹, X², R¹, R², R³, R⁵ und R⁶ die für die allgemeine Formel (B) genannten Bedeutungen besitzen,
(vi) Verbindungen der allgemeinen Formel (C) 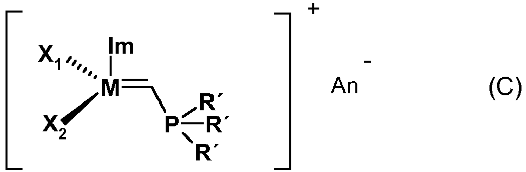 worin
M Ruthenium oder Osmium bedeutet,
X¹ und X² gleich oder verschieden sind und anionische Liganden darstellen,
R' gleich oder verschieden sind und organische Reste darstellen,
Im einen gegebenenfalls substituierten Imidazolidinrest darstellt und
An ein Anion darstellt,
(vii) Verbindungen der allgemeinen Formel (D) 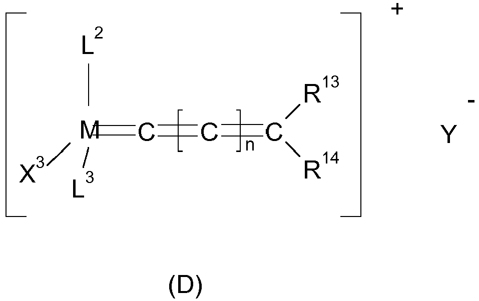 worin
M Ruthenium oder Osmium bedeutet,
R¹³ und R¹⁴ unabhängig voneinander Wasserstoff, C₁-C₂₀-Alkyl, C₂-C₂₀-Alkenyl, C₂-C₂₀ Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylthio, C₁-C₂₀ -Alkylsulfonyl oder C₁-C₂₀ Alkylsulfinyl bedeuten,
X³ ein anionischer Ligand ist,
L² ein neutraler π-gebundener Ligand ist, unabhängig davon, ob mono- oder polycyclisch,
L³ ein Ligand aus der Gruppe der Phosphine, sulfonierten Phosphine, fluorierten Phosphine, funktionalisierten Phosphine mit bis zu drei Aminoalkyl-, Ammoniumalkyl, Alkoxyalkyl, Alkoxycarbonylalkyl, Hydrocarbonylalkyl-, Hydroxyalkyl- oder Ketoalkyl-Gruppen, Phosphite, Phosphinite, Phosphonite, Phosphinamine, Arsine, Stibene, Ether, Amine, Amides, Imine, Sulfoxide, Thioether und Pyridine darstellt,
Y⁻ ein nicht-koordinierendes Anion ist und
n 0, 1, 2, 3, 4 oder 5 ist,
(viii) Verbindungen der allgemeinen Formel (E) 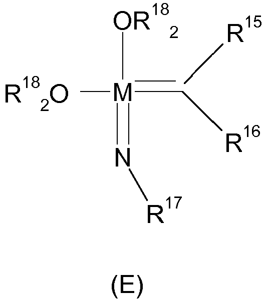 worin
M² Molybdän oder Wolfram ist,
R¹⁵ und R¹⁶ gleich oder verschieden sind und Wasserstoff, C₁-C₂₀-Alkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C20-Alkylthio, C₁-C₂₀-Alkylsulfonyl oder C₁-C₂₀ Alkylsulfinyl bedeuten,
R¹⁷ and R¹⁸ gleich oder verschieden sind und einen substituierten oder einen halogensubstituierten C₁-C₂₀-Alkyl, C₆-C₂₄-Aryl, C₆-C₃₀-Aralkyl-Rest oder Silikon-enthaltende Analoga davon darstellen,
(ix) Verbindungen der Formel (F) 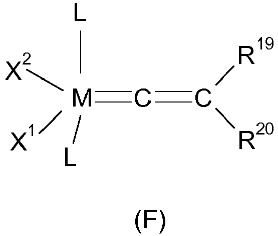 worin
M Ruthenium oder Osmium bedeutet,
X¹ und X² gleich oder verschieden sind und anionische Liganden darstellen, die alle Bedeutungen von X¹ und X² in der allgemeinen Formeln (A) und (B) annehmen können,
L gleiche oder verschiedene Liganden darstellt, die alle Bedeutungen von L in den allgemeinen Formeln (A) und (B) annehmen können und
R¹⁹ and R²⁰ gleich oder verschieden sind und Wasserstoff oder substituiertes oder unsubstituiertes Alkyl bedeuten.

2. Verfahren gemäß Anspruch 1, wobei das oder die Kationen K in der allgemeinen Formel (I) Benzyldodecyldimethylammonium-, Didecyldimethylammonium-, Dimethylanilinium-, N-Alkyl-N,N-bis-(2-hydroxyalkyl)-N-benzylammonium-, N,N.N-Triethylbenzolmethanaminium, O-Methyluronium-, S-Methyl-thiuronium-, Pyridinium-, Tetrabutylammonium-, Tetramethyluronium-, Tetracetylammonium-, Tetrabutylphosphonium-, Tetraphenylphosphonium-, Diphenylguanidinium-, Di-o-tolyl-guanidinium-, Butyldiphenylsulfonium- oder Tributylsulfonium sind.

3. Verfahren gemäß Anspruch 1, wobei das oder die Anionen in der allgemeinen Formel (I) Fluorid, Chlorid, Bromid, Jodid, Trijodid, Azid, Cyanid, Thiocyanid, Thiocyanat, Interhalogenide, Sulfit, Sulfat, Dithionit, Thiosulfat, Carbonat, Hydrogencarbonat, Perthiocarbonat, Nitrit, Nitrat, Perchlorat, Tetrafluoroborat, Tetrafluoroaluminat, Hexafluorophosphat, Hexafluoroarsenat, Hexafluoroantimonat, Hexachloroantimonat, Anionen organischer Carbonsäuren mit 1 bis 20 C-Atomen, die gesättigt oder ein- oder mehrfach ungesättigt sind, inbesondere Formiat, Acetat, Propionat, Butyrat, Oleat, Palmitat, Stearat, Versatat, Acrylat, Methacrylat, Crotonat, Benzoat, Naphthalincarbonat, Oxalat, Salicylat, Terephthalat, Fumarat, Maleinat, Itaconat und Abietat, Anthrachinon-2-sulfonat, Benzolsulfonat, Benzol-1,3-disulfonat, Decan-1-sulfonat, Hexadecan-1-sulfonat, Hydrochinonmonosulfonat, Methyl-4-toluolsulfonat, Naphthalin-1-sulfonat, Naphthalin-1,5-disulfonat, Tosylat, Mesylat, Dodecylsulfat, Alkylbenzolsulfate, Vinylphosphonat, Ethylphosphonat, Butylphosphonat, Cetylphosphonat, Dibutylphosphat, Dioctylphosphat, Dibutyldithiophosphat, Dioctylthiophosphat, Ethylxanthogenat, Butylxanthogenat, Phenylxanthogenat, Benzylxanthogenat, Dimethyldithiocarbamat, Diethyldithiocarbamat, Diutyldithocarbamat, Dibenzyldithiocarbamat, Tetrakis[pentafluorphenyl]borat, Pentakis-[pentafluorphenyl]phosphat, Tetrakis[3,5-trifluormethylphenyl]borat, Pentakis[3,5-trifluormethylphenyl]phosphat oder Pentakis[pentafluorphenyl]cyclohexadienylanion bedeuten.

4. Verfahren gemäß Anspruch 1, wobei der Katalysator eine Verbindung der allgemeinen Formel (A) ist und X¹ und X² in der allgemeinen Formel (A) gleich oder verschieden sind und Wasserstoff, Halogen, Pseudohalogen, geradkettige oder verzweigte C₁-C₃₀-Alkyl, C₆-C₂₄-Aryl, C₁-C₂₀-Alkoxy, C₆-C₂₄-Aryloxy, C₃-C₂₀-Alkyldiketonat, C₆-C₂₄-Aryldiketonat, C₁-C₂₀-Carboxylat, C₁-C₂₀-Alkylsulfonat, C₆-C₂₄-Arylsulfonat, C₁-C₂₀-Alkylthiol, C₆-C₂₄-Arylthiol, C₁-C₂₀-Alkylsulfonyl oder C₁-C₂₀-Alkylsulfinyl-Reste bedeuten.

5. Verfahren gemäß Anspruch 1, wobei der Katalysator eine Verbindung der allgemeinen Formel (A) ist und X und X¹ in der allgemeinen Formel (A) gleich oder verschieden sind und Halogen, insbesondere Fluor, Chlor, Brom oder Jod, Benzoat, C₁-C₅-Carboxylat, C₁-C₅-Alkyl, Phenoxy, C₁-C₅-Alkoxy, C₁-C₅-Alkylthiol, C₆-C₂₄-Arylthiol, C₆-C₂₄-Aryl oder C₁-C₅-Alkylsulfonat bedeuten.

6. Verfahren gemäß Anspruch 1, wobei der Katalysator eine Verbindung der allgemeinen Formel (A) ist und X und X¹ in der allgemeinen Formel (A) identisch sind und Halogen, insbesondere Chlor, CF₃COO, CH₃COO, CFH₂COO, (CH₃)₃CO, (CF₃)₂(CH₃)CO, (CF₃)(CH₃)₂CO, PhO (Phenoxy), MeO (Methoxy), EtO (Ethoxy), Tosylat (p-CH₃-C₆H₄-SO₃), Mesylat (2,4,6-Trimethylphenyl) oder CF₃SO₃ (Trifluormethansulfonat) bedeuten.

7. Verfahren gemäß Anspruch 1, wobei der Katalysator eine Verbindung der allgemeinen Formel (A) ist und die beiden Liganden L in der allgemeinen Formel (A) unabhängig voneinander einen Phosphin-, sulfonierten Phosphin-, Phosphat-, Phosphinit-, Phosphonit-, Arsin-, Stibin-, Ether-, Amin-, Amid-, Sulfoxid-, Carboxyl-, Nitrosyl-, Pyridin-, Thioether- oder einen Imidazolidin("Im")-Liganden bedeuten.

8. Verfahren gemäß Anspruch 7, wobei der Katalysator eine Verbindung der allgemeinen Formel (A) ist und der Imidazolidinrest (Im) eine Struktur der allgemeinen Formeln (IIa) oder (IIb) auf weist, 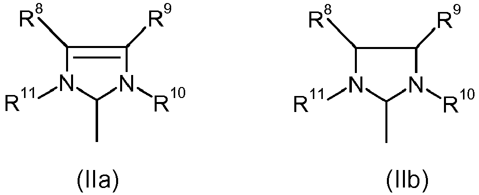 worin
R⁸, R⁹, R¹⁰, R¹¹ gleich oder verschieden sind und Wasserstoff, geradkettiges oder verzweigtes C₁-C₃₀-Alkyl, C₃-C₂₀-Cycloalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₀-Aryloxy, C₂-C₂₀-Alkoxycarbonyl, C₁-C₂₀-Alkylthio, C₆-C₂₀-Arylthio, C₁-C₂₀-Alkylsulfonyl, C₁-C₂₀-Alkylsulfonat, C₆-C₂₀-Arylsulfonat oder C₁-C₂₀-Alkylsulfinyl bedeuten.

9. Verfahren gemäß Anspruch 1, wobei der Katalysator die Struktur (III) oder (IV) besitzt, wobei Cy jeweils für Cylcohexyl steht.

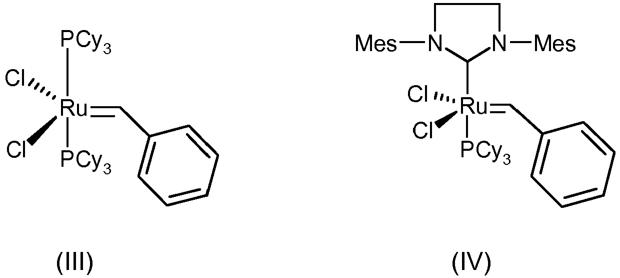

10. Verfahren gemäß Anspruch 1, wobei der Katalysator eine Verbindung der allgemeinen Formel (B) ist und L in der allgemeinen Formel (B) einen P(R⁷)₃ Rest darstellt, wobei R⁷ unabhängig voneinander C₁-C₆-Alkyl, C₃-C₈-Cycloalkyl oder Aryl bedeuten, oder aber einen gegebenenfalls substituierten Imidazolidinrest ("Im"), der bevorzugt die Struktur der in Anspruch 8 genannten allgemeinen Formeln (IIa) und (IIb) besitzt und besonders bevorzugt eine der nachfolgenden Strukturen (Va-f) aufweist, wobei Mes jeweils für einen 2,4,6-Trimethylphenyl-Rest steht,

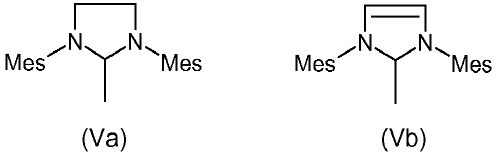

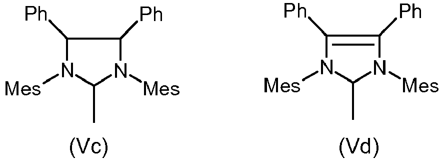

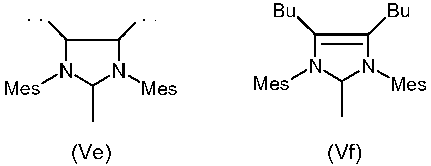

11. Verfahren gemäß Anspruch 1, wobei der Katalysator eine Verbindung der allgemeinen Formel (B) ist und X¹ und X² in der allgemeinen Formel (B) die Bedeutungen annimmt, die X¹ und X² in den Ansprüchen 5-7 besitzen.

12. Verfahren gemäß Anspruch 1, wobei Katalysatoren gemäß der allgemeinen Formel (B1) eingesetzt werden, worin
M Ruthenium bedeutet,
X¹ und X² gleichzeitig Halogen, insbesondere Chlor bedeuten,
R¹ für einen geradkettigen oder verzweigten C₁-C₁₂ Alkylrest steht,
R², R³, R⁴, R⁵ die für die allgemeine Formel (B) genannten Bedeutungen besitzen und
L die für die allgemeine Formel (B) genannten Bedeutungen besitzt.

13. Verfahren gemäß Anspruch 1, wobei Katalysatoren gemäß der allgemeinen Formel (B1) eingesetzt werden, worin
M Ruthenium darstellt,
X¹ und X² gleichzeitig Chlor bedeuten,
R¹ für einen Isopropyl-Rest steht,
R² R³, R⁴, R⁵ alle Wasserstoff bedeuten und
L einen gegebenenfalls substituierten Imidazolidin-Rest der Formeln (IIa) oder (IIb) darstellt, 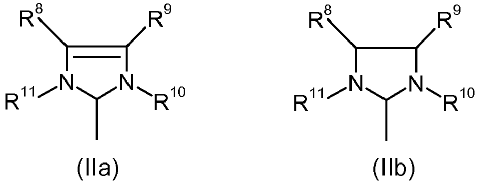
worin
R⁸ R⁹, R¹⁰, R¹¹ gleich oder verschieden sind und Wasserstoff, geradkettiges oder verzweigtes C₁-C₃₀-Alkyl, C₃-C₂₀-Cylcoalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylthio, C₆-C₂₄-Arylthio, C₁-C₂₀-Alkylsulfonyl, C₁-C₂₀-Alkylsulfonat, C₆-C₂₄-Arylsulfonat oder C₁-C₂₀-Alkylsulfinyl bedeuten.

14. Verfahren gemäß Anspruch 1, wobei als Katalysator der allgemeinen Strukturformel (B1) ein Katalysator der nachfolgenden Strukturen (VI), (VII), (VIII), (IX), (X), (XI), (XII), (XIII) oder (XVII) eingesetzt wird, wobei Mes jeweils einen 2,4,6-Trimethylphenyl-Rest bedeutet.

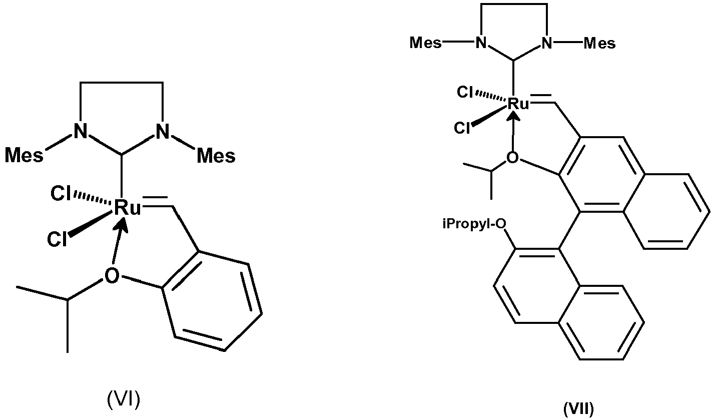

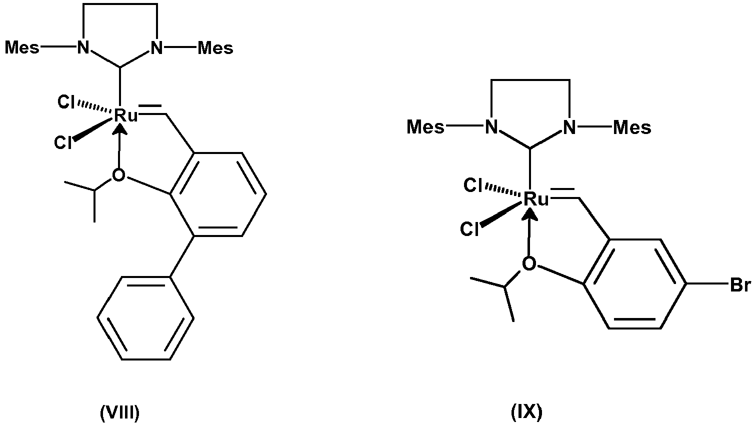

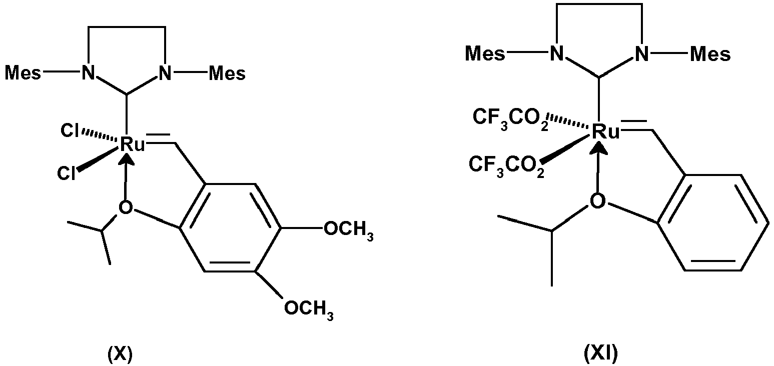

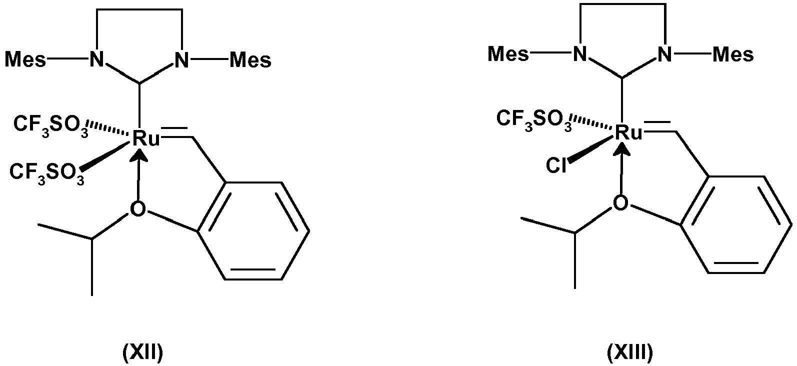

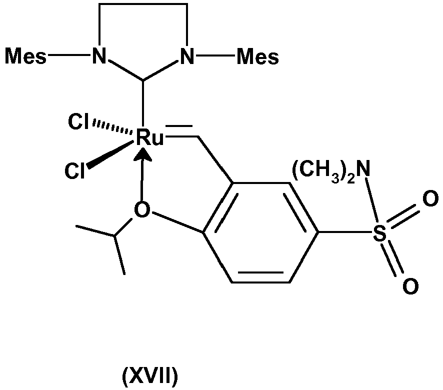

15. Verfahren gemäß Anspruch 1, wobei der Katalysator der folgenden Strukturen (XIV) oder (XV) eingesetzt wird, wobei Mes jeweils einen 2,4,6-Trimethylphenyl-Rest bedeutet.

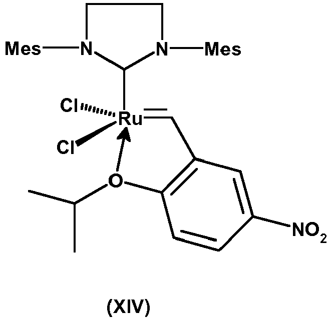

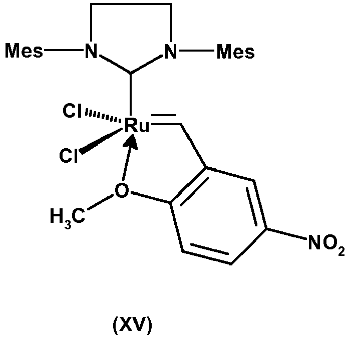

16. Verfahren gemäß Anspruch 1, wobei ein Katalysator allgemeinen Formel (B4) eingesetzt wird, 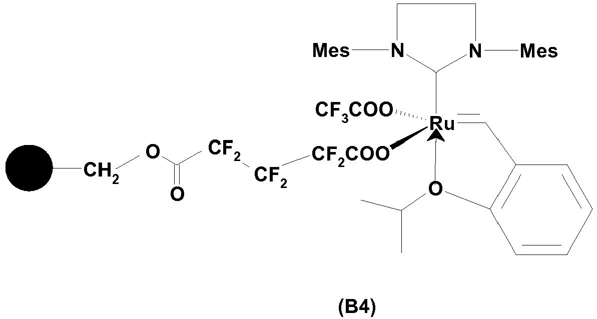 worin das Symbol
● für einen Träger steht.

17. Verfahren gemäß einem oder mehreren der Ansprüche 1-16, wobei der Metathese-Katalysator und das oder die Salze der allgemeinen Formel (I) in einem Gewichtsverhältnis Salz(e) : Metathesekatalysator von 0,01:1 bis 10000:1, bevorzugt 0,1:1 bis 1000:1, besonders bevorzugt 0,5:1 bis 500:1 eingesetzt werden.

18. Verfahren gemäß Anspruch 1, wobei das oder die Salze der allgemeinen Formel (I) in einem Lösungsmittel oder ohne Lösungsmittel zu dem Katalysator oder einer Lösung des Katalysators gegeben wird.

19. Verfahren gemäß Anspruch 1, wobei die Menge des Katalysators des Katalysator-Systems 1 bis 1.000 ppm Edelmetall, bevorzugt 2 bis 500 ppm, insbesondere 5 bis 250 ppm, bezogen auf den eingesetzten Nitrilkautschuk beträgt.

## Claims

1. Process for the metathesis of nitrile rubber using a catalyst system comprising a metathesis catalyst and one or more salts of the general formula (I)
**Kⁿ⁺ A^{z-}** (I)
where
K is lithium, sodium, potassium, rubidium, caesium, francium, beryllium, magnesium, calcium, strontium, barium, aluminium, gallium, indium, thallium, germanium, tin, lead, arsenic, antimony, bismuth, scandium, yttrium, titanium, zirconium, hafnium, vanadium, niobium, tantalum, chromium, molybdenum, tungsten, manganese, technetium, rhenium, iron, ruthenium, osmium, cobalt, rhodium, iridium, nickel, palladium, platinum, silver, gold, zinc, cadmium, mercury or any element from the groups of the rare earths, in particular cerium, praseodymium and neodymium, or the elements of the actinides or a tetraalkylammonium, tetraarylammonium, hydroxylammonium, tetraalkylphosphonium, tetraarylphosphonium, sulphonium, anilinium, pyridinium, imidazolonium, guanidinium or hydrazinium cation or a cationic ethylenediamine derivative and
A is an anion from the group of the halides, the pseudohalides, complex anions, the anions of organic acids, aliphatic or aromatic sulphonates, aliphatic or aromatic sulphates, the phosphonates, the phosphates, the thiophosphates and the xanthogenates,
where
n is 1, 2 or 3 and
z is 1, 2 or 3,
wherein the metathesis catalyst is selected from the group consisting of
(i) compounds of the general formula (A), 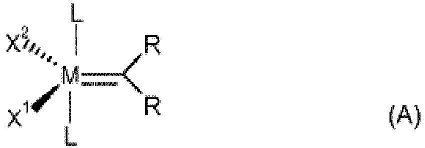 where M is osmium or ruthenium, the radicals R are identical or different and are each an alkyl, preferably C₁-C₃₀-alkyl, cycloalkyl, preferably C₃-C₂₀-cycloalkyl, alkenyl, preferably C₂-C₂₀-alkenyl, alkynyl, preferably C₂-C₂₀-alkynyl, aryl, preferably C₆-C₂₄-aryl, carboxylate, preferably C₁-C₂₀-carboxylate, alkoxy, preferably C₁-C₂₀-alkoxy, alkenyloxy, preferably C₂-C₂₀-alkenyloxy, alkynyloxy, preferably C₂-C₂₀-alkynyloxy, aryloxy, preferably C₆-C₂₄-aryloxy, alkoxycarbonyl, preferably C₂-C₂₀-alkoxycarbonyl, alkylamino, preferably C₁-C₃₀-alkylamino, alkylthio, preferably C₁-C₃₀-alkylthio, arylthio, preferably C₆-C₂₄-arylthio, alkylsulphonyl, preferably C₁-C₂₀-alkylsulphonyl, or alkylsulphinyl, preferably C₁-C₂₀-alkylsulphinyl radical, each of which can optionally be substituted by one or more alkyl, halogen, alkoxy, aryl or heteroaryl radicals, X¹ and X² are identical or different and are two ligands, preferably anionic ligands, and the moieties L are identical or different ligands, preferably uncharged electron donors,
(ii) compounds of the general formula (B) 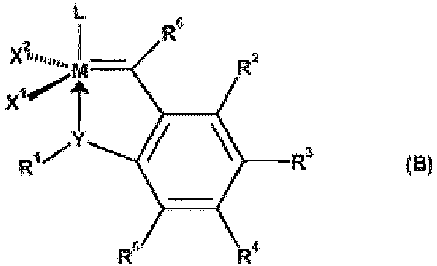 where
M is ruthenium or osmium,
Y is oxygen (O), sulphur (S), a radical N-R¹ or a radical P-R¹,
X¹ and X² are identical or different ligands,
R¹ is an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphinyl radical, each of which can optionally be substituted by one or more alkyl, halogen, alkoxy, aryl or heteroaryl radicals,
R², R³, R⁴ and R⁵ are identical or different and are each hydrogen or an organic or inorganic radical,
R⁶ is hydrogen or an alkyl, alkenyl, alkynyl or aryl radical and
L is a ligand which has the same meanings as the ligand L in formula (A),
(iii) compounds of the general formula (B1) 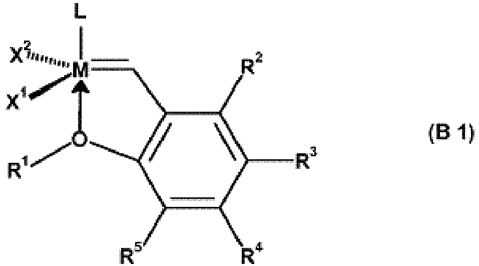 where
M, L, X¹, X², R¹, R², R³, R⁴ and R⁵ have the meanings indicated for the general formula (B), 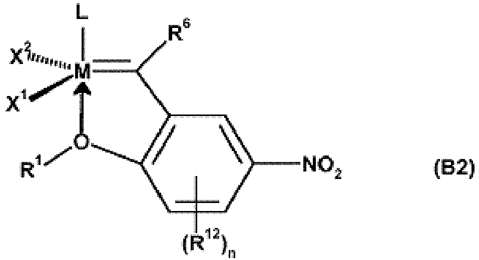
where
M, L, X¹, X², R¹ and R⁶ have the meanings indicated for the general formula (B),
the radicals R¹² are identical or different and have the meanings, with the exception of hydrogen, indicated for the radicals R², R³, R⁴ and R⁵ in the general formula (B) and
n is 0, 1, 2 or 3,
(v) compounds of the general formula (B3) 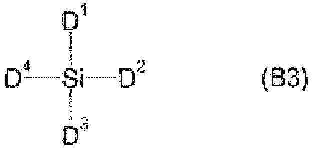 where D¹, D², D³ and D⁴ each have a structure of the general formula (XVI) shown below which is bound via the methylene group to the silicon of the formula (B3) 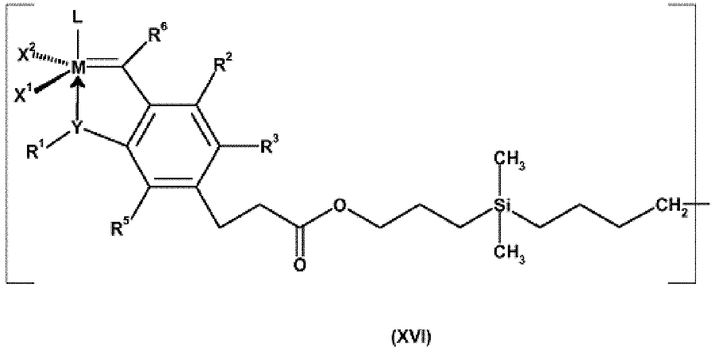 where
M, L, X¹, X², R¹, R², R³, R⁵ and R⁶ have the meanings indicated for the general formula (B),
(vi) compounds of the general formula (C) 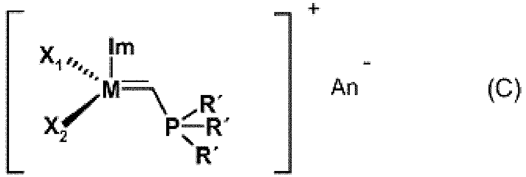 where
M is ruthenium or osmium,
X¹ and X² are identical or different and are anionic ligands, the radicals R' are identical or different and are organic radicals, Im is an optionally substituted imidazolidine radical and An is an anion,
(vii) compounds of the general formula (D) 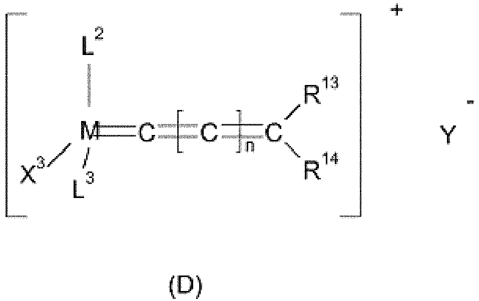 where
M is ruthenium or osmium,
R¹³ and R¹⁴ are each, independently of one another, hydrogen, C₁-C₂₀-alkyl, C₂-C₂₀-alkenyl, C₂-C₂₀-alkynyl, C₆-C₂₄-aryl, C₁-C₂₀-carboxylate, C₁-C₂₀-alkoxy, C₂-C₂₀-alkenyloxy, C₂-C₂₀-alkynyloxy, C₆-C₂₄-aryloxy, C₂-C₂₀-alkoxycarbonyl, C₁-C₂₀-alkylthio, C₁-C₂₀-alkylsulphonyl or C₁-C₂₀-alkyl-sulphinyl,
X³ is an anionic ligand,
L² is an uncharged π-bonded ligand, regardless of whether it is monocyclic or polycyclic,
L³ is a ligand from the group consisting of phosphines, sulphonated phosphines, fluorinated phosphines, functionalized phosphines having up to three aminoalkyl, ammonioalkyl, alkoxyalkyl, alkoxycarbonylalkyl, hydrocarbonylalkyl, hydroxyalkyl or ketoalkyl groups, phosphites, phosphinites, phosphonites, phosphinamines, arsines, stibines, ethers, amines, amides, imines, sulphoxides, thioethers and pyridines,
Y⁻ is a noncoordinating anion and
n is 0, 1, 2, 3, 4 or 5,
(viii) compounds of the general formula (E) 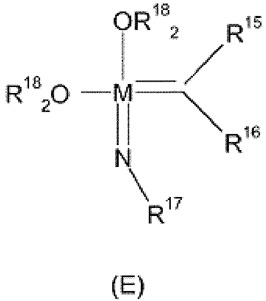 where
M² is molybdenum or tungsten,
R¹⁵ and R¹⁶ are identical or different and are each hydrogen, C₁-C₂₀-alkyl, C₂-C₂₀-alkenyl, C₂-C₂₀-alkynyl, C₆-C₂₄-aryl, C₁-C₂₀-carboxylate, C₁-C₂₀-alkoxy, C₂-C₂₀-alkenyloxy, C₂-C₂₀-alkynyloxy, C₆-C₂₄-aryloxy, C₂-C₂₀-alkoxycarbonyl, C₁-C₂₀-alkylthio, C₁-C₂₀-alkylsulphonyl or C₁-C₂₀-alkylsulphinyl,
R¹⁷ and R¹⁸ are identical or different and are each a substituted or halogen-substituted C₁-C₂₀-alkyl, C₆-C₂₄-aryl, C₆-C₃₀-aralkyl radical or a silicon-containing analogue thereof,
(ix) compounds of the formula (F) 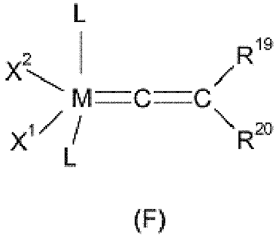 where
M is ruthenium or osmium,
X¹ and X² are identical or different and are anionic ligands which can have all the meanings of X¹ and X² in the general formulae (A) and (B),
the moieties L are identical or different ligands which can have all the meanings of L in the general formulae (A) and (B) and
R¹⁹ and R²⁰ are identical or different and are each hydrogen or substituted or unsubstituted alkyl.

2. Process according to Claim 1, wherein the cation or cations K in the general formula (I) is/are benzyldodecyldimethylammonium, didecyldimethylammonium, dimethylanilinium, N-alkyl-N,N-bis(2-hydroxyalkyl)-N-benzylammonium, N,N,N-triethylbenzenemethanaminium, O-methyluronium, S-methylthiuronium, pyridinium, tetrabutylammonium, tetramethyluronium, tetraacetylammonium, tetrabutylphosphonium, tetraphenylphosphonium, diphenylguanidinium, di-o-tolylguanidinium, butyldiphenylsulphonium or tributylsulphonium.

3. Process according to Claim 1, wherein the anion or anions in the general formula (I) is/are fluoride, chloride, bromide, iodide, triiodide, azide, cyanide, thiocyanide, thiocyanate, interhalides, sulphite, sulphate, dithionite, thiosulphate, carbonate, hydrogencarbonate, perthiocarbonate, nitrite, nitrate, perchlorate, tetrafluoroborate, tetrafluoroaluminate, hexafluorophosphate, hexafluoroarsenate, hexafluoroantimonate, hexachloroantimonate, anions of organic carboxylic acids which have from 1 to 20 carbon atoms and are saturated or monounsaturated or polyunsaturated, in particular formate, acetate, propionate, butyrate, oleate, palmitate, stearate, versatate, acrylate, methacrylate, crotonate, benzoate, naphthalenecarbonate, oxalate, salicylate, terephthalate, fumarate, maleate, itaconate and abietate, anthraquinone-2-sulphonate, benzenesulphonate, benzene-1,3-disulphonate, decane-1-sulphonate, hexadecane-1-sulphonate, hydroquinonemonosulphonate, methyl-4-toluenesulphonate, naphthalene-1-sulphonate, naphthalene-1,5-disulphonate, tosylate, mesylate, dodecylsulphate, alkylbenzenesulphates, vinylphosphonate, ethylphosphonate, butylphosphonate, cetylphosphonate, dibutylphosphate, dioctylphosphate, dibutyldithiophosphate, dioctylthiophosphate, ethylxanthogenate, butylxanthogenate, phenylxanthogenate, benzylxanthogenate, dimethyldithiocarbamate, diethyldithiocarbamate, dibutyldithiocarbamate, dibenzyldithiocarbamate, tetrakis[pentafluorophenyl]borate, pentakis[pentafluorophenyl]phosphate, tetrakis[3,5-trifluoromethylphenyl]borate, pentakis[3,5-trifluoromethylphenyl]phosphate or pentakis[pentafluorophenyl]cyclohexadienyl anion.

4. Process according to Claim 1, wherein the catalyst is a compound of the general formula (A) and X¹ and X² in the general formula (A) are identical or different and are each hydrogen, halogen, pseudohalogen, straight-chain or branched C₁-C₃₀-alkyl, C₆-C₂₄-aryl, C₁-C₂₀-alkoxy, C₆-C₂₄-aryloxy, C₃-C₂₀-alkyldiketonate, C₆-C₂₄-aryldiketonate, C₁-C₂₀-carboxylate, C₁-C₂₀-alkylsulphonate, C₆-C₂₄-arylsulphonate, C₁-C₂₀-alkylthiol, C₆-C₂₄-arylthiol, C₁-C₂₀-alkylsulphonyl or C₁-C₂₀-alkylsulphinyl radicals.

5. Process according to Claim 1, wherein the catalyst is a compound of the general formula (A) and X and X¹ in the general formula (A) are identical or different and are each halogen, in particular fluorine, chlorine, bromine or iodine, benzoate, C₁-C₅-carboxylate, C₁-C₅-alkyl, phenoxy, C₁-C₅-alkoxy, C₁-C₅-alkylthiol, C₆-C₂₄-arylthiol, C₆-C₂₄-aryl or C₁-C₅-alkyl-sulphonate.

6. Process according to Claim 1, wherein the catalyst is a compound of the general formula (A) and X and X¹ in the general formula (A) are identical and are each halogen, in particular chlorine, CF₃COO, CH₃COO, CFH₂COO, (CH₃)₃CO, (CF₃)₂(CH₃)CO, (CF₃)(CH₃)₂CO, PhO (phenoxy), MeO (methoxy), EtO (ethoxy), tosylate (p-CH₃-C₆H₄-SO₃), mesylate (2,4,6-trimethylphenyl) or CF₃SO₃ (trifluoromethanesulphonate).

7. Process according to Claim 1, wherein the catalyst is a compound of the general formula (A) and the two ligands L in the general formula (A) are, independently of one another, a phosphine, sulphonated phosphine, phosphate, phosphinite, phosphonite, arsine, stibine, ether, amine, amide, sulphoxide, carboxyl, nitrosyl, pyridine, thioether or imidazolidine ("Im") ligand.

8. Process according to Claim 7, wherein the catalyst is a compound of the general formula (A) and the imidazolidine radical (Im) has a structure of the general formula (IIa) or (IIb), 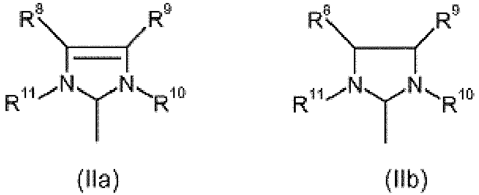 where
R⁸, R⁹, R¹⁰, R¹¹ are identical or different and are each hydrogen, straight-chain or branched C₁-C₃₀-alkyl, C₃-C₂₀-cycloalkyl, C₂-C₂₀-alkenyl, C₂-C₂₀-alkynyl, C₆-C₂₄-aryl, C₁-C₂₀-carboxylate, C₁-C₂₀-alkoxy, C₂-C₂₀-alkenyloxy, C₂-C₂₀-alkynyloxy, C₆-C₂₀-aryloxy, C₂-C₂₀-alkoxycarbonyl, C₁-C₂₀-alkylthio, C₆-C₂₀-arylthio, C₁-C₂₀-alkylsulphonyl, C₁-C₂₀-alkylsulphonate, C₆-C₂₀-arylsulphonate or C₁-C₂₀-alkylsulphinyl.

9. Process according to Claim 1, wherein the catalyst has the structure (III) or (IV), where Cy is in each case cyclohexyl.

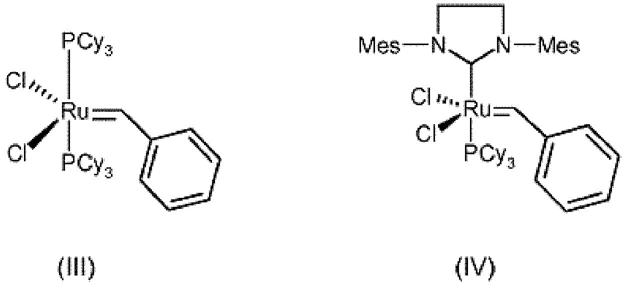

10. Process according to Claim 1, wherein the catalyst is a compound of the general formula (B) and L in the general formula (B) is a P(R⁷)₃ radical, where the radicals R⁷ are each, independently of one another, C₁-C₆-alkyl, C₃-C₈-cycloalkyl or aryl or else an optionally substituted imidazolidine radical ("Im") which preferably has the structure of the general formulae (IIa) and (IIb) indicated in Claim 8 and particularly preferably has one of the following structures (Va-f), where Mes is in each case a 2,4,6-trimethylphenyl radical.

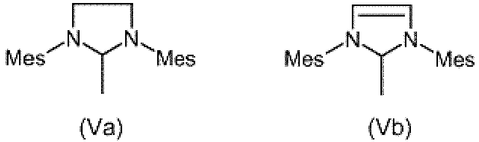

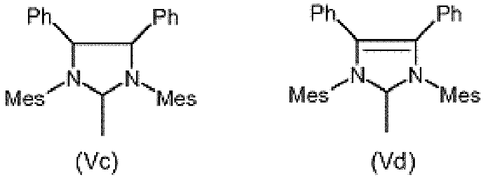

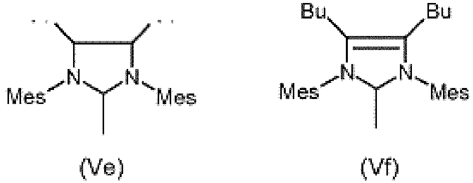

11. Process according to Claim 1, wherein the catalyst is a compound of the general formula (B) and X¹ and X² in the general formula (B) have the meanings which X¹ and X² have in Claims 5-7.

12. Process according to Claim 1, wherein catalysts of the general formula (B1) in which
M is ruthenium,
X¹ and X² are simultaneously halogen, in particular chlorine,
R¹ is a straight-chain or branched C₁-C₁₂-alkyl radical,
R², R³, R⁴, R⁵ have the meanings indicated for the general formula (B) and
L has the meanings indicated for the general formula (B)
are used.

13. Process according to Claim 1, wherein catalysts of the general formula (B1) in which
M is ruthenium,
X¹ and X² are simultaneously chlorine,
R¹ is an isopropyl radical,
R², R³, R⁴, R⁵ are all hydrogen and
L is an optionally substituted imidazolidine radical of the formula (IIa) or (IIb), 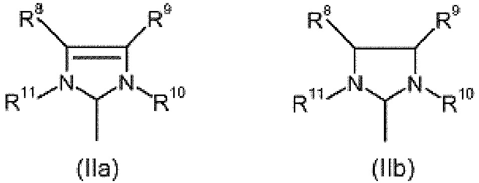
where
R⁸, R⁹, R¹⁰, R¹¹ are identical or different and are each hydrogen, straight-chain or branched C₁-C₁₀-alkyl, C₃-C₂₀-cycloalkyl, C₂-C₂₀-alkenyl, C₂-C₂₀-alkynyl, C₆-C₂₄-aryl, C₁-C₂₀-carboxylate, C₁-C₂₀-alkoxy, C₂-C₂₀-alkenyloxy, C₂-C₂₀-alkynyloxy, C₆-C₂₄-aryloxy, C₂-C₂₀-alkoxycarbonyl, C₁-C₂₀-alkylthio, C₆-C₂₄-arylthio, C₁-C₂₀-alkylsulphonyl, C₁-C₂₀-alkylsulphonate, C₆-C₂₄-arylsulphonate or C₁-C₂₀-alkylsulphinyl,
are used.

14. Process according to Claim 1, wherein a catalyst having one of the structures (VI), (VII), (VIII), (IX), (X), (XI), (XII), (XIII) or (XVII) below, where Mes is in each case a 2,4,6-trimethylphenyl radical, is used as catalyst of the general structural formula (B1).

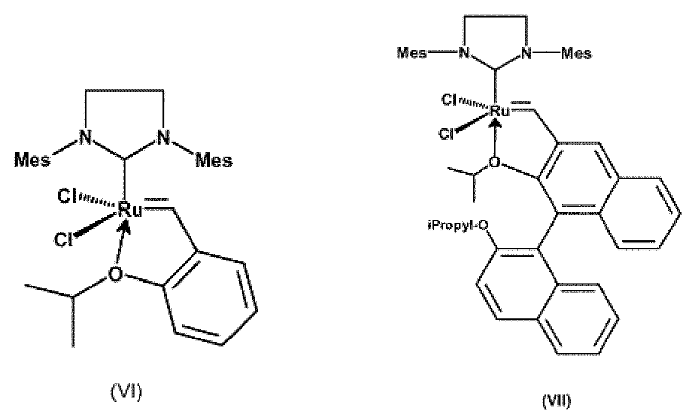

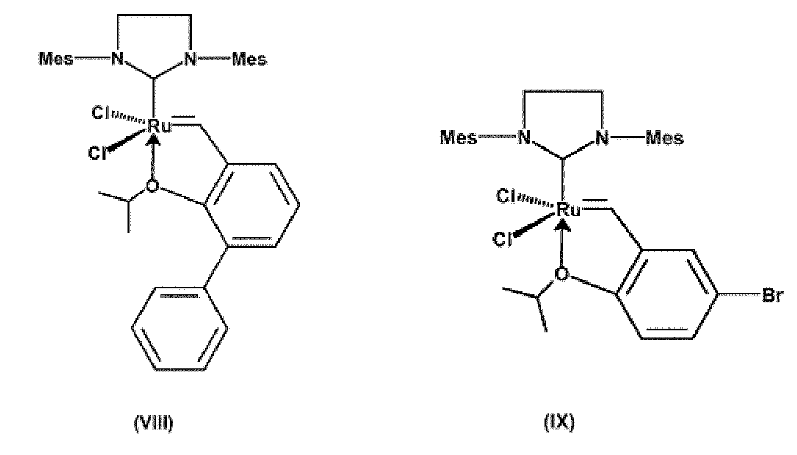

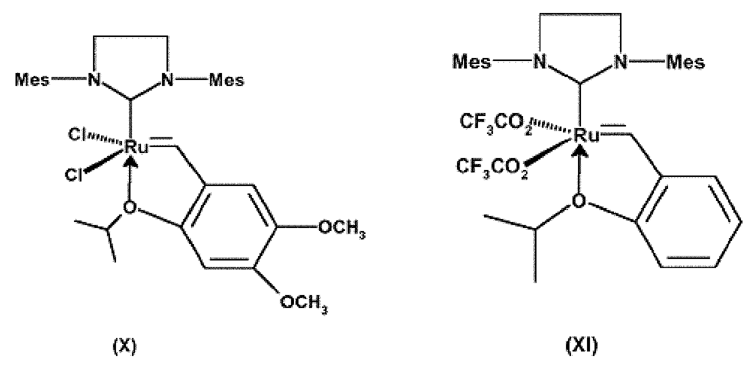

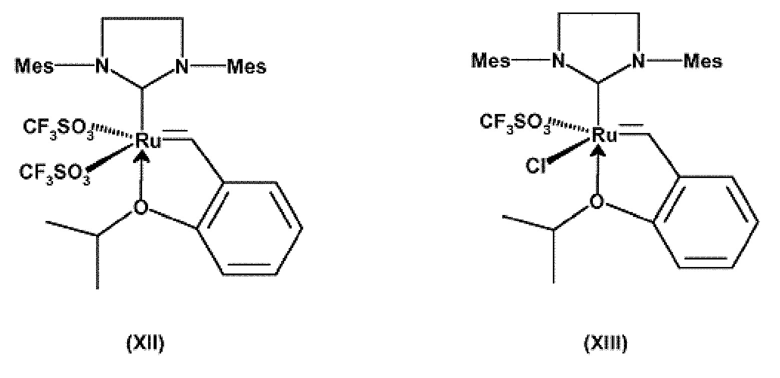

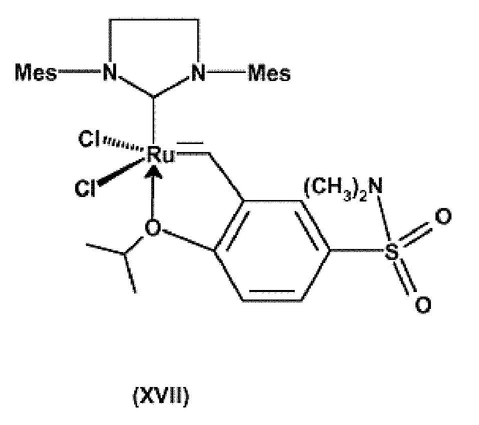

15. Process according to Claim 1, wherein the catalyst of one of the structures (XIV) or (XV) below, where Mes is in each case a 2,4,6-trimethylphenyl radical, is used.

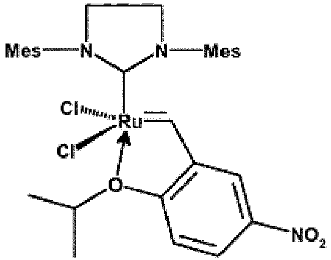

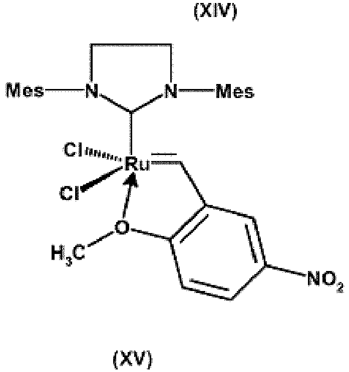

16. Process according to Claim 1, wherein a catalyst of the general formula (B4), 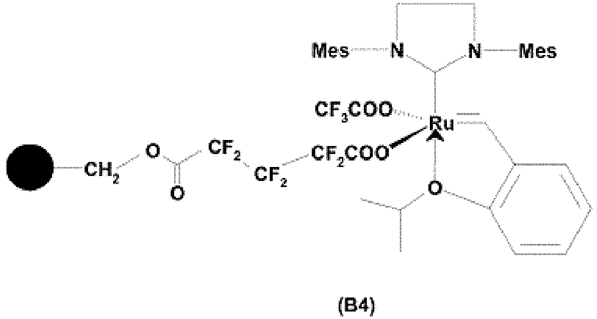 where the symbol
●
is a support, is used.

17. Process according to one or more of Claims 1-16, wherein the metathesis catalyst and the salt or salts of the general formula (I) are used in a weight ratio of salt(s):metathesis catalyst of from 0.01:1 to 10 000:1, preferably from 0.1:1 to 1000:1, particularly preferably from 0.5:1 to 500:1.

18. Process according to Claim 1, wherein the salt or salts of the general formula (I) is added in a solvent or without solvent to the catalyst or a solution of the catalyst.

19. Process according to Claim 1, wherein the amount of the catalyst of the catalyst system is from 1 to 1000 ppm of noble metal, preferably from 2 to 500 ppm, in particular from 5 to 250 ppm, based on the nitrile rubber used.

## Revendications

1. Procédé pour la métathèse de caoutchouc de nitrile avec utilisation d'un système catalytique comprenant un catalyseur de métathèse et un ou plusieurs sels de formule générale (I)
Kⁿ⁺A^{z-} (I)
dans laquelle
K représente lithium, sodium, potassium, rubidium, césium, francium, béryllium, magnésium, calcium, strontium, baryum, aluminium, gallium, indium, thallium, germanium, étain, plomb, arsenic, antimoine, bismuth, scandium, yttrium, titane, zirconium, hafnium, vanadium, niobium, tantale, chrome, molybdène, tungstène, manganèse, technétium, rhénium, fer, ruthénium, osmium, cobalt, rhodium, iridium, nickel, palladium, platine, argent, or, zinc, cadmium, mercure, ainsi que tous les éléments des groupes des terres rares, en particulier le cérium, le praséodyme et le néodyme, ou les éléments des actinides ou les cations tétraalkylammonium, tétraarylammonium, hydroxylammonium, tétraalkylphosphonium, tétraarylphosphonium, sulfonium, anilinium, pyridinium, imidazolonium, guanidinium et hydrazinium ainsi que les dérivés cationiques de l'éthylènediamine et
A un anion du groupe des halogénures, des pseudohalogénures, des anions complexes, des anions d'acides organiques, des sulfonates aliphatiques ou aromatiques, les sulfates aliphatiques ou aromatiques, des phosphonates, des phosphates, des thiophosphates et des xanthogénates,
n valant 1, 2 ou 3 et
z valant 1, 2 ou 3
le catalyseur de métathèse étant choisi dans le groupe constitué par
(i) les composés de formule générale (A) 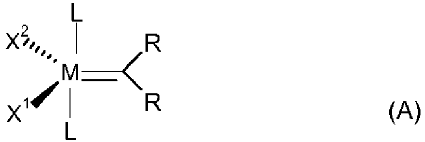 dans laquelle
M signifie osmium ou ruthénium,
R sont identiques ou différents et représentent un radical alkyle, de préférence C₁-C₃₀-alkyle, cycloalkyle, de préférence C₃-C₂₀-cycloalkyle, alcényle, de préférence C₂-C₂₀-alcényle, alcynyle, de préférence C₂-C₂₀-alcynyle, aryle, de préférence C₆-C₂₄-aryle, carboxylate, de préférence C₁-C₂₀-carboxylate, alcoxy, de préférence C₁-C₂₀-alcoxy, alcényloxy, de préférence C₂-C₂₀-alcényloxy, alcynyloxy, de préférence C₂-C₂₀-alcynyloxy, aryloxy, de préférence C₆-C₂₄-aryloxy, alcoxycarbonyle, de préférence C₂-C₂₀-alcoxycarbonyle, alkylamino, de préférence C₁-C₃₀-alkylamino, alkylthio, de préférence C₁-C₃₀-alkylthio, arylthio, de préférence C₆-C₂₄-arylthio, alkylsulfonyle, de préférence C₁-C₂₀-alkylsulfonyle, ou alkylsulfinyle, de préférence C₁-C₂₀-alkylsulfinyle, qui peuvent tous être à chaque fois éventuellement substitués par un ou plusieurs radicaux alkyle, halogène, alcoxy, aryle ou hétéroaryle,
X¹ et X² sont identiques ou différents et représentent deux ligands, de préférence des ligands anioniques, et
L représentent des ligands identiques ou différents, de préférence des donneurs d'électrons neutres,
(ii) les composés de formule générale (B) 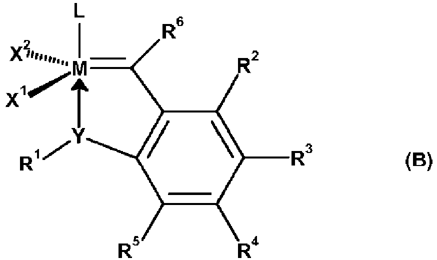 dans laquelle
M signifie ruthénium ou osmium,
Y signifie oxygène (O), soufre (S), un radical N-R¹ ou un radical P-R¹,
X¹ et X² sont des ligands identiques ou différents,
R¹ représente un radical alkyle, cycloalkyle, alcényle, alcynyle, aryle, alcoxy, alcényloxy, alcynyloxy, aryloxy, alcoxycarbonyle, alkylamino, alkylthio, arylthio, alkylsulfonyle ou alkylsulfinyle, qui peuvent tous à chaque fois être éventuellement substitués par un ou plusieurs radicaux alkyle, halogène, alcoxy, aryle ou hétéroaryle,
R², R³, R⁴ et R⁵ sont identiques ou différents et représentent hydrogène, des radicaux organiques ou inorganiques,
R⁶ signifie hydrogène, un radical alkyle, alcényle, alcynyle ou aryle et
L représente un ligand qui présente les mêmes significations que le ligand L dans la formule (A),
(iii) les composés de formule générale (B1) 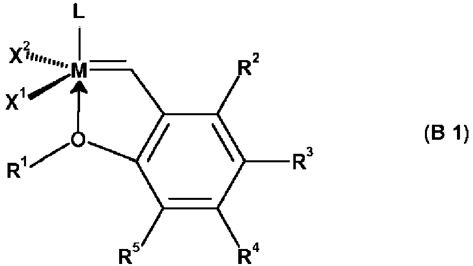 dans laquelle
M, L, X¹, X², R¹, R², R³, R⁴ et R⁵ présentent les significations mentionnées pour la formule générale (B),
(iv) les composés de formule générale (B2) 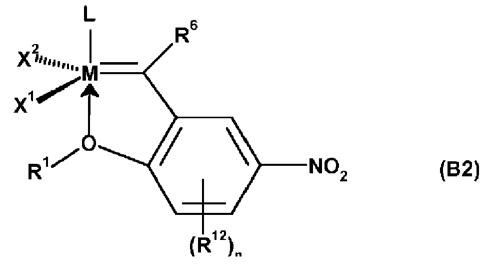 dans laquelle
M, L, X¹, X², R¹ et R⁶ présentent les significations mentionnées pour la formule générale (B),
R¹² sont identiques ou différents et présentent les significations mentionnées pour les radicaux R², R³, R⁴ et R⁵ dans la formule générale (B), à l'exception d'hydrogène et
n vaut 0, 1, 2 ou 3,
(v) les composés de formule générale (B3) 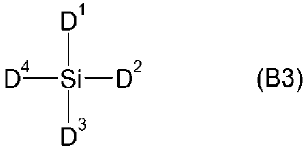 dans laquelle D¹, D², D³ et D⁴ présentent à chaque fois une structure de la formule générale (XVI) représentée ci-après, qui est liée via le groupe méthylène au silicium de formule (B3) et 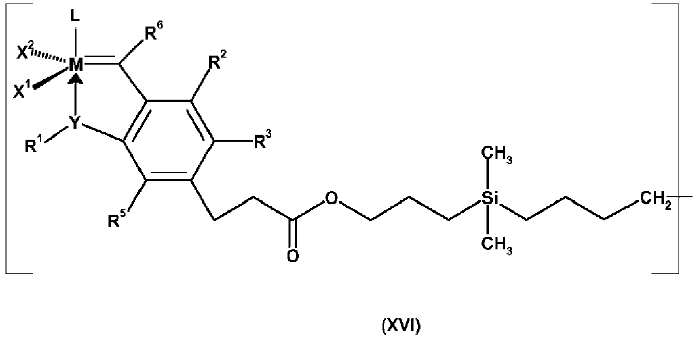 dans laquelle
M, L, X¹, X², R¹, R², R³, R⁵ et R⁶ présentent les significations mentionnées pour la formule générale (B),
(vi) les composés de formule générale (C) 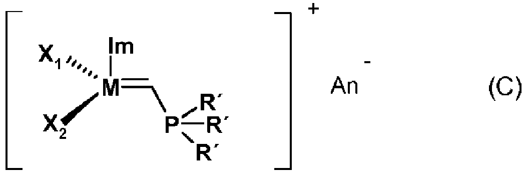 dans laquelle
M signifie ruthénium ou osmium,
X¹ et X² sont identiques ou différents et représentent des ligands anioniques,
R' sont identiques ou différents et représentent des radicaux organiques,
Im représente un radical imidazolidine le cas échéant substitué et
An représente un anion,
(vii) les composés de formule générale (D) 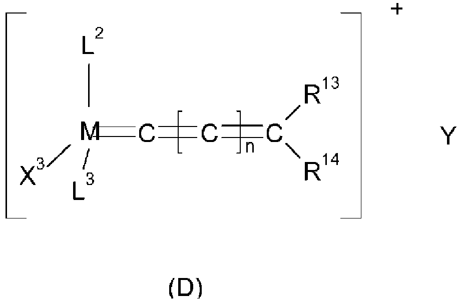 dans laquelle
M signifie ruthénium ou osmium,
R¹³ et R¹⁴ signifient, indépendamment l'un de l'autre, hydrogène, C₁-C₂₀-alkyle, C₂-C₂₀-alcényle, C₂-C₂₀-alcynyle, C₆-C₂₄-aryle, C₁-C₂₀-carboxylate, C₁-C₂₀-alcoxy, C₂-C₂₀-alcényloxy, C₂-C₂₀-alcynyloxy, C₆-C₂₄-aryloxy, C₂-C₂₀-alcoxycarbonyle, C₁-C₂₀-alkylthio, C₁-C₂₀-alkylsulfonyle ou C₁-C₂₀-alkylsulfinyle,
X³ représente un ligand anionique,
L² représente un ligand neutre lié par π, indépendamment du fait qu'il soit monocyclique ou polycyclique,
L³ représente un ligand du groupe des phosphines, des phosphines sulfonées, des phosphines fluorées, des phosphines fonctionnalisées avec jusqu'à trois groupes aminoalkyle, ammoniumalkyle, alcoxyalkyle, alcoxycarbonylalkyle, hydrocarbonylalkyle, hydroxyalkyle ou cétoalkyle, des phosphites, des phosphinites, des phosphonites, des phosphinamines, des arsines, des stibines, des éthers, des amines, des amides, des imines, des sulfoxydes, des thioéthers et des pyridines,
Y représente un anion non coordinant et
n vaut 0, 1, 2, 3, 4 ou 5,
(viii) les composés de formule générale (E) 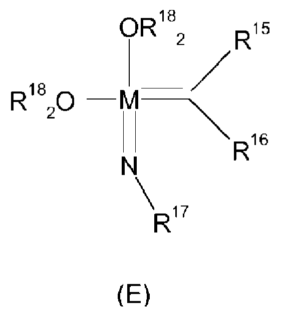 dans laquelle
M² représente molybdène ou tungstène,
R¹⁵ et R¹⁶ sont identiques ou différents et signifient hydrogène, C₁-C₂₀-alkyle, C₂-C₂₀-alcényle, C₂-C₂₀-alcynyle, C₆-C₂₄-aryle, C₁-C₂₀-carboxylate, C₁-C₂₀-alcoxy, C₂-C₂₀-alcényloxy, C₂-C₂₀-alcynyloxy, C₆-C₂₄-aryloxy, C₂-C₂₀-alcoxycarbonyle, C₁-C₂₀-alkylthio, C₁-C₂₀-alkylsulfonyle ou C₁-C₂₀-alkylsulfinyle,
R¹⁷ et R¹⁸ sont identiques ou différents et représentent un radical C₁-C₂₀-alkyle, C₆-C₂₄-aryle, C₆-C₃₀-aralkyle substitué ou substitué par halogène ou des analogues contenant silicium de ceux-ci,
(ix) les composés de formule (F) 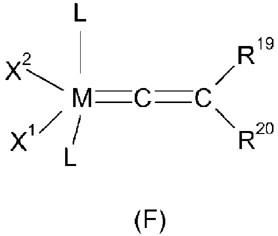 dans laquelle
M signifie ruthénium ou osmium,
X¹ et X² sont identiques ou différents et représentent des ligands anioniques, qui peuvent prendre toutes les significations de X¹ et X² dans les formules générales (A) et (B),
L représente des ligands identiques ou différents, qui peuvent prendre toutes les significations de L dans les formules générales (A) et (B) et
R¹⁹ et R²⁰ sont identiques ou différents et représentent hydrogène ou alkyle substitué ou non substitué.

2. Procédé selon la revendication 1, le ou les cations K dans la formule générale (I) représentant benzyldodécyldiméthylammonium, didécyldiméthylammonium, diméthylanilinium, N-alkyl-N,N-bis-(2-hydroxyalkyl)-N-benzylammonium, N,N,N-triéthylbenzèneméthanaminium, O-méthyluronium, S-méthylthiuronium, pyridinium, tétrabutylammonium, tétraméthyluronium, tétracétylammonium, tétrabutylphosphonium, tétraphénylphosphonium, diphénylguanidinium, di-O-toluylguanidinium, butyldiphénylsulfonium ou tributylsulfonium.

3. Procédé selon la revendication 1, le ou les anions dans la formule générale (I) signifiant fluorure, chlorure, bromure, iodure, triiodure, azoture, cyanure, thiocyanure, thiocyanate, inter-halogénure, sulfite, sulfate, dithionite, thiosulfate, carbonate, hydrogénocarbonate, perthiocarbonate, nitrite, nitrate, perchlorate, tétrafluoroborate, tétrafluoroaluminate, hexafluorophosphate, hexafluoroarséniate, hexafluoroantimonate, hexachloroantimonate, des anions d'acides carboxyliques organiques comprenant 1 à 20 atomes de carbone, qui sont saturés ou monoinsaturés ou polyinsaturés, en particulier formiate, acétate, propionate, butyrate, oléate, palmitate, stéarate, versatate, acrylate, méthacrylate, crotonate, benzoate, naphtalènecarbonate, oxalate, salicylate, téréphtalate, fumarate, maléinate, itaconate et abiétate, anthraquinone-2-sulfonate, benzènesulfonate, benzène-1,3-disulfonate, décane-1-sulfonate, hexadécane-1-sulfonate, hydroquinonemonosulfonate, méthyl-4-toluènesulfonate, naphtalène-1-sulfonate, naphtalène-1,5-disulfonate, tosylate, mésylate, dodécylsulfate, alkylbenzènesulfate, vinylphosphonate, éthylphosphonate, butylphosphonate, cétylphosphonate, dibutylphosphate, dioctylphosphate, dibutyldithiophosphate, dioctylthiophosphate, éthylxanthogénate, butylxanthogénate, phénylxanthogénate, benzylxanthogénate, diméthyldithiocarbamate, diéthyldithiocarbamate, dibutyldithiocarbamate, dibenzyldithiocarbamate, tétrakis[pentafluorophényl]borate, pentakis-[pentafluorophényl]phosphate, tétrakis[3,5-trifluorométhylphényl]borate, pentakis[3,5-trifluorométhylphényl]phosphate ou un anion pentakis[pentafluorophényl]cyclohexadiényle.

4. Procédé selon la revendication 1, le catalyseur étant un composé de formule générale (A) et X¹ et X² dans la formule générale (A) étant identiques ou différents et signifiant hydrogène, halogène, pseudohalogène, un radical C₁-C₃₀-alkyle linéaire ou ramifié, C₆-C₂₄-aryle, C₁-C₂₀-alcoxy, C₆-C₂₄-aryloxy, C₃-C₂₀-alkyldicétonate, C₆-C₂₄-aryldicétonate, C₁-C₂₀-carboxylate, C₁-C₂₀-alkylsulfonate, C₆-C₂₄-arylsulfonate, C₁-C₂₀-alkylthiol, C₆-C₂₄-arylthiol, C₁-C₂₀-alkylsulfonyle ou C₁-C₂₀-alkylsulfinyle.

5. Procédé selon la revendication 1, le catalyseur étant un composé de formule générale (A) et X et X¹ dans la formule générale (A) étant identiques ou différents et signifiant halogène, en particulier fluor, chlore, brome ou iode, benzoate, C₁-C₅-carboxylate, C₁-C₅-alkyle, phénoxy, C₁-C₅-alcoxy, C₁-C₅-alkylthiol C₆-C₂₄-arylthiol, C₆-C₂₄-aryle ou C₁-C₅-alkylsulfonate.

6. Procédé selon la revendication 1, le catalyseur étant un composé de formule générale (A) et X et X¹ dans la formule générale (A) étant identiques et signifiant halogène, en particulier chlore, CF₃COO, CH₃COO, CFH₂COO, (CH₃)₃CO, (CF₃)₂(CH₃)CO, (CF₃)(CH₃)₂CO, PhO (phénoxy), MeO (méthoxy), EtO (éthoxy), tosylate (p-CH₃-C₆H₄-SO₃), mésylate (2,4,6-triméthylphényle) ou CF₃SO₃ (trifluorométhanesulfonate).

7. Procédé selon la revendication 1, le catalyseur étant un composé de formule générale (A) et les deux ligands L dans la formule générale (A) signifiant,
indépendamment l'un de l'autre, un ligand phosphine, phosphine sulfonée, phosphate, phosphinite, phosphonite, arsine, stibine, éther, amine, amide, sulfoxyde, carboxyle, nitrosyle, pyridine, thioéther ou imidazolidine ("Im").

8. Procédé selon la revendication 7, le catalyseur étant un composé de formule générale (A) et le radical imidazolidine (Im) présentant une structure des formules générales (IIa) ou (IIb), 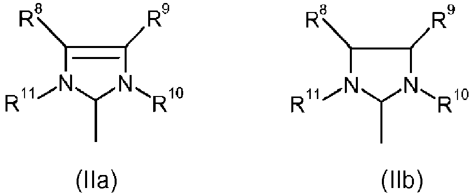 dans lesquelles
R⁸, R⁹, R¹⁰, R¹¹ sont identiques ou différents et signifient hydrogène, C₁-C₃₀-alkyle linéaire ou ramifié, C₃-C₂₀-cycloalkyle, C₂-C₂₀-alcényle, C₂-C₂₀-alcynyle, C₆-C₂₄-aryle, C₁-C₂₀-carboxylate, C₁-C₂₀-alcoxy, C₂-C₂₀-alcényloxy, C₂-C₂₀-alcynyloxy, C₆-C₂₀-aryloxy, C₂-C₂0-alcoxycarbonyle, C₁-C₂₀-alkylthio, C₆-C₂₀-arylthio, C₁-C₂₀-alkylsulfonyle, C₁-C₂₀-alkylsulfonate, C₆-C₂₀-arylsulfonate ou C₁-C₂₀-alkylsulfinyle.

9. Procédé selon la revendication 1, le catalyseur présentant la structure (III) ou (IV), Cy représentant à chaque fois cyclohexyle.

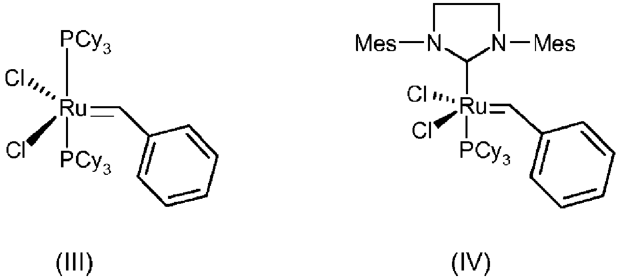

10. Procédé selon la revendication 1, le catalyseur étant un composé de formule générale (B) et L dans la formule générale (B) représentant un radical P(R⁷)₃, les radicaux R⁷ représentant, indépendamment les uns des autres, C₁-C₆-alkyle, C₃-C₈-cycloalkyle ou aryle, ou encore un radical imidazolidine ("Im") le cas échéant substitué, qui présente de préférence la structure des formules générales (IIa) et (IIb) mentionnées dans la revendication 8 et qui présente de manière particulièrement préférée une des structures suivantes (Va-f), Mes représentant à chaque fois le radical 2,4,6-triméthylphényle,

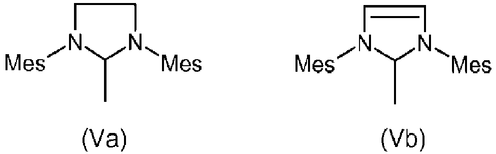

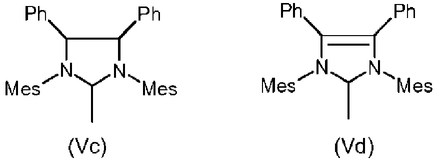

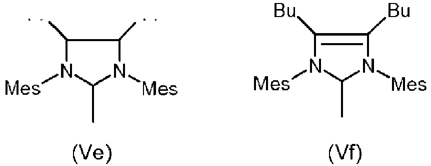

11. Procédé selon la revendication 1, le catalyseur étant un composé de formule générale (B) et X¹ et X² présentant, dans la formule générale (B), les significations que présentent X¹ et X² dans les revendications 5-7.

12. Procédé selon la revendication 1, des catalyseurs selon la formule générale (B1) étant utilisés,
M signifiant ruthénium,
X¹ et X² signifiant simultanément halogène, en particulier chlore,
R¹ représentant un radical C₁-C₁₂-alkyle linéaire ou ramifié,
R², R³, R⁴, R⁵ présentant les significations mentionnées pour la formule générale (B) et
L présentant les significations mentionnées pour la formule générale (B).

13. Procédé selon la revendication 1, des catalyseurs selon la formule générale (B1) étant utilisés,
M représentant ruthénium,
X¹ et X² signifiant simultanément chlore,
R¹ représentant un radical isopropyle,
R², R³, R⁴, R⁵ signifiant tous hydrogène et
L représentant un radical imidazolidine le cas échéant substitué des formules (IIa) ou (IIb), 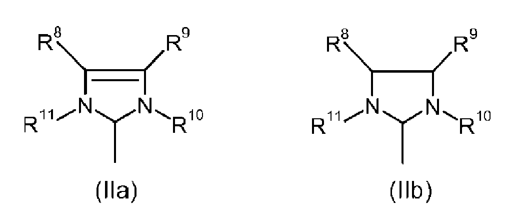
dans lesquelles
R⁸, R⁹, R¹⁰, R¹¹ sont identiques ou différents et signifient hydrogène, C₁-C₃₀-alkyle linéaire ou ramifié, C₃-C₂₀-cycloalkyle, C₂-C₂₀-alcényle, C₂-C₂₀-alcynyle, C₆-C₂₄-aryle, C₁-C₂₀-carboxylate, C₁-C₂₀-alcoxy, C₂-C₂₀-alcényloxy, C₂-C₂₀-alcynyloxy, C₆-C₂₄-aryloxy, C₂-C₂₀-alcoxycarbonyle, C₁-C₂₀-alkylthio, C₆-C₂₄-arylthio, C₁-C₂₀-alkylsulfonyle, C₁-C₂₀-alkylsulfonate, C₆-C₂₄-arylsulfonate ou C₁-C₂₀-alkylsulfinyle.

14. Procédé selon la revendication 1, un catalyseur des structures suivantes (VI), (VII), (VIII), (IX), (X), (XI), (XII), (XIII) ou (XVII) étant utilisé comme catalyseur de formule de structure générale (B1), Mes signifiant à chaque fois un radical 2,4,6-triméthylphényle.

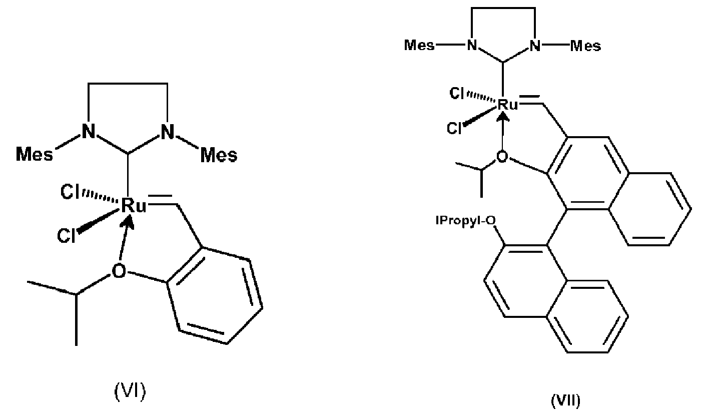

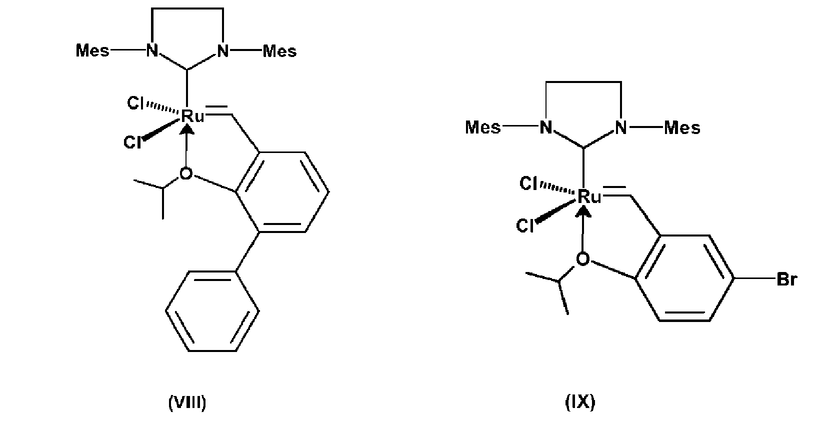

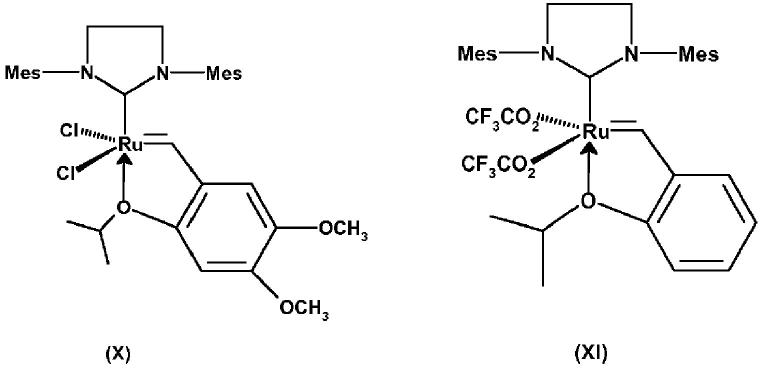

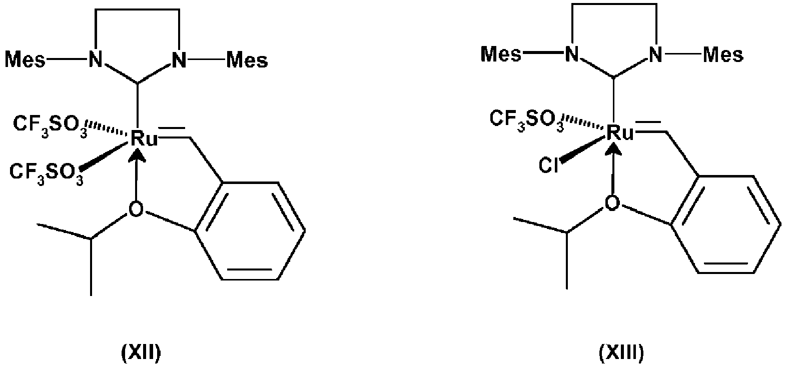

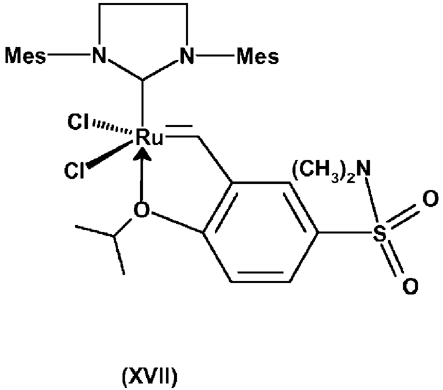

15. Procédé selon la revendication 1, le catalyseur des structures suivantes (XIV) ou (XV) étant utilisé, Mes signifiant à chaque fois un radical 2,4,6-triméthylphényle.

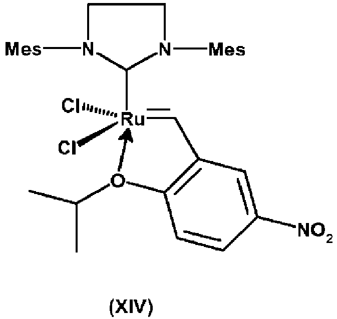

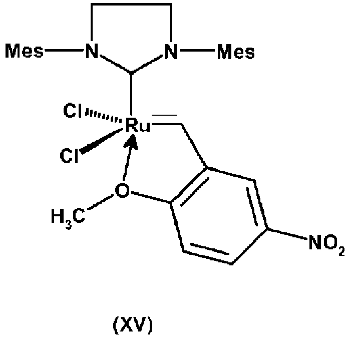

16. Procédé selon la revendication 1, un catalyseur de formule générale (B4) étant utilisé, 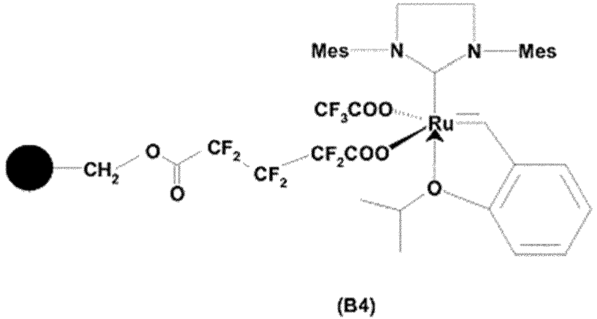 dans laquelle le symbole
●
représente un support.

17. Procédé selon l'une ou plusieurs des revendications 1-16, le catalyseur de métathèse et le ou les sels de formule générale (I) étant utilisés dans un rapport pondéral de sel(s):catalyseur de métathèse de 0,01:1 à 10.000:1, de préférence de 0,1:1 à 1000:1, de manière particulièrement préférée de 0,5:1 à 500:1.

18. Procédé selon la revendication 1, le ou les sels de formule générale (I) étant ajouté(s), dans un solvant ou sans solvant, au catalyseur ou à une solution du catalyseur.

19. Procédé selon la revendication 1, la quantité de catalyseur du système catalytique étant de 1 à 1000 ppm de métal noble, de préférence 2 à 500 ppm, en particulier 5 à 250 ppm, par rapport au caoutchouc de nitrile utilisé.
